(19) Europäisches Patentamt / European Patent Office / Office européen des brevets

(11) **EP 2 110 639 A1**

(12) **EUROPEAN PATENT APPLICATION**
published in accordance with Art. 153(4) EPC

(43) Date of publication:
**21.10.2009 Bulletin 2009/43**

(51) Int Cl.:
*G01B 7/00* *(2006.01)*    *G01B 7/30* *(2006.01)*

(21) Application number: **08711031.8**

(22) Date of filing: **08.02.2008**

(86) International application number:
**PCT/JP2008/052152**

(87) International publication number:
**WO 2008/096856 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.02.2007   JP 2007030803**
**26.04.2007   JP 2007117669**
**19.11.2007   JP 2007299759**

(71) Applicant: **Asahi Kasei EMD Corporation
Chiyoda-ku
Tokyo 101-8101 (JP)**

(72) Inventors:
• **NAKAMURA, Takenobu
Chiyoda-ku
Tokyo 100-8440 (JP)**
• **YAMASHITA, Masaya
Chiyoda-ku
Tokyo 100-8440 (JP)**

(74) Representative: **HOFFMANN EITLE
Patent- und Rechtsanwälte
Arabellastrasse 4
81925 München (DE)**

(54) **SPATIAL INFORMATION DETECTING SYSTEM, ITS DETECTING METHOD, AND SPATIAL INFORMATION DETECTING DEVICE**

(57)    The present invention relates to a spatial information detecting system that can conduct continuous measurement using an alternating magnetic field, and that has a high degree of freedom of frequency settings and a simple configuration. A magnetic sensor driving unit (23) drives a magnetic sensor (21) via a multiplexer unit (22). Signals of the magnetic sensor are converted from analog signals to digital signals, and are transmitted from a data transmitting unit (26) to an arithmetic unit (3) as magnetic data. A Fourier transform unit (32) calculates the amplitudes and phases of a plurality of frequency components of individual axes from the output signal of the magnetic data receiving unit (31). A magnetic field vector calculating unit (33) calculates signs of the amplitudes of the individual axes from phase relationships between the plurality of frequency components on the individual axes from the output signal from the Fourier transform unit (32), and calculates the magnetic field vector representing the direction and magnitude of the magnetic field from the signs and amplitudes. A direction calculating unit (34) calculates the direction of the information terminal (2).

FIG.4

**Description**

TECHNICAL FIELD

The present invention relates to a spatial information detecting system and detecting method thereof and spatial information detecting apparatus, and more particularly to a spatial information detecting system and detecting method thereof and spatial information detecting apparatus, which are able to measure continuously using an alternating magnetic field, and which have a higher degree of freedom of frequency setting and a simple configuration.

BACKGROUND ART

In recent years, there has been an increasing need for a spatial information detecting system for detecting the position and attitude of an information terminal. For example, there are spatial information detecting systems for detecting the direction of a movable body like a head-mounted display in motion capture, and spatial information detecting systems for measuring the direction of an information terminal such as an insert type endoscope or capsule endoscope placed at an invisible position in the field of medical instruments.

As a spatial information detecting method for detecting the position and attitude of such information terminals, there is a method of utilizing an alternating magnetic field. At that time, the direction of the generation of the alternating magnetic field and the direction of a magnetic sensor used for the measurement become a problem. For example, it is impossible to make a distinction by appearances between an alternating signal measured in the case where the direction in which an output signal increases when a magnetic field enters a magnetic sensor is in the direction identical to the positive direction of the alternating magnetic field (referred to as the positive direction of the magnetic sensor from now on) and the alternating signal measured in the case where the positive direction of the magnetic sensor is in the direction opposite to the positive direction of the alternating magnetic field.

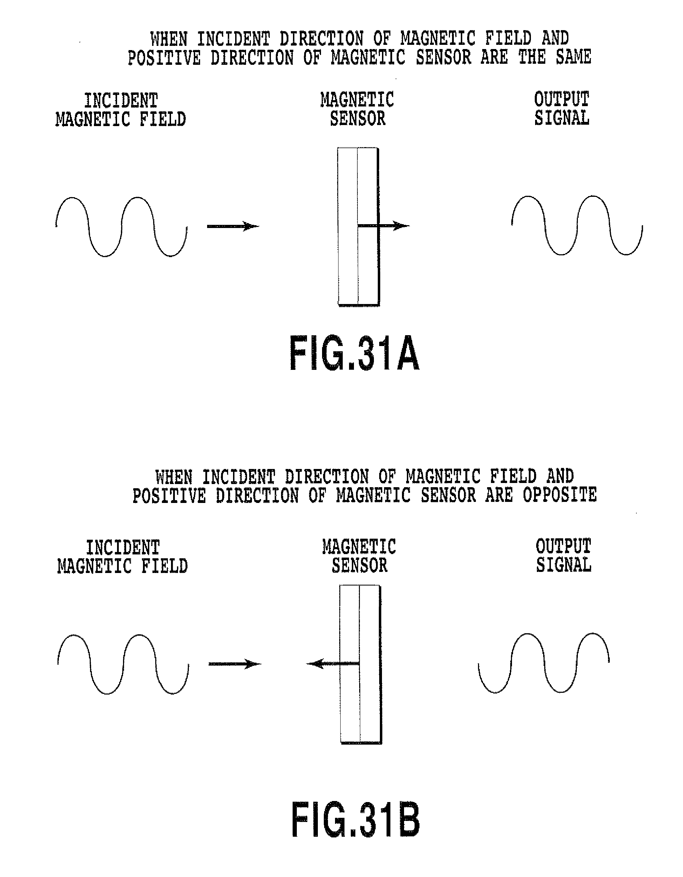

FIG. 31A and FIG. 31B are diagrams showing behavior of output signals measured when the positive direction of the magnetic sensor is identical to the incidence direction of a sinusoidal alternating magnetic field (FIG. 31A) and when it is opposite thereto (FIG. 31B). In both FIG. 31A and PIG. 31B, the output signals become sinusoidal waves with the half wavelength shifted, and hence it is impossible to make a distinction between the incoming directions of the alternating magnetic field when the signal is acquired continuously from an appropriate instance. Accordingly, it is impossible to determine the direction of the magnetic sensor, or to provide the amplitude with a positive or negative sign by only detecting the signal intensity (amplitude) (the sign is defined as being a positive sign (+) when the positive direction of the magnetic sensor is identical to the incidence direction of the alternating magnetic field as shown in FIG. 31A, and a negative sign (-) when the positive direction of the magnetic sensor is opposite to the incidence direction of the alternating magnetic field as shown in FIG. 31B). Thus, the direction of the magnetic sensor cannot be determined using the sign of the amplitude as a clue.

To solve such a problem, in Patent Document 1, for example, a generating coil produces a magnetic field consisting of superposition of a sinusoidal wave A and a sinusoidal wave B, and a receiving coil measures the magnetic field, and the direction in which the generating coil outputs the magnetic field and the direction of the receiving coil are determined by separating the sinusoidal wave A from the sinusoidal wave B in accordance with the frequency bands, and by comparing the signals in synchronization with each other.

In addition, as for the development of capsule endoscopes, as in Non-Patent Document 1, for example, a receiving coil detects a magnetic field in synchronization with the generation of the alternating magnetic field from a generating coil, signal intensities (amplitudes) at respective frequencies are detected by applying an FFT (Fast Fourier Transform) operation, phases are detected from the data from the signal detection to the application of the FFT operation, and the sign of the amplitude of the alternating magnetic field detected is determined from the fact that the direction of the magnetic sensor and the direction of the magnetic field are shifted by $\pi$ as to the same direction and the opposite direction with respect to the same time.

However, the method described in the foregoing Patent Document 1 requires a complex configuration for superposing the sinusoidal wave B intermittently in synchronization with the positive output of the sinusoidal wave A. Inaddition, the method requires filters with predetermined bands for separating respective frequencies for the receiving coils. Furthermore, it is necessary for the frequencies used for the sinusoidal wave A and sinusoidal wave B to be different by a factor of 10 or more, which present a problem of reducing the degree of freedom of frequency settings. In addition, as a system configuration, it has a configuration in which the generating coil moves and hence a power supply for generating the magnetic field must be mounted on the information terminal. This presents a problem of making it difficult to aim at miniaturization and power-saving essential for the latest information terminals.

Furthermore, the method described in the foregoing Non-Patent Document 1 must measure the signal in synchronization with the generation of the alternating magnetic field to detect the phases from the certain starting time. Thus, it requires a trigger (synchronization signal), and has a problem of making it difficult to carry out continuous measurement.

As to the rest, as for a spatial information detecting apparatus utilizing the alternating signal, techniques are seen which detect the position in the lateral direction of a vehicle from the direction of a sound wave as in Patent Document 2, for example, and detects it by receiving an alternating magnetic field from coils placed at regular intervals as in Patent Document 3. The Patent Document 2 detects the direction from the phase difference between waveforms two elements at separate positions receive, and the Patent Document 3 detects the position in the lateral direction from the amplitudes of waveforms two elements at separate positions receive. Either of them is limited in the range of its detecting direction, and is unsuitable for omnidirectional detection the latest information terminal requires.

The present invention is implemented to solve the foregoing problems. Therefore it is an object of the present invention to provide a spatial information detecting system and detecting method there of and spatial information detecting apparatus which can perform continuous measurement using an alternating magnetic field, and which have a higher degree of freedom of frequency settings and a simple configuration.

[Patent Document 1] Japanese Patent Laid-Open No. 2006-214979.
[Patent Document 2] Japanese Patent Laid-Open No. 2004-184341.
[Patent Document 3] Japanese Patent Laid-Open No. 11-73600/1999.
[Patent Document 4] Japanese Patent Laid-Open No. 2003-65791.
[Patent Document 5] Japanese Patent Laid-Open No. 8-278137/1996.
[Patent Document 6] WO2004/003476.
[Non-Patent Document 1] Biomedical Engineering 41-4,239/249 (2003).

DISCLOSURE OF THE INVENTION

The present invention is implemented to achieve the foregoing object. A spatial information detecting system in accordance with the present invention is characterized by comprising: at least one magnetic field generating unit (1) for generating at least one alternating magnetic field having a plurality of different frequency components with known phase relationships between them; a magnetic field detecting unit (20, 111) having at least one multiaxial magnetic sensor for detecting the magnetic field generated from the magnetic field generating unit; a Fourier transform unit (32, 118) for calculating, according to output signals of individual axes of the magnetic field detecting unit, phases and amplitudes of a plurality of frequency components on the individual axes; and a magnetic field vector calculating unit (33, 119) for calculating, according to an output signal from the Fourier transform unit, signs of the amplitudes of the individual axes from phase relationships between the plurality of frequency components on the individual axes, and for calculating a magnetic field vector representing a direction and magnitude of the alternating magnetic field from the signs and the amplitudes (all the embodiments).

In addition, it is characterized by further comprising: an attitude detecting unit (140) for detecting an attitude of the magnetic field detecting unit; and a position/attitude calculating unit (120) for calculating, from an output signal of the attitude detecting unit and an output signal of the magnetic field vector calculating unit, attitude information and position information of the magnetic field detecting unit (embodiments 8, 9 and 10).

Additionally, it is characterized by that the magnetic field detecting unit includes a multiaxial magnetic sensor for detecting a DC magnetic field in addition to the alternating magnetic field; the Fourier transform unit calculates the magnitude of DC components on the individual axes in addition to the phases and amplitudes of the plurality of frequency components on the individual axes; the magnetic field vector calculating unit calculates, in addition to the magnetic field vector based on the alternating magnetic field, a DC magnetic field vector representing a direction and magnitude of the DC magnetic field from the magnitude of the DC components; and the position/attitude calculating unit calculates the attitude information of the magnetic field detecting unit from the output signal of the attitude detecting unit and from the DC magnetic field vector, and calculates the position information of the magnetic field detecting unit from the attitude information and from the magnetic field vector based on the alternating magnetic field from the magnetic field generating unit (embodiment 9).

Furthermore, it is characterized by that the DC magnetic field is geomagnetism (embodiment 9).

In addition, it is characterized by that the magnetic field generating unit generates at least one alternating nonuniform magnetic field which has a plurality of different frequency components with known phase relationships between them, and which varies its direction or magnitude depending on a position (all the embodiments).

Additionally, it is characterized by that the nonuniform magnetic field is at least one alternating gradient magnetic field having a plurality of different frequency components with known phase relationships between them (embodiments 6 to 10).

Furthermore, it is characterized by that the magnetic field generating unit generates at least one alternating uniform magnetic field having the plurality of different frequency components with known phase relationships between them, and at least one alternating nonuniform magnetic field that has a plurality of different frequency components with known phase relationships between them, and that varies its direction or magnitude depending on a position; the magnetic field detecting unit detects the uniform magnetic fields and the nonuniform magnetic fields; the magnetic field vector calculating unit calculates, according to the output signal from the Fourier transform unit, signs of the amplitudes of the individual axes of the uniform magnetic field and of the nonuniform magnetic field from the phase relationships between the plurality of frequency components on the individual axes, and calculates at least one uniform magnetic field vector and at least one nonuniform magnetic field vector representing the direction and magnitude of the uniform magnetic fields and of the nonuniform magnetic fields from the amplitudes and the signs of the individual axes; and the position/attitude calculating unit calculates the attitude information of the magnetic field detecting unit from the uniform magnetic field vectors output from the magnetic field vector calculating unit, and calculates the position information of the magnetic field detecting unit from the attitude information, and from the nonuniform magnetic field vectors output from the magnetic field vector calculating unit (embodiments 4 to 7 and 10).

In addition, it is characterized by further comprising an attitude detecting unit for detecting an attitude of the magnetic field detecting unit, wherein the position/attitude calculating unit calculates the attitude information of the magnetic field detecting unit from an output of the attitude detecting unit and from the uniform magnetic field vectors output from the magnetic field vector calculating unit, and calculates the position information of the magnetic field detecting unit from the attitude information and from the nonuniform magnetic field vectors output from the magnetic field vector calculating unit (embodiment 10).

Additionally, it is characterized by that the magnetic field detecting unit includes a multiaxial magnetic sensor for detecting a DC magnetic field in addition to the uniform magnetic field and the nonuniform magnetic field; the Fourier transform unit calculates the magnitude of DC components on the individual axes in addition to the phases and amplitudes of the plurality of frequency components on the individual axes; the magnetic field vector calculating unit calculates, in addition to the uniform magnetic field vectors and the nonuniform magnetic field vectors, a DC magnetic field vector representing a direction and magnitude of the DC magnetic field from the magnitude of the DC components; and the position/attitude calculating unit calculates the attitude information of the magnetic field detecting unit from the uniform magnetic field vector and the DC magnetic field vector which are output from the magnetic field vector calculating unit, and calculates the position information of the magnetic field detecting unit from the attitude information and from the non uniform magnetic field vectors output from the magnetic field vector calculating unit (embodiment 7).

Furthermore, it is characterized by that the DC magnetic field is geomagnetism (embodiment 7).

In addition, it is characterized by that the nonuniform magnetic field is an alternating gradient magnetic field having a plurality of different frequency components with known phase relationships between them (embodiments 6, 7, and 10).

Additionally, it is characterized by that the magnetic field generating unit comprises coils for generating the uniform magnetic field and the nonuniform magnetic field in a superposed manner (embodiments 5 to 7 and 10).

Furthermore, it is characterized by that an integer ratio between the plurality of frequency components is an even number to an odd number (all the embodiments).

Moreover, it is characterized by that the integer ratio is 2 to 1 (all the embodiments).

In addition, a spatial information detecting method in accordance with the present invention comprises: a magnetic field detecting step of detecting at least one alternating magnetic field having a plurality of different frequency components with known phase relationships between them using a magnetic field detecting unit having a multiaxial magnetic sensor; a Fourier transform step of calculating, according to output signals of individual axes from the magnetic field detecting step, phases and amplitudes of a plurality of frequency components on the individual axes; and a magnetic field vector calculating step of calculating, according to an output signal from the Fourier transform step, signs of the amplitudes of the individual axes from phase relationships between the plurality of frequency components on the individual axes, and of calculating a magnetic field vectors representing a direction and magnitude of the alternating magnetic fields from the signs and the amplitudes.

Additionally, it is characterized by further comprising: an attitude detecting step of detecting an attitude of the magnetic field detecting unit; and a position/attitude calculating step of calculating, from an output signal of the attitude detecting step and an output signal of the magnetic field vector calculating step, attitude information and position information of the magnetic field detecting unit.

Furthermore, it is characterized by that the magnetic field detecting step detects a DC magnetic field in addition to the alternating magnetic field; the Fourier transform step calculates the magnitude of DC components on the individual axes in addition to the phases and amplitudes of the plurality of frequency components on the individual axes; the magnetic field vector calculating step calculates, in addition to the magnetic field vectors based on the alternating magnetic field, a DC magnetic field vector representing a direction and magnitude of the DC magnetic field from the magnitude of the DC components; and the position/attitude calculating step calculates the attitude information of the magnetic field detecting unit from the output signal of the attitude detecting step and from the DC magnetic field vector, and calculates the position information of the magnetic field detecting unit from the attitude information and from the magnetic field vector based on the alternating magnetic field.

In addition, it is characterized by that the magnetic field detecting step detects at least one alternating uniform magnetic field having the plurality of different frequency components with known phase relationships between them, and at least one alternating nonuniform magnetic field that has a plurality of different frequency components having known phase relationships between them, and that varies its direction or magnitude depending on a position; the magnetic field vector calculating step calculates, according to the output signal from the Fourier transform step, signs of the amplitudes of the individual axes of the nonuniform magnetic fields in addition to those of the uniform magnetic fields from the phase relationships between the plurality of frequency components on the individual axes, and calculates a uniform magnetic field vectors and a nonuniform magnetic field vectors representing the direction and magnitude of the uniform magnetic field and of the nonuniform magnetic field from the amplitudes and the signs of the individual axes; and the position/attitude calculating step calculates the attitude information of the magnetic field detecting unit from the uniform magnetic field vector output from the magnetic field vector calculating step, and calculates the position information of the magnetic field detecting unit from the attitude information and from the non uniform magnetic field vectors output from the magnetic field vector calculating step.

Additionally, it is characterized by further comprising: an attitude detecting step of detecting an attitude of the magnetic field detecting unit, wherein the position/attitude calculating step calculates the attitude information of the magnetic field detecting unit from an output of the attitude detecting step and from the uniform magnetic field vector output from the magnetic field vector calculating step, and calculates the position information of the magnetic field detecting unit from the attitude information and from the nonuniform magnetic field vector output from the magnetic field vector calculating step.

Furthermore, it is characterized by that the magnetic field detecting step detects a DC magnetic field in addition to the uniform magnetic field and the nonuniform magnetic field; the Fourier transform step calculates the magnitude of DC components on the individual axes in addition to the phases and amplitudes of the plurality of frequency components on the individual axes; the magnetic field vector calculating step calculates, in addition to the uniform magnetic field vectors and the nonuniform magnetic field vectors, a DC magnetic field vector representing a direction and magnitude of the DC magnetic field from the magnitude of the DC components; and the position/attitude calculating step calculates the attitude information of the magnetic field detecting unit from the uniform magnetic field vectors and the DC magnetic field vector which are output from the magnetic field vector calculating step, and calculates the position information of the magnetic field detecting unit from the attitude information and from the nonuniform magnetic field vectors output from the magnetic field vector calculating step.

In addition, a spatial information detecting apparatus in accordance with the present invention comprises a magnetic field detecting unit (20, 111) having a multiaxial magnetic sensor for detecting at least one magnetic field generated from at least one magnetic field generating unit (1) for generating at least one alternating magnetic field having a plurality of different frequency components with known phase relationships between them; a Fourier transform unit (32, 118) for calculating, according to output signals of individual axes of the magnetic field detecting unit, phases and amplitudes of the plurality of frequency components on the individual axes; and a magnetic field vector calculating unit (33, 119) for calculating, according to an output signal from the Fourier transform unit, signs of the amplitudes of the individual axes from phase relationships between the plurality of frequency components on the individual axes, and for calculating a magnetic field vector representing a direction and magnitude of the alternating magnetic field from the signs and the amplitudes.

Additionally, it is characterized by further comprising: an attitude detecting unit for detecting an attitude of the magnetic field detecting unit; and a position/attitude calculating unit for calculating, from an output signal of the attitude detecting unit and an output signal of the magnetic field vector calculating unit, attitude information and position information of the magnetic field detecting unit.

Furthermore, it is characterized by that the magnetic field detecting unit includes a multiaxial magnetic sensor for detecting a DC magnetic field in addition to the alternating magnetic field; the Fourier transform unit calculates the magnitude of DC components on the individual axes in addition to the phases and amplitudes of the plurality of frequency components on the individual axes; the magnetic field vector calculating unit calculates, in addition to the magnetic field vectors based on the alternating magnetic field, a DC magnetic field vector representing a direction and magnitude of the DC magnetic field from the magnitude of the DC components; and the position/attitude calculating unit calculates the attitude information of the magnetic field detecting unit from the output signal of the attitude detecting unit and from the DC magnetic field vector, and calculates the position information of the magnetic field detecting unit from the attitude information and from the magnetic field vector based on the alternating magnetic fields from the magnetic field generating unit.

Moreover, it is characterized by that the magnetic field detecting unit detects at least one magnetic field generated from the magnetic field generating uni t for generating at least one alternating uniform magnetic field having a plurality of different frequency components with known phase relationships between them, and at least one alternating nonuniform magnetic field that has a plurality of different frequency components having known phase relationships between them, and that varies its direction or magnitude depending on a position; the magnetic field vector calculating unit calculates, according to the output signal from the Fourier transform unit, signs of the amplitudes of the individual axes of the uniform magnetic field and of the nonuniform magnetic field from the phase relationships between the plurality of frequency components on the individual axes, and calculates a uniform magnetic field vector and a nonuniform magnetic field vector representing the direction and magnitude of the uniform magnetic fields and of the nonuniform magnetic fields from the amplitudes and the signs of the individual axes; and the position/attitude calculating unit calculates the attitude information of the magnetic field detecting unit from the uniform magnetic field vector output from the magnetic field vector calculating, unit, and calculates the position information of the magnetic field detecting unit from the attitude information and from the nonuniform magnetic field vector output from the magnetic field vector calculating unit.

In addition, it is characterized by further comprising an attitude detecting unit for detecting an attitude of the magnetic field detecting uni t, wherein the position/attitude calculating unit calculates the attitude information of the magnetic field detecting unit from an output of the attitude detecting unit and from the uniform magnetic field vector output from the magnetic field vector calculating unit, and calculates the position information of the magnetic field detecting unit from the attitude information and from the nonuniform magnetic field vector output from the magnetic field vector calculating unit.

Furthermore, it is characterized by that the magnetic field detecting unit includes a multiaxial magnetic sensor for detecting a DC magnetic field in addition to the uniform magnetic fields and the nonuniformmagnetic fields; the Fourier transform unit calculates the magnitude of DC components on the individual axes in addition to the phases and amplitudes of the plurality of frequency components on the individual axes; the magnetic field vector calculating unit calculates, in addition to the uniform magnetic field vector and the nonuniform magnetic field vector, a DC magnetic field vector representing a direction and magnitude of the DC magnetic field from the magnitude of the DC components; and the position/attitude calculating unit calculates the attitude information of the magnetic field detecting unit from the uniform magnetic field vector and the DC magnetic field vector which are output from the magnetic field vector calculating unit, and calculates the position information of the magnetic field detecting unit from the attitude information and from the nonuniform magnetic field vector output from the magnetic field vector calculating unit.

According to the present invention, since it comprises at least one magnetic field generating unit for generating at least one alternating magnetic field having a plurality of different frequency components with known phase relationships between them; a magnetic field detecting unit having a multiaxial magnetic sensor for detecting the magnetic fields generated from the magnetic field generating unit; a Fourier transform unit for calculating, according to output signals of individual axes of the magnetic field detecting unit, phases and amplitudes of a plurality of frequency components on the individual axes; and a magnetic field vector calculating unit for calculating, according to an output signal from the Fourier transform unit, signs of the amplitudes of the individual axes from phase relationships between the plurality of frequency components on the individual axes, and for calculating a magnetic field vector representing a direction and magnitude of the alternating magnetic field from the signs and the amplitudes, it can provide a spatial information detecting system that can conduct continuous measurement using the alternating magnetic field, and that has a high degree of freedom of frequency setting, and has a simple configuration. Likewise, it can provide a spatial information detecting method and spatial information detecting apparatus thereof.

BRIEF DESCRIPTION OF THE DRAWINGS

FIG. 1 is a diagram showing a general configuration of an embodiment 1 of a spatial information detecting system in accordance with the present invention;

FIG. 2A is a diagram showing a coordinate system of an information terminal and that of a coil of a magnetic field generating unit in the spatial information detecting system in accordance with the present invention, and is a diagram showing the coordinate system of the information terminal;

FIG. 2B is a diagram showing the coordinate system of the information terminal and that of the coil of the magnetic field generating unit in the spatial information detecting system in accordance with the present invention, and is a diagram showing the coordinate system of the coil of the magnetic field generating unit;

FIG. 3 is a diagram showing relationships between the direction of the information terminal and the coordinate system in the spatial information detecting system in accordance with the present invention;

FIG. 4 is a block diagram showing a concrete configuration of the spatial information detecting apparatus of the embodiment 1 of the spatial information detecting system in accordance with the present invention;

FIG. 5 is a diagram showing relationships between the direction of the magnetic sensor and the direction of the alternating magnetic field being generated, and phase relationships between a first frequency component and a second frequency component;

FIG. 6 is another diagram showing relationships between the direction of the magnetic sensor and the direction of the alternating magnetic field being generated, and phase relationships between the first frequency component and the second frequency component;

FIG. 7 is a flowchart for explaining the relationship of Figs. 7A and 7B;

FIG. 7A is a flowchart for explaining the operation of the embodiment 1 of the spatial information detecting system in accordance with the present invention;

FIG. 7B is a flowchart for explaining the operation of the embodiment 1 of the spatial information detecting system in accordance with the present invention;

FIG. 8 is a diagram showing results of a simulation assuming that a magnetic field having 1 Hz and 2 Hz sine wave magnetic fields superposed is measured while rotating an azimuth angle sensor at every 30 degrees in parallel with the magnetic field;

FIG. 9 is a flowchart for explaining the relationship of Figs. 9A and 9B;

FIG. 9A is a flowchart for explaining the operation of an embodiment 2 of the spatial information detecting system in accordance with the present invention;

FIG. 9B is a flowchart for explaining the operation of the embodiment 2 of the spatial information detecting system in accordance with the present invention;

FIG. 10 is a diagram showing results of a simulation assuming that a magnetic field having 3 Hz and 8 Hz sinusoidal wave magnetic fields superposed is measured while rotating an azimuth angle sensor at every 30 degrees in parallel with the magnetic field;

FIG. 11 is a block diagram showing a concrete configuration of the spatial information detecting apparatus of an embodiment 3 of the spatial information detecting system in accordance with the present invention;

FIG. 12 is a flowchart for explaining the relationship of Figs. 12A and 12B;

FIG. 12A is a flowchart for explaining the operation of the embodiment 3 of the spatial information detecting system in accordance with the present invention;

FIG. 12B is a flowchart for explaining the operation of the embodiment 3 of the spatial information detecting system in accordance with the present invention;

FIG. 13 is a diagram showing a general configuration of an embodiment 4 of the spatial information detecting system in accordance with the present invention;

FIG. 14 is a diagram of a coordinate system of an information terminal;

FIG. 15 is a block diagram showing a concrete configuration of the spatial information detecting apparatus of the embodiment 4 of the spatial information detecting system in accordance with the present invention;

FIG. 16 is a schematic diagram showing the direction of a magnetic field formed by a position detective magnetic field Bp;

FIG. 17 is a diagram showing a state of the position detective magnetic field Bp from a position detective magnetic field generating coil seen from an upper part of the Zg axis;

FIG. 18 is a flowchart for explaining the operation of the embodiment 4 of the spatial information detecting system in accordance with the present invention;

FIG. 19 is a diagram showing a general configuration of an embodiment 5 of the spatial information detecting system in accordance with the present invention;

FIG. 20 is a diagram showing a general configuration of an embodiment 6 of the spatial information detecting system in accordance with the present invention;

FIG. 21A is a diagram of a gradient magnetic field generating mechanism;

FIG. 21B is a diagram of the gradient magnetic field generating mechanism;

FIG. 22 is a flowchart for explaining the operation of the embodiment 6 of the spatial information detecting system in accordance with the present invention;

FIG. 23 is a diagram showing a general configuration of an embodiment 7 of the spatial information detecting system in accordance with the present invention;

FIG. 24 is a flowchart for explaining the operation of the embodiment 7 of the spatial information detecting system in accordance with the present invention;

FIG. 25 is a diagram showing a general configuration of an embodiment 8 of the spatial information detecting system in accordance with the present invention;

FIG. 26 is a block diagram showing a concrete configuration of the spatial information detecting apparatus of the embodiment 8 of the spatial information detecting system in accordance with the present invention;

FIG. 27 is a flowchart for explaining the operation of the embodiment 8 of the spatial information detecting system in accordance with the present invention;

FIG. 28 is a flowchart for explaining the operation of an embodiment 9 of the spatial information detecting system in accordance with the present invention;

FIG. 29 is a diagram showing a general configuration of an embodiment 10 of the spatial information detecting system in accordance with the present invention;

FIG. 30 is a flowchart for explaining the operation of the embodiment 10 of the spatial information detecting system in accordance with the present invention;

FIG. 31A is a diagram showing behavior of an output signal measured when the positive direction of a magnetic sensor is identical to the incidence direction of a sinusoidal alternating magnetic field; and

FIG. 31B is a diagram showing behavior of the output signal measured when the positive direction of the magnetic sensor is opposite to the incidence direct ion of the sinusoidal alternating magnetic field.

## BEST MODE FOR CARRYING OUT THE INVENTION

The embodiments in accordance with the invention will now be described with reference to the accompanying drawings.

In the present invention, the term "spatial information" refers to information about an attitude or position. The term "attitude" can be a partial attitude having a degree of freedom left, or an arbitrary attitude without leaving any degree of freedom.

First, detection of the direction, which is a partial attitude, will be described.

As for the detection of the direction, there are cases which employs a three-axis magnetic sensor at a frequency ratio of the generated magnetic fields 1:2 (embodiment 1), which employs a three-axis magnetic sensor at the frequency ratio of the generated magnetic fields M:N (embodiment 2), and which employs a two-axis magnetic sensor at a frequency ratio of the generated magnetic fields M:N (embodiment 3). The individual embodiments will be described below. In the embodiments 1-3, the generated magnetic field will be described as a magnetic field generated from a single coil. The magnetic field generated from the single coil spreads symmetrically with respect to the central axis of the coil. However, in the embodiments 1 - 3, a detecting method of the direction of the information terminal will be described insofar as the magnetic field can be considered as a magnetic field generated in a single direction. In other words, they are embodiments based on the assumption that the information terminal is placed in a region where the magnetic field can be considered to be a uniform magnetic field with a fixed direction and magnitude, or placed on the central axis of the coil or at a fixed position.

## [EMBODIMENT 1]

<When Using Three-Axis Magnetic Sensor at Frequency Ratio of Generated Magnetic Fields 1:2>

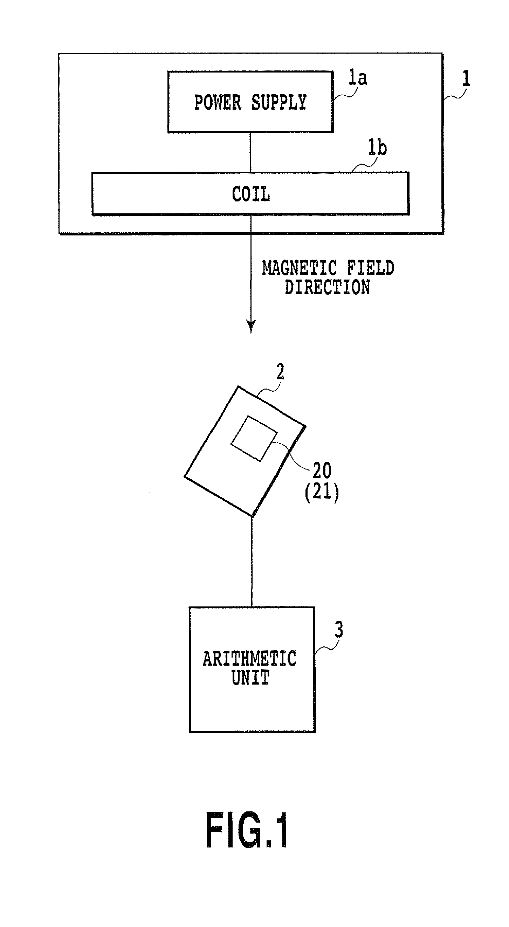

FIG. 1 is a diagram showing a general configuration of an embodiment 1 of a spatial information detecting system in accordance with the present invention. In FIG. 1, the reference numeral 1 designates a magnetic field generating unit, 1a designates a power supply, 1b designates a coil, 2 designates an information terminal, 20 designates a magnetic field detecting unit, 21 designates a magnetic sensor, and 3 designates an arithmetic unit. The embodiment 1 has a single magnetic field generating unit at a frequency ratio 1:2, and the magnetic field detecting unit 20 has a three-axis magnetic sensor 21.

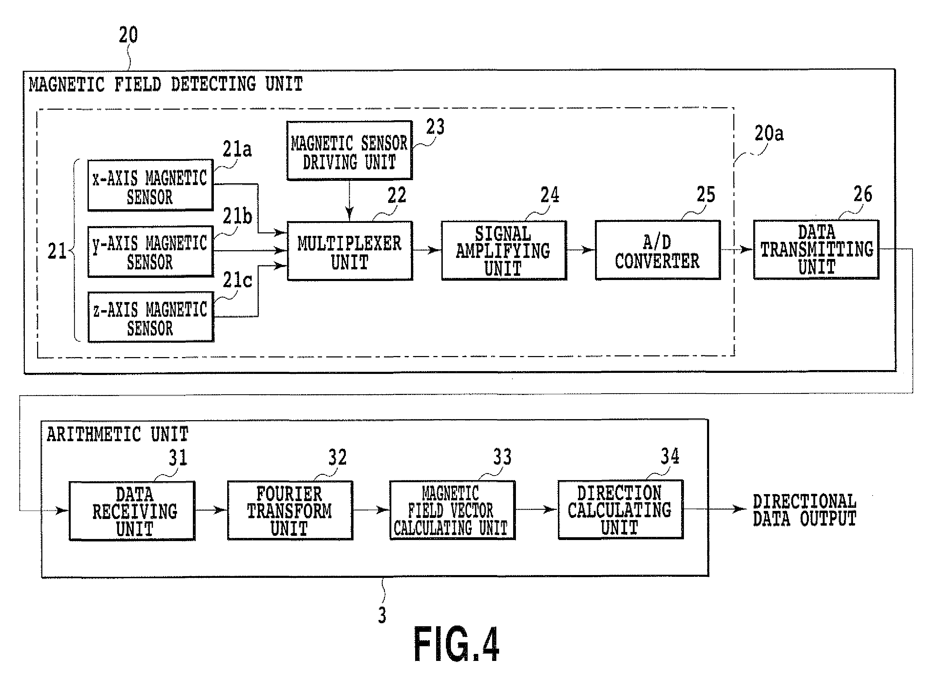

The spatial information detecting system in accordance with the present invention comprises the magnetic field generating unit 1, the magnetic field detecting unit 20, and the arithmetic unit 3 including a Fourier transform unit (designated by the reference numeral 32 of FIG. 4 which will be described later), a magnetic field vector calculating unit (designated by the reference numeral 33 of FIG. 4 which will be described later), and a direction calculating unit (designated by the reference numeral 34 of FIG. 4 which will be described later). The magnetic field detecting unit 20 is mounted on the information terminal 2 whose direction is to be detected.

Incidentally, the term "information terminal 2" refers to a part or region where a user can get some information, and means a variety of devices such as a mobile phone, a PDA (Personal Digital Assistant), a capsule endoscope, an endoscope and a game machine. In addition, the arithmetic unit 3 is constructed by combining a CPU (Central Processing Unit), a DSP (Digital Signal Processor) or a microcomputer in a device such as a mobile phone, PDA, game machine, measuring instrument for a capsule endoscope or endoscope, or a PC (Personal Computer) with a storage device such as a memory or hard disk and with a communication function with the outside.

The magnetic field generating unit 1 constituting the spatial information detecting system in accordance with the present invention generates an alternating magnetic field with a plurality of different frequency components whose phase relationships are known. As shown in FIG. 1, it comprises the power supply 1a and coil 1b. The power supply 1a can generate two alternating currents (or voltages) with different frequencies in a superposed manner, and angular frequencies of their first and second frequencies are $\omega$ and $2\omega$ (the frequency ratio is 1:2 in terms of least integer ratio). Then, applying the currents generated from the power supply 1a to the coil 1b makes it possible to generate the magnetic field. The phases of the alternating magnetic field generated are assumed to be $-\pi/2$ at time t = 0 for both the first frequency component and second frequency component. Accordingly, assuming that the phase of the magnetic field of the first frequency component is $\Theta$, and the phase of the magnetic field of the second frequency component is $\Phi$, then

they can be expressed as follows:

$$\Theta = \omega t - \pi/2 \qquad \text{(Expression 1)}$$

$$\Phi = 2\omega t - \pi/2 \qquad \text{(Expression 2)}$$

As for the magnetic field detecting unit 20, its concrete configuration is shown in FIG. 4. It includes an azimuth angle sensor 20a having a three-axis magnetic sensor 21 (X-axis magnetic sensor 21a, Y-axis magnetic sensor 21b, and Z-axis magnetic sensor 21c of FIG. 4) for detecting the magnetic field generated from the magnetic field generating unit 1. The azimuth angle sensor 20a has the three-axis magnetic sensors 21a, 21b, and 21c facing planes that are orthogonal to each other. The magnetic sensors are a semiconductor magnetic sensor such as a Hall element, MR element, GMR element, and MI element.

As for the arithmetic unit 3, its concrete configuration is shown in FIG. 4. It includes the Fourier transform unit 32, magnetic field vector calculating unit 33, and direction calculating unit 34, and can be mounted or not mounted on the information terminal 2 depending on its applications. Incidentally, although a signal line is drawn between the information terminal 2 and the arithmetic unit 3 in FIG. 1, it can be wireless.

The Fourier transform unit 32, which will be described later with reference to FIG. 4, calculates the phases and amplitudes of a plurality of frequency components of the individual axes from the output signals of the individual axes of the magnetic field detecting unit 20. The magnetic field vector calculating unit 33, which will be described later with reference to FIG. 4, calculates signs of the amplitudes of the individual axes from the phase relationships between the plurality of frequency components of the individual axes from the output signal from the Fourier transform unit 32. In addition, it calculates the magnetic field vector representing the direction and magnitude of the magnetic field from the signs of the individual axes and the amplitude of at least one of the plurality of frequency components. The direction calculating unit 34 calculates the direction of the information terminal 2 from the output of the magnetic field vector calculating unit 33.

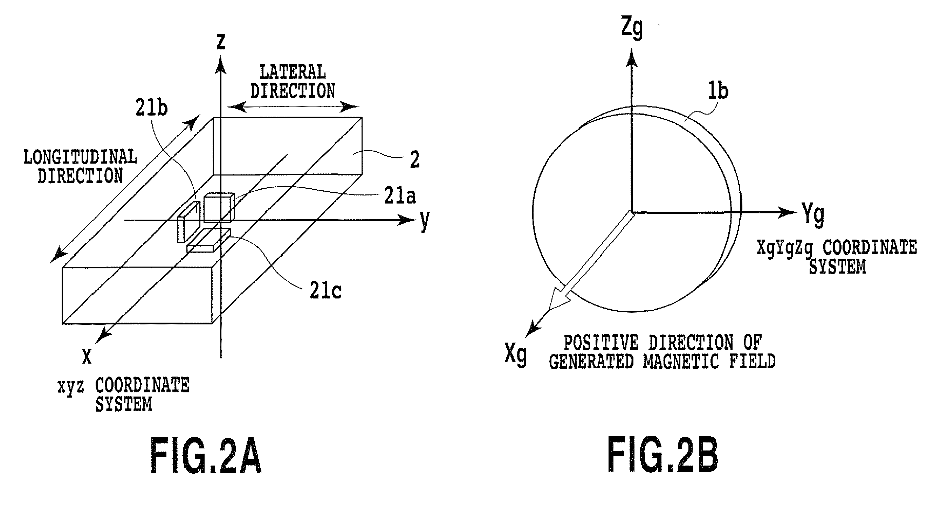

FIG. 2A and FIG. 2B are diagrams showing the coordinate systems of the information terminal and of the coil of the magnetic field generating unit in the spatial information detecting system in accordance with the present invention: FIG. 2A is a diagram showing the coordinate system of the information terminal; and FIG. 2B is a diagram showing the coordinate system of the coil of the magnetic field generating unit.

As shown in FIG. 2A, a right-hand xyz coordinate system (terminal coordinate system) is defined by the x-axis which is the longitudinal direction of the information terminal 2, the y-axis which is the lateral direction thereof, and the z-axis which is orthogonal to the x-axis and y-axis. In addition, as for the three-axis magnetic sensors 21a, 21b, and 21c which are orthogonal to each other and are possessed by the azimuth angle sensor 20a of the information terminal 2, their directions are assumed to agree with the directions of the individual axes constituting the xyz coordinate system. In other words, there are x-axis, y-axis and z-axis magnetic sensors, and increasing directions (positive directions) of the respective outputs are positive directions of the individual axes of the xyz coordinate system.

In addition, as shown in FIG. 2B, the coil 1b is placed vertically to a horizontal plane. The right-hand system XgYgZg coordinate system (absolute coordinate system) is constructed from the Xg-axis which is aligned to the direction of the positive magnetic field generated from the coil 1b, the Zg axis directed in the direction vertical to the horizontal plane (ground plane), and the Yg-axis which constitutes a plane parallel to the horizontal plane together with the Xg-axis.

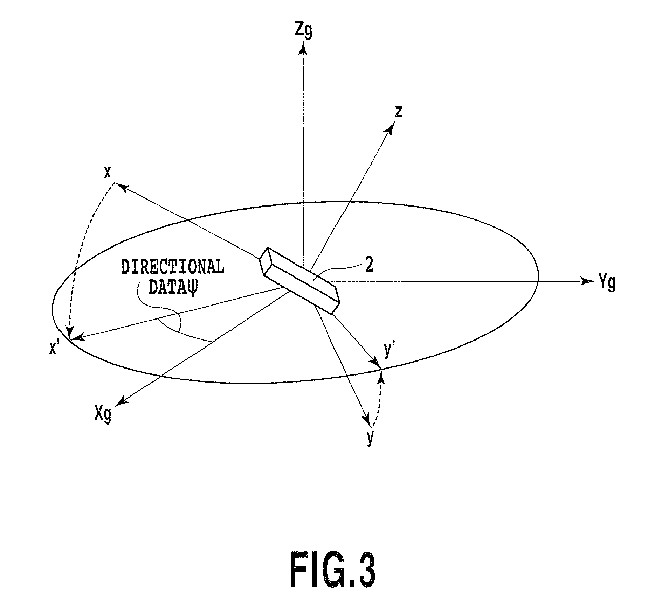

FIG. 3 is a diagram showing relationships between the direction of the information terminal and the coordinate system in the spatial information detecting system in accordance with the present invention. In FIG. 3, the xyz coordinate system of the information terminal 2 taking a particular direction is not aligned to the XgYgZg coordinate system except for the origin. The directional data $\Psi$, which is the spatial information of the information terminal 2 the spatial information detecting system of the embodiment 1 detects, is expressed by the angle between the x'-axis and the Xg-axis which is the generating direction of the positive magnetic field, where x'-axis and y'-axis are vectors when the x-axis and y-axis of the information terminal 2 undergo the coordinate transformation to the XgYg plane (first, the y-axis is placed upon the y'-axis by rotating about the x-axis, and then the x-axis is placed upon the x'-axis by rotating about the y'-axis). Incidentally, the directional data $\Psi$ as in FIG. 3 is sometimes referred to as an azimuth angle. According to the application, the directional data $\Psi$ the spatial information detecting system of the embodiment 1 in accordance with the present invention detects serves not only as the azimuth angle, but as the magnetic field vector representing the direction of the magnetic field the information terminal 2 detects.

FIG. 4 is a block diagram showing a concrete configuration of the spatial information detecting apparatus of the spatial information detecting system of the embodiment 1 in accordance with the present invention. The spatial information detecting apparatus comprises the magnetic field detecting unit 20 and the arithmetic unit 3. The arithmetic unit 3 includes a data receiving unit 31, Fourier transform unit 32, magnetic field vector calculating unit 33, and direction calculating unit 34. The magnetic field detecting unit 20 includes the azimuth angle sensor 20a and a data transmitting unit 26.

The azimuth angle sensor 20a comprises the three-axis magnetic sensor 21 including the x-axis magnetic sensor 21a, y-axis magnetic sensor 21b, and z-axis magnetic sensor 21c; a multiplexer unit 22 for selecting one of the three axes of the magnetic sensor 21, and for acquiring the output signal from the magnetic sensor of the axis selected; a magnetic sensor driving unit 23 for driving the magnetic sensor 21 via the multiplexer unit 22; a signal amplifying unit 24 for amplifying the output signal from the multiplexer unit 22; and an A/D converter 25 for carrying out A/D conversion of the amplified signal from the signal amplifying unit 24. The data transmitting unit 26 transmits the signal converted by the A/D converter 25 to the arithmetic unit 3.

With the configuration, the magnetic sensor driving unit 23 drives the magnetic sensor 21 via the multiplexer unit 22. The multiplexer unit 22 selects the magnetic sensor of the axis to be measured. The signal of the magnetic sensor of the axis selected is amplified to an appropriate magnitude by the signal amplifying unit 24, and is converted from an analog signal to a digital signal by the A/D converter 25. The conversion to the digital signal is performed on the signal from the magnetic sensor of each axis. The digitized signal is transmitted from the data transmitting unit 26 to the arithmetic unit 3 as magnetic data.

The arithmetic unit 3 comprises, as described above, the data receiving unit 31 for receiving the magnetic data from the data transmitting unit 26 of the magnetic field detecting unit 20; the Fourier transform unit 32; the magnetic field vector calculating unit 33; and the direction calculating unit 34.

The Fourier transform unit 32 calculates the phases and amplitudes of the plurality of frequency components of the individual axes from the output signal of the data receiving unit 31. In addition, the magnetic field vector calculating unit 33 calculates signs of the amplitudes of the individual axes from the phase relationships between the plurality of frequency components of the individual axes from the output signal of the Fourier transform unit 32, and calculates the vector of the magnetic field representing the direction and magnitude of the magnetic field from the signs and amplitudes. Furthermore, the direction calculating unit 34 calculates the direction of the information terminal 2 from the output signal of the magnetic field vector calculating unit 33.

With the configuration, the data receiving unit 31 receives the magnetic data sent from the data transmitting unit 26 of the magnetic field detecting unit 20, and delivers to the Fourier transform unit 32. The Fourier transform unit 32, after acquiring a desired amount of magnetic data from the three-axis magnetic sensor 21, performs an FFT (Fast Fourier Transform) operation on the magnetic data. The amount of data acquired as the desired amount is, for example, a data amount of an integer multiple of the waveform of the superposed alternating magnetic field. For example, when generating 1 Hz and 2 Hz alternating magnetic fields in a superposed manner, and acquiring the magnetic data at 128 Hz sampling with the azimuth angle sensor 20a, the amount of data is 128 which becomes an integer multiple of the period of 1 Hz and 2 Hz, and hence it is made the amount of data to be acquired. As for execution of the FFT operation, the FFT operation can be performed separately on the desired amount of magnetic data of the x-axis, on the desired amount of magnetic data of y-axis, and on the desired amount of magnetic data of the z-axis; or a method can be used which obtains FFT data by performing complex FFT operation on the desired amount of magnetic data of any two of the three axes simultaneously, and by performing FFT operation separately on the desired amount of magnetic data of the remaining one axis. Then, from the FFT data of the individual axes calculated as a result of executing the FFT operation, the Fourier transform unit 32 calculates the amplitudes of the individual axes of the first frequency component and the phases of the first and second frequency components, and delivers them to the magnetic field vector calculating unit 33.

Here, let us express the amplitudes of the x-axis, y-axis, and z-axis, which are calculated from the FFT data of the individual axes with the Fourier transform unit 32, by $A_x$, $A_y$ and $A_z$, the phase components of the individual axes of the first frequency component by $\theta_x$, $\theta_y$ and $\theta_z$, and the phase components of the individual axes of the second frequency component by $\varphi_x$, $\varphi_y$ and $\varphi_z$ ($0 \le \theta_x$, $\theta_y$, $\theta_z$, $\varphi_x$, $\varphi_y$, $\varphi_z < 2\pi$).

The phases calculated are delivered to the magnetic field vector calculating unit 33 that makes a decision as to which direction the positive direction of the magnetic sensor of the measured axis faces to the positive direction of the magnetic field by judging the sign of the amplitude using an amplitude sign decision value obtained from the following phase relationships. The case of the x-axis component will be described below.

Define the amplitude sign decision value $\eta_x$ as

$$\eta_x = \varphi_x - 2 \times \theta_x \qquad \text{(Expression 3)}$$

where $0 \le \eta_x < 2\pi$.

When the positive direction of the magnetic sensor 21 is aligned to the positive direction of the generated magnetic field, and the phases of the first frequency component and second frequency component calculated are denoted by $\theta_x^+$ and $\varphi_x^+$, then they are measured as:

$$\theta_x^+ = \omega t - \pi/2 - 2\pi p_x^+ \qquad \text{(Expression 4)}$$

$$\varphi_x^+ = 2\omega t - \pi/2 - 2\pi q_x^+ \qquad \text{(Expression 5)}$$

(where $p_x^+$ and $q_x^+$ are integers for making $0 \leq \theta_x^+, \varphi_x^+, < 2\pi$). Then, the value for sign determination $\eta_x^+$ at that time is given as follows from (Expression 3):

$$\eta_x^+ = \pi/2 + 2\pi (2p_x^+ - q_x^+) - 2\pi v_x^+ \qquad \text{(Expression 6)}$$

Thus, it is a fixed value (where $v_x^+$ is an integer for making $0 \leq \eta_x^+ < 2\pi$). On the other hand, when the positive direction of the magnetic sensor 21 is opposite to the positive direction of the generated magnetic field, and the phases of the first frequency component and second frequency component calculated are denoted by $\theta_x^-$ and $\varphi_x^-$, then they are measured as:

$$\theta_x^- = \omega t - \pi/2 + \pi - 2\pi p_x^- \qquad \text{(Expression 7)}$$

$$\varphi_x^- = 2\omega t - \pi/2 + \pi - 2\pi q_x^- \qquad \text{(Expression 8)}$$

(where the phases are shifted by $\pi$. In addition, $p_x^-$ and $q_x^-$ are integers for making $0 \leq \theta_x^-, \varphi_x^- < 2\pi$). The value for sign determination $\eta_x^-$ in this case is given as follows from (Expression 3):

$$\eta_x^- = 3\pi/2 + 2\pi (2p_x^- - q_x^-) - 2\pi v_x^- \qquad \text{(Expression 9)}$$

(where $v_x^-$ is an integer for making $0 \leq \eta_x^- < 2\pi$). It is also a fixed value.

Thus, the value for sign determination $\eta_x$ calculated from (Expression 3) has different values $\eta_x^+$ of (Expression 6) and $\eta_x^-$ of (Expression 9). Accordingly, it is possible to make a decision as to whether the direction of the generated magnetic field and the direction of the magnetic sensor 21 are the same or opposite. Then, the signs of the amplitudes can be determined.

For example, the sign Sign ($A_x$) of the x-axis amplitude can be expressed as follows using $\eta_x$ of (Expression 3) (where k of Sign(k) represents the sign taking a value of -1 or +1).

$$\text{Sign}(A_x) = \text{Sign}(\text{Sin}(\eta_x)) \qquad \text{(Expression 10)}$$

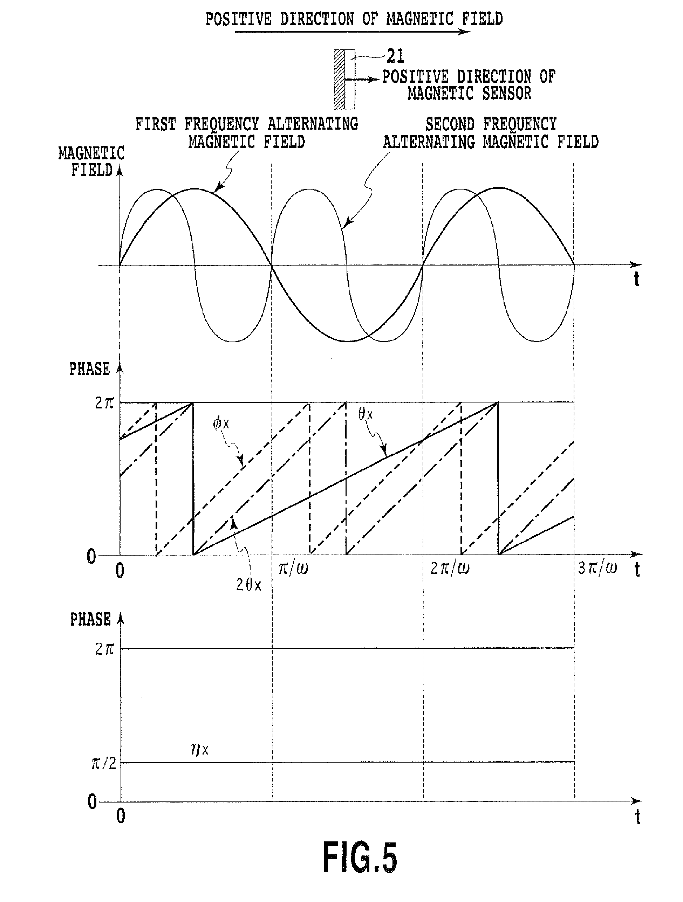

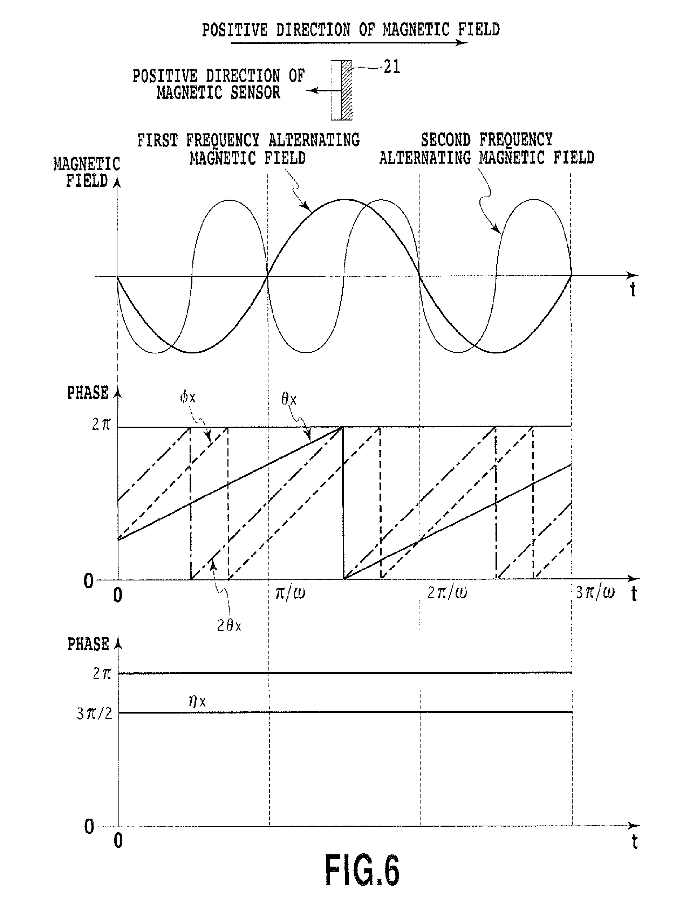

FIG. 5 and FIG. 6 are diagrams showing relationships between the direction of the magnetic sensor and the direction of the alternating magnetic field being generated, and phase relationships between the first frequency component and second frequency component. In the top row, the relationships between the direction of the positive magnetic field and the positive direction of the magnetic sensor 21 are shown; in the second row, variations of the alternating magnetic field measured by the magnetic sensor 21 are shown from $t = 0$ to $t = 3\pi/\omega$ for respective frequency components; in the third row, the phase $\theta_x$ of the first frequency component of the alternating magnetic field in the second row, the phase $\varphi_x$ of the second frequency component, and time changes of $2\theta_x$ are shown from $t = 0$ to $t = 3\pi/\omega$ by a solid line, broken line and dash dotted line, respectively; and in the bottom row, time variations in $\eta_x (= \varphi_x - 2\theta_x)$ are shown from $t = 0$ to $t = 3\pi/\omega$.

FIG. 5 shows a case where the positive direction of the magnetic field and the positive direction of the magnetic sensor are the same, and FIG. 6 shows a case where they are opposite. In FIG. 5, $\eta_x$ is fixed at $\pi/2$ (corresponding to $\eta_x^+$ of (Expression 6)), and in FIG. 6, $\eta_x$ is fixed at $3\pi/2$ (corresponding to $\eta_x^-$ of (Expression 9)). In the figures, the cases are shown where the magneto-sensitive plane (plane for detecting the magnetic field) of the magnetic sensor 21 is perpendicular to the magnetic field. When it is not perpendicular, only the amplitude of the magnetic field measured is reduced, and $\eta_x^+$ and $\eta_x^-$ of (Expression 6) and (Expression 9) do not vary until the magneto-sensitive plane becomes parallel to the magnetic field and faces in the opposite direction. Accordingly, it is possible to discriminate between the positive and negative outputs of the magnetic sensor 21. Then, as described above, $\eta_x^+$ and $\eta_x^-$ of (Expression 6) and (Expression 9) have values independent from time, and it is not necessary for determining the signs of the amplitudes to calculate phases from the data synchronized with the magnetic field. Thus, the timing for the measurement can be selected freely, and the continuous measurement becomes possible. Besides, there is an advantage of obviating the necessity of using the configuration that superposes the signals intermittently as in the foregoing Patent Document 1.

In the same manner as with the x-axis, the signs of the amplitudes of the y-axis and z-axis are obtained from the value for sign determination $\eta_y$ and $\eta_z$ of the y-axis and z-axis, and the next sign-affixed amplitudes are calculated. Assume that the sign-affixed amplitudes of the x-axis, y-axis, and z-axis are $A_x'$, $A_y'$, and $A_z'$, and calculate:

$$A_x' = \mathrm{Sign}(\mathrm{Sin}(\eta_x)) \times A_x \quad \text{(Expression 11)}$$

$$A_y' = \mathrm{Sign}(\mathrm{Sin}(\eta_y)) \times A_y \quad \text{(Expression 12)}$$

$$A_z' = \mathrm{Sign}(\mathrm{Sin}(\eta_z)) \times A_z \quad \text{(Expression 13)}$$

Thus, the magnetic field vector $(A_x', A_y', A_z')^T$ can be obtained which indicates the intensity and direction of the first frequency component of the alternating magnetic field being measured (where $X^T$ represents a transpose of X, and the vector expresses a column vector). Incidentally, the magnetic field vector can be used after being normalized as needed. Thus, the magnetic vector data can expressed anew in a ratio based on the magnitude of $A_x'$ or of the magnetic field vector $(A_x', A_y', A_z')^T$. Then, the magnetic field vector obtained is delivered to the direction calculating unit 34.

The direction calculating unit 34 obtains the directional data $\Psi$, which is the attitude information from the magnetic field vector, and outputs. In the case of calculating the directional data $\Psi$ as the azimuth angle as shown in FIG. 3, it can be obtained by detecting the attitude of the information terminal 2, by correcting the magnetic field vector in accordance with the attitude of the information terminal 2, and by calculating from its horizontal component. For example, the directional data $\Psi$ can be obtained by the method described in Patent Document 4 or 5.

Assume that the horizontal components of the corrected magnetic field vector are $A_x''$ and $A_y''$, then the directional data $\Psi$ can be obtained omnidirectionally as:

$$\Psi = \tan^{-1}(A_y''/A_x'') \quad \text{(Expression 14)}$$

It is obvious that when the xy plane and the XgYg plane are placed on the same plane, it can be obtained directly from (Expression 11) and (Expression 12) by

$$\Psi = \tan^{-1}(A_y'/A_x') \quad \text{(Expression 15)}$$

Incidentally, to represent the directional data $\Psi$ simply in terms of the occurrence direction of the magnetic field rather than in terms of the azimuth angle, the magnetic field vector is used as it is as the directional data $\Psi$.

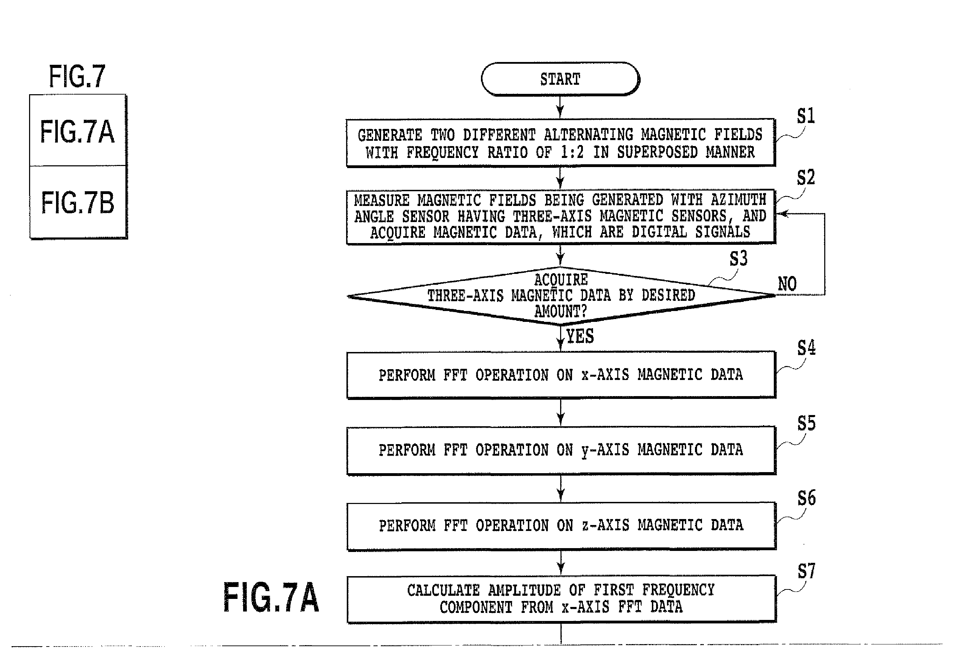

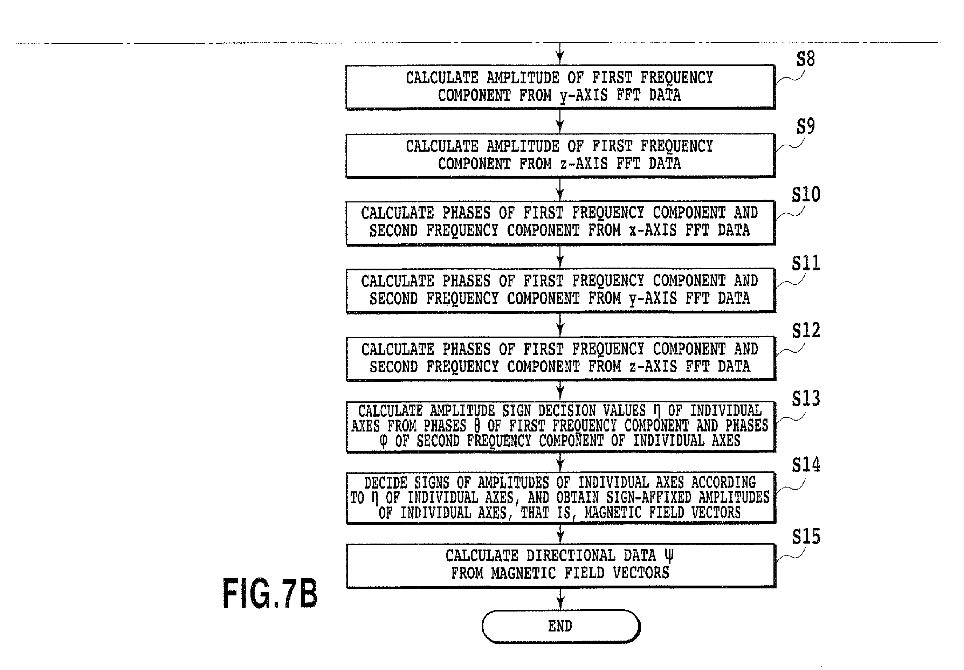

FIG. 7A and FIG. 7B are flowcharts for explaining the operation of the embodiment 1 of the spatial information detecting system in accordance with the present invention. First, the magnetic field generating unit 1 generates two different alternating magnetic fields in a superposed manner at a frequency ratio 1:2 (step S1). Next, the azimuth angle sensor 20a of the magnetic field detecting unit 20 having the three-axis magnetic sensor 21 measures the magnetic fields the magnetic field generating unit 1 generates, and acquires magnetic data of the individual axes, which are digital signals (step S2). Next, the Fourier transform unit 32 makes a decision as to whether it acquires the desired amount of magnetic data required for the FFT operation. (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 32 performs the FFT operation on the desired amount of x-axis magnetic data acquired (step S4). Likewise, it performs the FFT operation on the y-axis magnetic data next (step S5). Likewise, it performs the FFT operation on the z-axis magnetic data next (step S6).

Next, it calculates the amplitude $A_x$ of the first frequency component from the x-axis FFT data (step S7). Likewise, it calculates the amplitude $A_y$ of the first frequency component from the y-axis FFT data next (step S8). Likewise, it calculates the amplitude $A_z$ of the first frequency component from the z-axis, FFT data next (step S9).

Next, it calculates the phases $\theta_x$ and $\varphi_x$ of the first frequency component and second frequency component from the x-axis FFT data (step S10). Likewise, it calculates the phases $\theta_y$ and $\varphi_y$ of the first frequency component and second frequency component next from the y-axis FFT data (step S11). Likewise, it calculates the phases $\theta_z$ and $\varphi_z$ of the first frequency component and second frequency component from the z-axis FFT data next (step S12).

Next, the magnetic field vector calculating unit 33 calculates according to (Expression 3) the value for sign determination $\eta_x$, $\eta_y$ and $\eta_z$ of the individual axes from the calculated $\theta_x$, $\theta_y$, $\theta_z$, $\varphi_x$, $\varphi_y$ and $\varphi_z$ (step S13), determines the signs of the amplitudes of the individual axes from the calculated value for sign determination $\eta_x$, $\eta_y$ and $\eta_z$, and calculates the sign-affixedamplitudes, that is, the magnetic field vector (step S14). From the magnetic field vector, the direction calculating unit 34 calculates the directional data $\Psi$ (step S15).

Incidentally, once the Fourier transform unit 32 has completed the FFT operation, the operation sequence thereafter and before step S13 is interchangeable. For example, a sequence is conceivable which carries out the operation of the x-axis magnetic data at once such as performing step S7 and step S10 after step S4. Besides, the operation at step S13 and step S14 can be performed for the individual axis data. For example, it is possible to determine the sign from x-axis $\eta_x$, to determine the sign of the x-axis amplitude, and to calculate the sign-affixed amplitude $A_x'$. After that, it is also possible to calculate $A_y'$ and $A_z'$ from $\eta_y$ and $\eta_z$ of the y-axis and z-axis successively in the same procedure.

In the foregoing procedures, although the FFT operation is performed three times separately for the three-axis magnetic data (step S4 - step S6), it is also possible to complete the FFT for the three-axis magnetic data by executing the FFT operation twice by using complex FFT operation. For example, there is a method of putting, as for the x-axis and y-axis magnetic data, the x-axis magnetic data into the real part and the y-axis magnetic data into the imaginary part; performing the complex FFT operation; and performing, for the remaining z-axis magnetic data, the complex FFT operation after putting zeros into the imaginary part. Incidentally, as for any other FFT algorithms, it is obvious that the spatial information detecting method in accordance with the present invention is effective as long as the FFT data of the three-axis magnetic data can be obtained.

In the foregoing procedures, although the frequency component for which the amplitudes are calculated is the first frequency component, the amplitudes of the second frequency component can also be obtained, as the intensity of the signal the magnetic sensor measures, from the FFT data that have been calculated. Since they have the same signs as the amplitudes of the first frequency component, it is obvious that if the sufficient intensity is obtained for the directional data calculation, the amplitudes of the second frequency component can be used for the operation instead of the amplitudes of the first frequency component. In this case, the magnetic field vector calculated represents the second frequency component.

The foregoing description is made on the assumption that the waveform of the alternating magnetic field of the single frequency component is an ideal sinusoidal wave. However, unless it is an ideal sinusoidal wave, as long as the frequency component desired to be acquired can be separated from signals with the other signal frequency components, cases using the waveforms other than the sinusoidal wave are also included in the present invention.

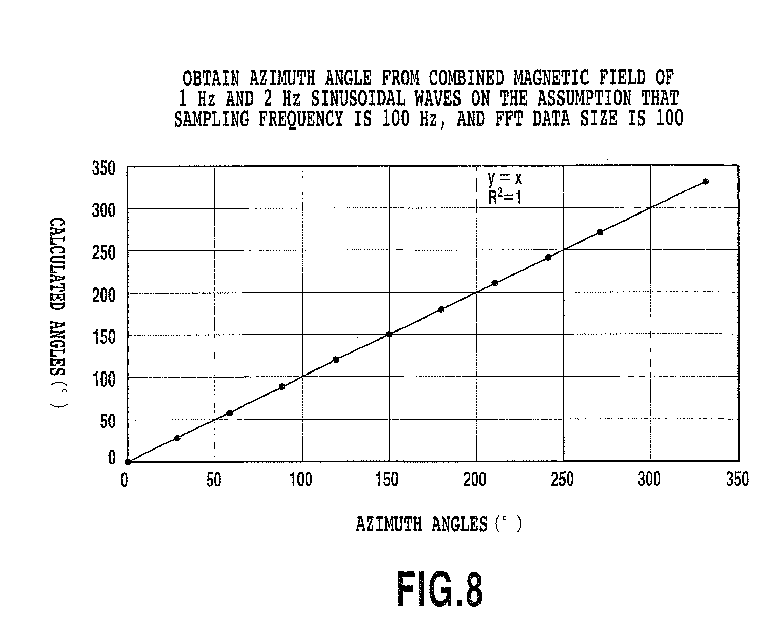

FIG. 8 is a diagram showing results of a simulation carried out on the assumption that the magnetic field having the 1 Hz and 2 Hz sinusoidal wave magnetic fields superposed is measured while rotating the azimuth angle sensor at every 30 degrees in parallel with the magnetic field. The sampling frequency was set at 100 Hz, and the amount of data during the FFT operation was 100. The set azimuth angle agrees with the calculated angle.

[EMBODIMENT 2]

<When Using Three-Axis Magnetic Sensor at Frequency Ratio of Generated Magnetic Fields M:N>

Although the configuration of the spatial information detecting system in an embodiment 2 in accordance with the present invention is the same as that of FIG. 1, the angular frequencies of the first frequency component and second frequency component of the alternating magnetic field the magnetic field generating unit 1 of FIG. 1 generates are M$\omega$ and N$\omega$, where M and N are positive integers of even and odd numbers different from each other (the frequency ratio is M:N in terms of the least integer ratio). Incidentally, the term "even and odd numbers different from each other" means that when one of them is an even number, the other of them is an odd number. Thus, M:N is an even number to an odd number or an odd number to even number. Then, applying the current generated from the power supply 1a to the coil 1b enables generating the magnetic field. As for the phases of the generated alternating magnetic field, they are $\Omega_\theta$ and $\Omega_\varphi$ at the time t = 0 for both the first frequency component and second frequency component. More specifically, when denoting the phase of the magnetic field of the first frequency component by $\Theta$, and the phase of the magnetic field of the second frequency component by $\Phi$, they are assumed to be represented as:

$$\Theta = M\omega t + \Omega_\theta \qquad \text{(Expression 16)}$$

$$\Phi = N\omega t + \Omega_\varphi \qquad \text{(Expression 17)}$$

As for FIG. 2, FIG. 3 and FIG. 4, the diagram showing the coordinate systems of the coil and information terminal, the diagram showing relationships between the direction of the information terminal and the coordinate system, and the configuration block diagram of the spatial information detecting apparatus, they are the same as those of the embodiment 1.

The alternating magnetic fields expressed in the form of the foregoing (Expression 16) and (Expression 17) are generated in a superposed manner, and in the same manner as the embodiment 1 in accordance with the present invention, the azimuth angle sensor 20a measures the three-axis magnetic data, the Fourier transform unit 32 acquires the desired amount of magnetic data from the three-axis magnetic sensor 21, and then performs the FFT operation on them.

Here, in the same manner as the embodiment 1 in accordance with the present invention, from the EFT data of the individual axes, let us denote the amplitudes of the x-axis, y-axis and z-axis by $A_x$, $A_y$ and $A_z$, likewise, the individual axis components of the phase of the first frequency component by $\theta_x$, $\theta_y$ and $\theta_z$, and the individual axis components of the phase of the second frequency component by $\varphi_x$, $\varphi_y$, and $\varphi_z$ ($0 \le \theta_x$, $\theta_y$, $\theta_z$, $\varphi_x$, $\varphi_y$, $\varphi_z < 2\pi$).

The magnetic field vector calculating unit 33 determines the signs of the amplitudes using the value for sign determination obtained from the phase relationships to decide as to which direction the positive direction of the magnetic sensor of the measured axis looks at with respect to the positive direction of the magnetic field. The following description will be made about the x-axis component. Define the amplitude sign decision value fix as

$$\eta_x = M \times \varphi_x - N \times \theta_x \qquad \text{(Expression 18)}$$

where $0 \le \eta_x < 2\pi$.

When the positive direction of the magnetic sensor is aligned to the positive direction of the gene rated magnetic field, and the phases of the first frequency component and second frequency component calculated are denoted by $\theta_x^+$ and ($\varphi_x^+$, then they are measured as:

$$\theta_x^+ = M\omega t + \Omega_\theta - 2\pi p_x^+ \qquad \text{(Expression 19)}$$

$$\varphi_x^+ = N\omega t + \Omega_\varphi - 2\pi q_x^+ \qquad \text{(Expression 20)}$$

(where $p_x^+$ and $q_x^+$ are integers for making $0 \le \theta_x^+$, $\varphi_x^+ < 2\pi$). Then, the value for sign determination $\eta_x^+$ at that time is given as follows from (Expression 18):

$$\eta_x{}^+ = (M\Omega_\varphi - N\Omega_\theta) + 2\pi (Np_x{}^+ - Mq_x{}^+) - 2\pi\nu_x{}^+$$

(Expression 21)

(where $\nu_x{}^+$ is an integer for making $0 \le \eta_x{}^+ < 2\pi$). On the other hand, when the positive direction of the magnetic sensor is opposite to the positive direction of the generated magnetic field, and the phases of the first frequency component and second frequency component calculated are denoted by $\theta x^-$ and $\varphi_x{}^-$, then they are measured as:

$$\theta_x{}^- = M\omega t + \Omega_\theta + \pi - 2\pi p_x{}^- \qquad \text{(Expression 22)}$$

$$\varphi_x{}^- = N\omega t + \Omega_\varphi + \pi - 2\pi q_x{}^- \qquad \text{(Expression 23)}$$

(the phases are shifted by $\pi$. In addition, $P_x{}^-$ and $q_x{}^-$ are integers for making $0 \le \theta_x{}^-$, $\varphi_x{}^- < 2\pi$). The value for sign determination $\eta_x{}^-$ in this case is given as follows from (Expression 18):

$$\eta_x{}^- = (M\Omega_\varphi - N\Omega_\theta) + \pi (M - N) + 2\pi (Np_x{}^- - Mq_x{}^-)$$
$$- 2\pi\nu_x{}^- \qquad \text{(Expression 24)}$$

(where $\nu_x{}^-$ is an integer for making $0 \le \eta_x{}^- < 2\pi$). As in the embodiment 1 in accordance with the present invention, $\eta_x{}^+$ of (Expression 21) and $\eta_x{}^-$ of (Expression 24) must be different to decide the relationships between the direction of the generated magnetic field and the direction of the magnetic sensor. Accordingly, it is necessary to select M and N in such a manner that

$$M - N \neq 2j \text{ (where j is an integer )} \qquad \text{(Expression 25)}$$

and

$$Np_x{}^+ - Mq_x{}^+, \text{ and } Np_x{}^- - Mq_x{}^-$$

are always integers. Thus, M and N are even and odd integers different from each other. In other words, unless M - N is an even number, $\eta_x{}^+$ of (Expression 21) and $\eta_x{}^-$ of (Expression 24) can be distinguished. It is enough that one of the numbers M and N is an even number and the other is an odd number.

In this way, since the value for sign determination $\eta_x$ calculated from (Expression 18) can be distinguished as $\eta_x{}^+$ of (Expression 21) and $\eta_x{}^-$ of (Expression 24), the relationships between the direction of the generated magnetic field and the direction of the magnetic sensor are also distinguishable. As for Sign($A_x$), it is enough to set the function in advance in such a manner that the positive and negative signs can be calculated in accordance with the relationships between the direction of the generated magnetic field and the direction of the magnetic sensor using $\eta_x{}^+$ of (Expression 21) and $\eta_x{}^-$ of (Expression 24).

In the case of

$$M\Omega_\varphi - N\Omega_\theta = \pi/2 \qquad \text{(Expression 26)}$$

the following expression holds.

$$Sign(A_x) = Sign(Sin(\eta_x)) \qquad \text{(Expression 27)}$$

Likewise, from the value for sign determination $\eta_y$ and $\eta_z$ of the y-axis and z-axis, the signs of the amplitudes of the y-axis and z-axis are obtained, followed by obtaining the sign-affixed amplitudes. Assuming that the sign-affixed amplitudes of the x-axis, y-axis and z-axis are $A_x'$, $A_y'$ and $A_z'$, then they are calculated as:

$$A_x' = Sign(A_x) \times A_x \quad \text{(Expression 28)}$$

$$A_y' = Sign(A_y) \times A_y \quad \text{(Expression 29)}$$

$$A_z' = Sign(A_z) \times A_z \quad \text{(Expression 30)}$$

Since the magnetic field vector is obtained in the foregoing manner, the magnetic field vector obtained is transmitted to the direction calculating unit 34 in the same manner as the embodiment 1 in accordance with the present invention (if it is desired to normalize the magnetic field vector, it can be normalized). The direction calculating unit 34 calculates the directional data $\Psi$ in the same manner as in the embodiment 1 in accordance with the present invention.

As described above, a range of choice of the frequencies used can be increased by expanding the frequency ratio of the alternating magnetic fields to be superposed from 1:2 of the embodiment 1 in accordance with the present invention to M:N. It goes without saying that 1: 2 of the embodiment 1 in accordance with the present invention is included in M:N of the embodiment 2 in accordance with the present invention in general. In addition, since the foregoing method can perform the direction detection if the phases $\Omega_\theta$ and $\Omega_\varphi$ have been determined at the time of generating the magnetic field, the phases of the first frequency and second frequency need not always agree with each other, but can differ. In addition, as in the embodiment 1 in accordance with the present invention, since the phase calculation from the data synchronized with the magnetic field is not required to determine the signs of the amplitudes, it is possible to select the timing of measurement freely, and to perform continuous measurement. Thus, it is not necessary to employ the complex configuration for superposing the signals intermittently as in the foregoing Patent Document 1.

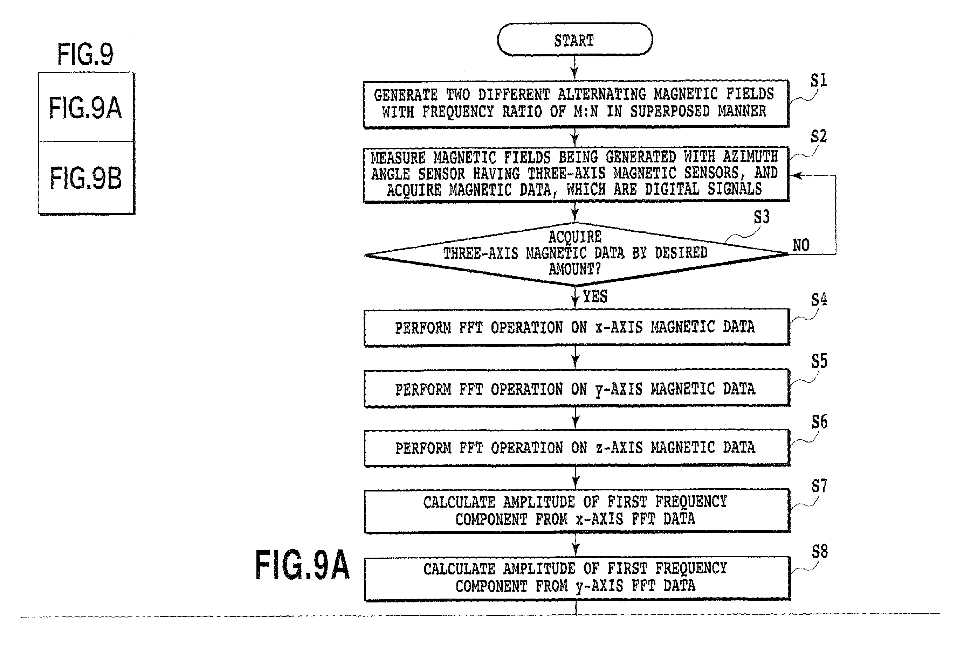

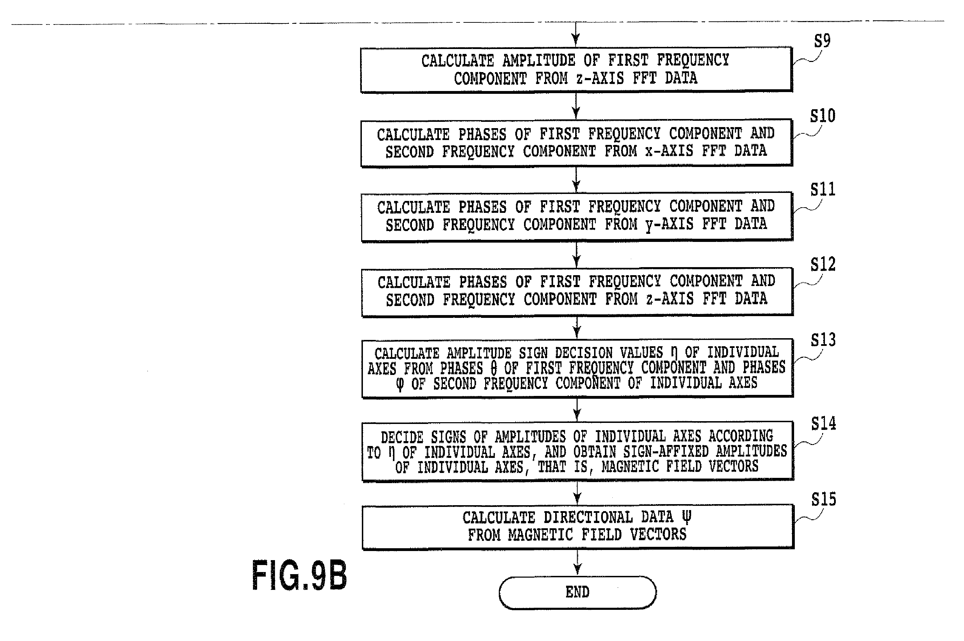

FIG. 9A and FIG. 9B are flowcharts for explaining the operation of the embodiment 2 of the spatial information detecting system in accordance with the present invention. First, the magnetic field generating unit 1 generates two different alternating magnetic fields in a superposed manner at a frequency ratio M:N (step S1). Next, the azimuth angle sensor 20a having the three-axis magnetic sensor 21 measures the magnetic fields the magnetic field generating unit 1 generates, and acquires the magnetic data of the individual axes, which are digital signals (step S2). Next, the Fourier transform unit 32 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 32 performs the FFT operation on the desired amount of x-axis magnetic data acquired (step S4). Likewise, it performs the FFT operation on the y-axis magnetic data next (step S5). Likewise, it performs the FFT operation on the z-axis magnetic data next (step S6).

Next, it calculates the amplitude $A_x$ of the first frequency component from the x-axis FFT data (step S7). Likewise, it calculates the amplitude $A_y$ of the first frequency component from the y-axis FFT data next (step S8). Likewise, it calculates the amplitude $A_z$ of the first frequency component from the z-axis FFT data next (step S9).

Next, it calculates the phases $\theta_x$ and $\varphi_x$ of the first frequency component and second frequency component from the x-axis FFT data (step S10). Likewise, it calculates the phases $\theta_y$ and $\varphi_y$ of the first frequency component and second frequency component next from the y-axis FFT data (step S11). Likewise, it calculates the phases $\theta_z$ and $\varphi_z$ of

the first frequency component and second frequency component from the z-axis FFT data next (step S12).

Next, the magnetic field vector calculating unit 33 calculates according to (Expression 18) the value for sign determination $\eta_x$, $\eta_y$ and $\eta_z$ of the individual axes from the calculated $\theta_x$, $\theta_y$, $\theta_z$, $\varphi_x$, $\varphi_y$ and $\varphi_z$ (step S13), determines the signs of the amplitudes of the individual axes from the calculated value for sign determination $\eta_x$, $\eta_y$ and $\eta_z$, and calculates the sign-affixedamplitudes, that is, the magnetic field vector (step S14). Next, from the magnetic field vector, the direction calculating unit 34 calculates the directional data $\Psi$ (step S15).

Once the Fourier transform unit 32 has completed the FFT operation, the operation sequence thereafter and before step S13 is interchangeable. For example, a sequence is conceivable which carries out the operation of the x-axis magnetic data at once such as performing step S7 and step S10 after step S4. Besides, the operation at step S13 and step S14 can be performed for the individual axis data. For example, it is possible to determine the sign from x-axis $\eta_x$, to determine the sign of the x-axis amplitude, and to calculate the sign-affixed amplitude $A_x$'. After that, it is also possible to calculate $A_y$' and $A_z$' from $\eta_y$ and $\eta_z$ of the y-axis and z-axis successively in the same procedure.

In the foregoing procedures, although the FFT operation is performed three times separately for the three-axis magnetic data (step S4 - step S6), it is also possible to complete the FFT for the three-axis magnetic data by executing the FFT operation twice by using complex FFT operation. For example, there is a method of putting, as for the x-axis and y-axis magnetic data, the x-axis magnetic data into the real part and the y-axis magnetic data into the imaginary part; performing the complex FFT operation; and performing, for the remaining z-axis magnetic data, the complex FFT operation after putting zeros into the imaginary part. Incidentally, as for any other FFT algorithms, it is obvious that the spatial information detecting method in accordance with the present invention is effective as long as the FFT data of the three-axis magnetic data can be obtained.

In the foregoing procedures, although the frequency component for which the amplitudes are calculated is the first frequency component, it is obvious that as the intensity of the signal the magnetic sensor measures, the amplitudes of the second frequency component can also be used in the same manner as in the embodiment 1.

In addition, as in the embodiment 1, unless the waveform of the alternating magnetic field of the single frequency component is an ideal sinusoidal wave, as long as the frequency component desired to be acquired can be separated from signals with the other signal frequency components, cases using the waveforms other than the sinusoidal wave are also included in the present invention.

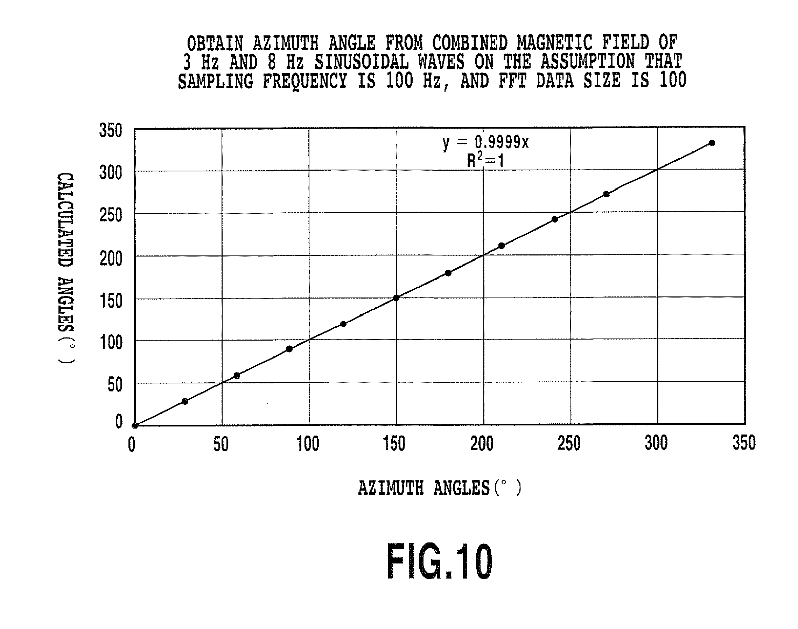

FIG. 10 is a diagram showing results of a simulation carried out on the assumption that the magnetic field having 3 Hz and 8 Hz sinusoidal wave magnetic fields superposed is measured while rotating the azimuth angle sensor at every 30 degrees in parallel with the magnetic field. The sampling frequency was set at 100 Hz, and the amount of data during the FFT operation was 100. It is found that the set azimuth angle agrees with the calculated angle.

[EMBODIMENT 3]

<When Using Two-Axis Magnetic Sensor at Frequency Ratio of Generated Magnetic Fields M:N>

An embodiment 3 in accordance with the present invention shows a case having a single magnetic field generating means for generating at a frequency ratio M:N and a two-axis magnetic sensor 21. When the information terminal 2 is fixed on a horizontal plane, the azimuth angle sensor 20a has only two-axis magnetic sensors 21a, 21b of the x-axis and y-axis, which can detect the direction of the magnetic field in the same procedure as in the embodiment 1 in accordance with the present invention or the embodiment 2 in accordance with the present invention.

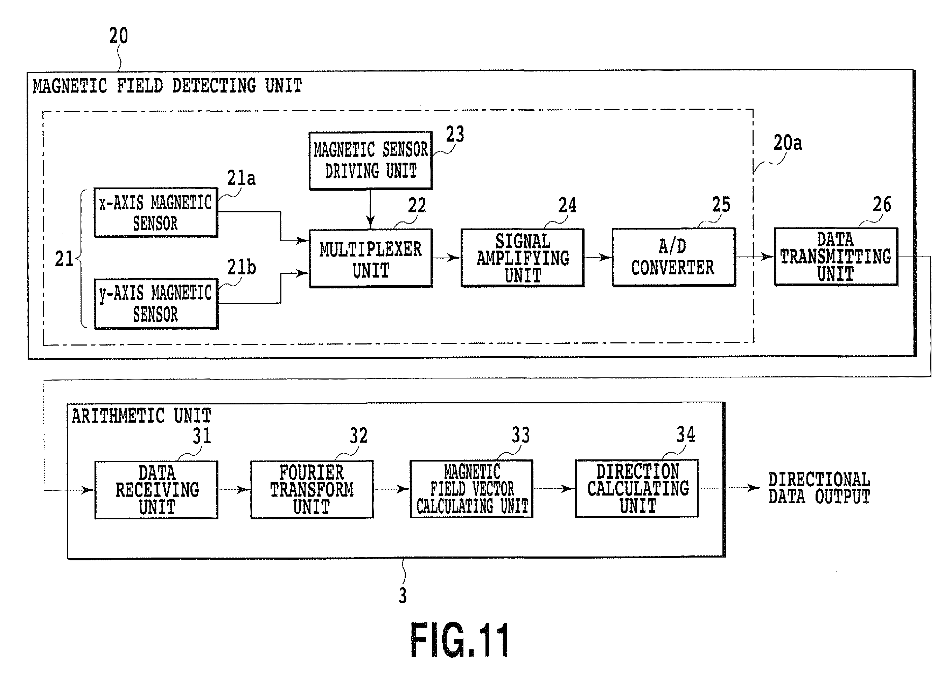

FIG. 11 is a block diagram showing a concrete configuration of the spatial information detecting apparatus of the embodiment 3 in the spatial information detecting system in accordance with the present invention, that is, a block diagram showing a configuration of the spatial information detecting apparatus in accordance with the present invention employing a two-axis magnetic sensor 21. FIG. 11 differs from FIG. 4 of the foregoing embodiment 1 in the number of the magnetic sensors 21, and includes only two axes of the x-axis and y-axis. The remaining configuration and operation are the same as those of FIG. 4.

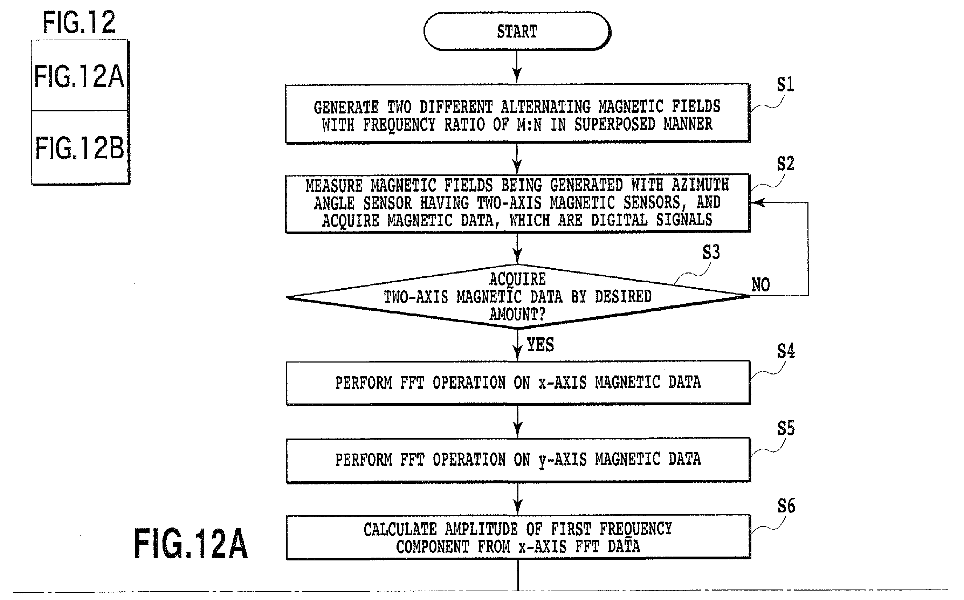

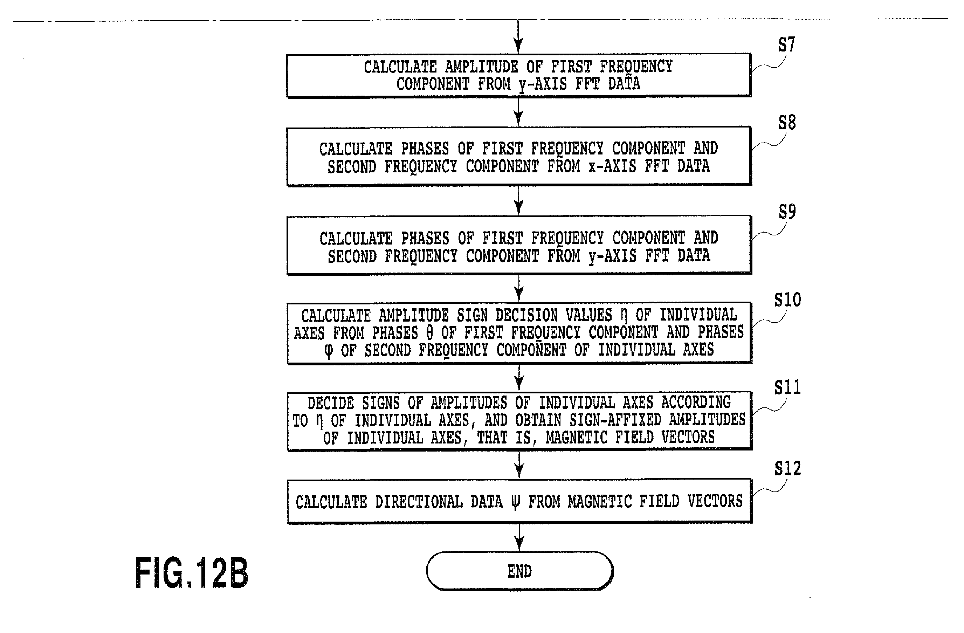

FIG. 12A and FIG. 12B are flowcharts for explaining the operation of the embodiment 3 of the spatial information detecting system in accordance with the present invention, that is, a flowchart showing a procedure of a direction detecting method when the magnetic sensor has two axes. First, the magnetic field generating unit 1 generates two different alternating magnetic fields in a superposed manner at a frequency ratio M: N (step S1). Next, the azimuth angle sensor 20a having the two-axis magnetic sensor 21 measures the magnetic fields the magnetic field generating unit 1 generates, and acquires magnetic data of the individual axes, which are digital signals (step S2). Next, the Fourier transform unit 32 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 32 performs the FFT operation on the desired amount of x-axis magnetic data acquired (step S4). Likewise, it performs the FFT operation on the y-axis magnetic data next (step S5). Next, it calculates

the amplitude $A_x$ of the first frequency component from the x-axis FFT data (step S6). Likewise, it calculates the amplitude $A_y$ of the first frequency component from the y-axis FFT data next (step S7).

Next, it calculates from the x-axis FFT data the phases $\theta_x$ and $\varphi_x$ of the first frequency component and second frequency component (step S8). Likewise, it calculates from the y-axis FFT data the phases $\theta_y$ and $\varphi_y$ of the first frequency component and second frequency component next (step S9).

Next, the magnetic field vector calculating unit 33 calculates according to (Expression 18) the amplitude sign decision values $\eta_x$ and $\eta_y$ of the individual axes from the calculated $\theta_x$, $\theta_y$, $\varphi_x$, and $\varphi_y$ (step S10), determines the signs of the amplitudes of the individual axes from the calculated amplitude sign decision values $\eta_x$ and $\eta_y$, and calculates the sign-affixed amplitudes, that is, the magnetic field vector (step S11). Next, from the magnetic field vector, the direction calculating unit 34 calculates the directional data $\Psi$ (step S12).

According to the foregoing procedure, the directional data $\Psi$, which is the spatial information, can be calculated. To calculate the directional data $\Psi$ successively, it is enough to return to step 2.

In the foregoing embodiments 1 to 3, the coil for generating the magnetic field is described as a single coil. However, it is also possible to place the information terminal in such a manner as to be sandwiched between Helmholtz coils to generate from the Helmholtz coils the magnetic field described in the embodiments 1 to 3.

Incidentally, an arbitrary attitude of the information terminal 2 can be detected by using a plurality of coils for generating the alternating magnetic field as in the foregoing embodiments, and by applying the same method. In the embodiments 1 - 3, a degree of freedom of the movement along the axis of the generating direction of a single alternating magnetic field remains. However, generating another alternating magnetic field makes it possible to reduce the degree of freedom, and comes to being able to determine the arbitrary attitude. Accordingly, the arbitrary attitude can be detected with the azimuth angle sensor 20a as described in the embodiments. It uses the method which will be described in the embodiments below.

Next, detection of the position and attitude using a uniform magnetic field and a non uniform magnetic field will be described below.

As for the detection of the position and attitude using the uniform magnetic field and nonuniform magnetic field, there are cases of generating a Zg axis magnetic field and a position detective magnetic field from separate coils (embodiment 4), and of generating the Zg axis magnetic field and position detective magnetic field from a single coil (embodiment 5). These embodiments will be described below.

[EMBODIMENT 4]

<When Generating Zg Axis Magnetic Field and Location Detective Magnetic Field from Separate Coils>

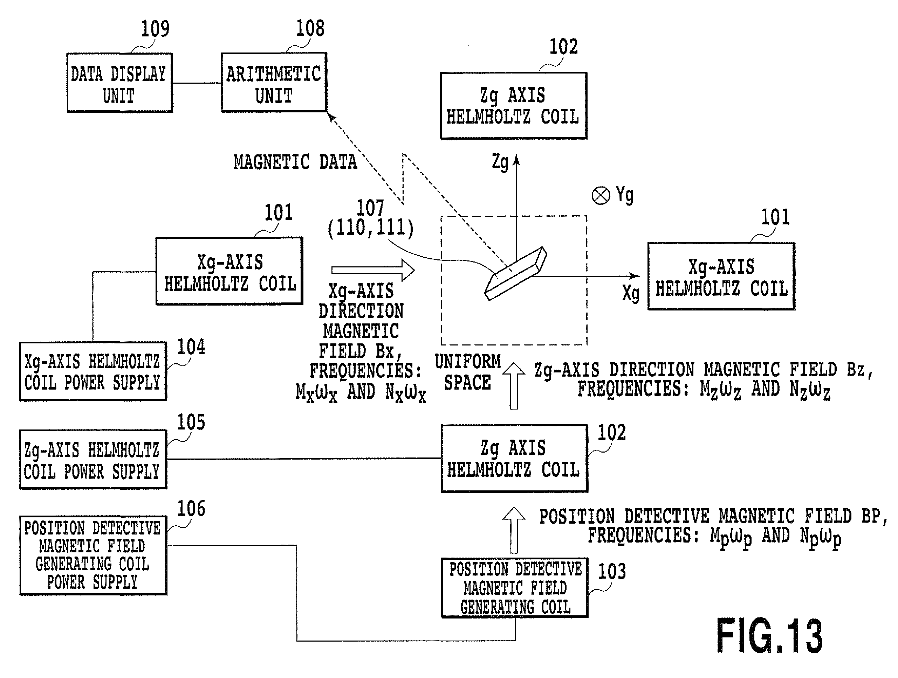

FIG. 13 is a diagram showing a general configuration of an embodiment 4 of the spatial information detecting system in accordance with the present invention. The spatial information detecting system comprises a nonuniform magnetic field generating unit (a position detective magnetic field generating coil 103 and a position detective magnetic field generating power supply 106) for generating, as a magnetic field generating unit, an alternating nonuniform magnetic field which has a plurality of different frequency components with known phase relationships, and which varies its direction or magnitude depending on the position; two uniform magnetic field generating units (Xg-axis Helmholtz coils 101 and an Xg-axis Helmholtz coil power supply 104, and Zg axis Helmholtz coils 102 and a Zg axis Helmholtz coil power supply 105) for generating an alternating uniform magnetic field which has a plurality of different frequency components with known phase relationships; a magnetic field detecting unit 111 having a multiaxial magnetic sensor for detecting the alternating magnetic field generated from the nonuniform magnetic field generating unit and the alternating magnetic field generated from the uniform magnetic field generating unit; and an arithmetic unit 108 for calculating the attitude information of the magnetic field detecting unit 111 from the output signal of the magnetic field detecting unit 111 based on the alternating uniform magnetic field generated from the two uniform magnetic field generating units, and for calculating the position information of the magnetic field detecting unit 111 from its attitude information and the output signal of the magnetic field detecting unit 111 based on the alternating nonuniform magnetic field generated from the nonuniform magnetic field generating unit.

In other words, the spatial information detecting system comprises the Xg-axis Helmholtz coils 101, Zg axis Helmholtz coils 102, position detective magnetic field generating coil 103, Xg-axis Helmholtz coil power supply 104, Zg axis Helmholtz coil power supply 105, position detective magnetic field generating power supply 106, information terminal 107 including the magnetic field detecting unit 111, arithmetic unit 108, and data display unit 109. The information terminal 107, arithmetic unit 108 and data display unit 109 constitute the spatial information detecting apparatus.

The right-hand XgYgZg coordinate system is defined (which is an absolute coordinate system in which the Xg-axis, Yg-axis and Zg axis are orthogonal to each other), and the Xg-axis Helmholtz coils 101 and Zg axis Helmholtz coils 102, which have a pair of Helmholtz coils each, are arranged in such a manner that their central axes are placed along the Xg-axis and Zg axis, respectively.

The Yg-axis has the direction in which a right-handed screw will advance when rotated in the direction from the Zg axis to the Xg-axis (the direction from this side to the other side of the sheet of FIG. 13). The Xg-axis Helmholtz coils 101 can generate an alternating uniform magnetic field Bx (Xg-axis direction magnetic field) that will be uniform in the Xg-axis direction near the center between the coils. Likewise, the Zg axis Helmholtz coils 102 can generate an alternating uniform magnetic field Bz (Zg-axis direction magnetic field) that will be uniform in the Zg-axis direction near the center between the coils. The space in which both the Xg-axis Helmholtz coils 101 and Zg axis Helmholtz coils 102 can generate the uniform magnetic field is referred to as a uniform space. The block denoted by broken lines in FIG. 13 represents the uniform space.

Then, the position detective magnetic field generating coil 103 having the central axis along the Zg axis is placed alone. The position detective magnetic field generating coil 103 generates an alternating non uniform magnetic field Bp (position detective magnetic field) whose direction or magnitude is different at any arbitrary positions within the uniform space the individual Helmholtz coils form.

The Xg-axis Helmholtz coil power supply 104, Zg axis Helmholtz coil power supply 105 and position detective magnetic field generating power supply 106 feed the foregoing individual coils, the Xg-axis Helmholtz coils 101, Zg axis Helmholtz coils 102 and position detective magnetic field generating coil 103, with two alternating currents (or voltages) with different frequencies in a superposed manner.

The alternating current (or voltage) from the Xg-axis Helmholtz coil power supply 104 has first and second angular frequencies of $M_x\omega_x$ and $N_x\omega_x$, where $M_x$ and $N_x$ are different positive even and odd integers (the frequency ratio is $M_x:N_x$ in terms of the least integer ratio). For example, $M_x = 1$ and $N_x = 2$ can be employed. Likewise, the Zg axis Helmholtz coil power supply 105 generates an alternating current (or voltage) with angular frequencies $M_z\omega_z$ and $N_z\omega_z$, and the position detective magnetic field generating power supply 106 generates an alternating current (or voltage) with angular frequencies $M_p\omega_p$ and $N_p\omega_p$. It is assumed that the angular frequencies differ from each other.

Then, feeding the individual coils with the currents from the individual power supplies makes it possible to generate the magnetic fields, and the magnetic fields generated from the individual coils, the Xg-axis direction magnetic field Bx, Zg axis direction magnetic field Bz and position detective magnetic field Bp, have angular frequencies with combinations of $M_x\omega_x$ and $N_x\omega_x$, $M_z\omega_z$ and $N_z\omega_z$, and $M_p\omega_p$ and $N_p\omega_p$, respectively.

Then, the phase relationships between the individual frequency components Bx, Bz and Bp can be expressed in the same manner as in the embodiment 2. For example, assume that the phases $\Theta x$ and $\Phi x$ of the first and second frequency components of Bx are expressed as follows.

$$\Theta_x = M_x\omega_x t + \Omega_{\theta x} \qquad \text{(Expression 31)}$$

$$\Phi_x = N_x\omega_x t + \Omega_{\varphi x} \qquad \text{(Expression 32)}$$

(both first frequency component and second frequency component are assumed to have phases $\Omega_{\theta x}$ and $\Omega_{\varphi x}$ at time t = 0). As for Bz and Bp, it is assumed that they are expressed in the same fashion.

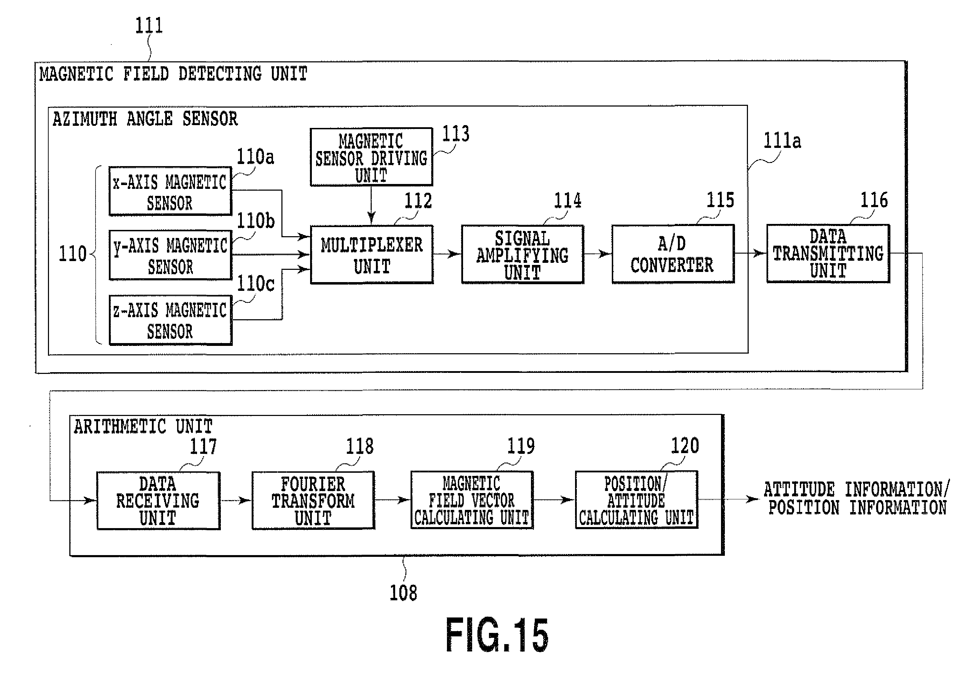

Within the uniform space, the information terminal 107 is placed. The information terminal 107 includes the magnetic field detecting unit 111 (having an azimuth angle sensor 111a and a data transmitting unit 116, see FIG. 15 which will be described later) for detecting the magnetic fields generated from the foregoing individual coils. The azimuth angle sensor 111a has a three-axis magnetic sensor 110 including an x-axis magnetic sensor 110a, a y-axis magnetic sensor 110b and a z-axis magnetic sensor 110c facing planes perpendicular to each other.

The magnetic sensors 110a - 110c are a semiconductor magnetic sensor such as a Hall element, MR element, GMR element, or MI element, each. In addition, the data transmitting unit 116 can transmit the magnetic data, which is obtained by converting the magnetic field the three-axis magnetic sensor 110 in the azimuth angle sensor 111a detects to the digital signal, to a data receiving unit 117 in the arithmetic unit 108 outside the information terminal 107. Incidentally, FIG. 13 shows a state in which the data transmitting unit 116 in the information terminal 107 transmits the magnetic data to the arithmetic unit 108 by radio (the Z-shaped broken arrow represents the magnetic data transmitted by radio).

According to applications, the information terminal 107 can be connected to the arithmetic unit 108 by wire rather than by radio for transmitting and receiving data. In addition, although the arithmetic unit 108 is placed outside the information terminal 107, it can be placed inside the information terminal 107 to exchange the data with the data display unit 109 outside the information terminal 107. In this case, the data can be transferred either by radio of by wire depending on applications.

Incidentally, the information terminal 107 refers to various terminals as described in the embodiment 1. In addition, the arithmetic unit 108 also refers to various arithmetic units as in the embodiment 1. Furthermore, the data display unit 109, which is a section having a function of displaying the output signal of the arithmetic unit 108 to a user, can be constructed using a display for a device such as a mobile phone, a PDA, a game machine, a measuring instrument, or a PC, for example.

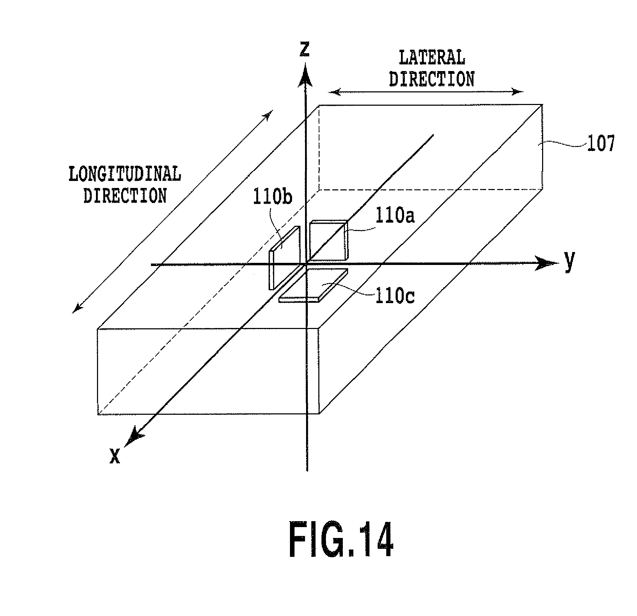

FIG. 14 is a diagram showing a coordinate system of the information terminal 107. The right-hand xyz coordinate system (referred to as "terminal coordinate system") is defined by assigning the longitudinal direction of the information terminal 107 to the x-axis, the lateral direction to the y-axis, and the direction perpendicular to the x-axis and y-axis to the z-axis. In addition, the directions of the three-axis magnetic sensor 110 the azimuth angle sensor 111a mounted on the information terminal 107 has, which are orthogonal to each other, are assumed to agree with the directions of the individual axes of the xyz coordinate system. More specifically, there are magnetic sensors (110a to 110c) of the x-axis, y-axis and z-axis, and directions in which the respective outputs increase (positive directions) are positive directions of the individual axes of the xyz coordinate system.

Then, the arithmetic unit 108 calculates from the received magnetic data the position information and attitude information representing the position and attitude of the information terminal 107 with respect to the absolute coordinate system, and transmits to the data display unit 109. Thus, the user can find the position and attitude of the information terminal 107 on the data display unit 109.

FIG. 15 is a block diagram showing a concrete configuration of the spatial information detecting apparatus of the embodiment 4 of the spatial information detecting system in accordance with the present invention. The spatial information detecting apparatus comprises the magnetic field detecting unit 111 and the arithmetic unit 108. The arithmetic unit 108 has the data receiving unit 117, the Fourier transform unit 118, the magnetic field vector calculating unit 119 and a position/attitude calculating unit 120. The magnetic field detecting unit 111 comprises the azimuth angle sensor 111a and data transmitting unit 116 as described above.

The azimuth angle sensor 111a comprises the three-axis magnetic sensor 110 including the x-axis magnetic sensor 110a, y-axis magnetic sensor 110b and z-axis magnetic sensor 110c; the multiplexer unit 112 for selecting one of the axes of the three-axis magnetic sensor 110 and for acquiring the output signal from the magnetic sensor of the axis selected; the magnetic sensor driving unit 113 for driving the magnetic sensor 110 via the multiplexer unit 112; the signal amplifying unit 114 for amplifying the output signal from the multiplexer unit 112; and the A/D converter 115 for performing A/D conversion of the amplified signal from the signal amplifying unit 114, and outputting to the data transmitting unit 116. The data transmitting unit 116 transmits the signal passing through the conversion by the A/D converter 115 to the arithmetic unit 108.

With the configuration, the magnetic sensor driving unit 113 drives the magnetic sensors 110a - 110c) via the multiplexer unit 112. The multiplexer unit 112 selects the magnetic sensor of the axis to be measured. The signal of the magnetic sensor of the axis selected is amplified to an appropriate magnitude by the signal amplifying unit 114, and is converted from an analog signal to a digital signal by the A/D converter 115. The conversion to the digital signal is performed on the signal from the magnetic sensor 110 of each axis. The digitized signal is transmitted from the data transmitting unit 116 to the arithmetic unit 108 as magnetic data.

The arithmetic unit 108 comprises, as described above, the data receiving unit 117, the Fourier transform unit 118, the magnetic field vector calculating unit 119 and the position/attitude calculating unit 120.

With the configuration, the data receiving unit 117 receives the magnetic data from the data transmitting unit 116 in the magnetic field detecting unit 111, and delivers to the Fourier transform unit 118. The Fourier transform unit 118, after acquiring from the data receiving unit 117 a desired amount of magnetic data (the number of data is 128 when a frequency resolution of 1 Hz is necessary in the case of measuring at the sampling frequency 128 Hz, for example) from the three-axis magnetic sensor 110, and performs the FFT operation on them. Then, it calculates, from the FFT operation results of the individual axes, the signal intensities (amplitudes) and phases of the individual frequency components (of the plurality of frequency components with the angular frequency components of $M_x\omega_x$ and $N_x\omega_x$, $M_z\omega_z$ and $N_z\omega_z$, and $M_p\omega_p$ and $N_p\omega_p$) of the alternating magnetic fields Bx, Bz, and Bp generated from the individual coils for the respective axes (it is assumed here that the amplitudes of the frequency components of $M_x\omega_x$, $M_z\omega_z$, and $M_p\omega_p$ of the individual axes are calculated, and that the phases of the frequency components of $M_x\omega_x$ and $N_x\omega_x$, $M_z\omega_z$ and $N_z\omega_z$, and $M_p\omega_p$ and $N_p\omega_p$ are calculated), and delivers to the magnetic field vector calculating unit 119.

The magnetic field vector calculating unit 119 calculates, from the amplitudes and phases of the plurality of frequency components of the individual axes fed from the Fourier transform unit 118, magnetic field vectors $m_x$, $m_z$ and $m_p$ of the frequency components with the angular frequencies $M_x\omega_x$, $M_z\omega_z$ and $M_p\omega_p$ by calculating the signs of the amplitudes of the individual axes by applying the phase relationships between the plurality of frequency components of the individual axes for the individual magnetic fields by the method described in the embodiment 2 in accordance with the present invention. More specifically, according to the method described in the embodiment 2 in accordance with the present invention, $m_x$ is calculated from the amplitude of the frequency component $M_x\omega_x$ and from the phase relationships between the frequency components $M_x\omega_x$ and $N_x\omega_x$. Likewise, $m_z$ is calculated from the amplitude of the frequency component $M_z\omega_z$ and from the phase relationships between the frequency components $M_z\omega_z$ an $N_z\omega_z$; and $m_p$ is calculated from the amplitude of the frequency component $M_p\omega_p$ and from the phase relationships between the frequency

components $M_p\omega_p$ and $N_p\omega_p$. They constitute vectors representing the directions and magnitude of the magnetic fields Bx, Bz and Bp with the angular frequency components of $M_x\omega_x$, $M_z\omega_z$ and $M_p\omega_p$ in the terminal coordinate system. More specifically, $m_x$ and $m_z$ are each a uniform magnetic field vector representing the direction and magnitude of the uniform magnetic field, and $m_p$ serving as the attitude detective magnetic field vector is a non uniform magnetic field vector representing the direction and magnitude of the nonuniform magnetic field, and is used as the position detective magnetic field vector.

Incidentally, the magnetic field vectors can be obtained from the sign-affixed amplitudes $A_x'$, $A_y'$ and $A_z'$ detected from the magnetic sensor 110 of the x-axis, y-axis and z-axis. For example, assuming that the sign-affixed amplitudes for the Xg-axis direction magnetic field Bx is A_x' ($M_x\omega_x$), A_y' ($M_x\omega_x$) and A_z' ($M_x\omega_x$), the magnetic field vector $m_x$ is expressed by

$$m_x = (A\_x'(M_x\omega_x), \ A\_y'(M_x\omega_x), \ A\_z'(M_x\omega_x))^T$$

$$\text{(Expression 33)}$$

(where $X^T$ represents a transpose of X, and the vector expresses a column vector). Likewise, $m_z$ and $m_p$ can be calculated from the amplitudes and phases of the respective frequency components of Bz and Bp on the individual axes.

Then, the position/attitude calculating unit 120 calculates the attitude information and position information of the information terminal 107 from the magnetic field vectors $m_x$, $m_z$ and $m_p$ the magnetic field vector calculating unit 119 calculates, and delivers to the data display unit 109.

Here, an example of the procedure through which the position/attitude calculating unit 120 calculates the attitude information and position information about the information terminal 107 will be described.

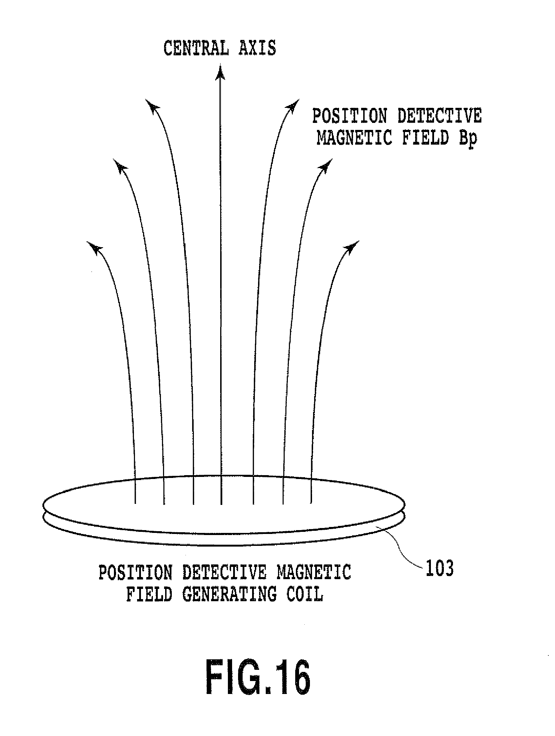

FIG. 16 is a schematic diagram showing the direction the position detective magnetic field Bp takes. The direction of the magnetic field the position detective magnetic field generating coil 103 generates spreads symmetrically with respect to the central axis of the coil (Zg axis) in a radial manner. Since the nonuniform magnetic field Bp varies its direction or magnitude depending on the position, the position of the information terminal 107 can be determined by measuring the Bp.

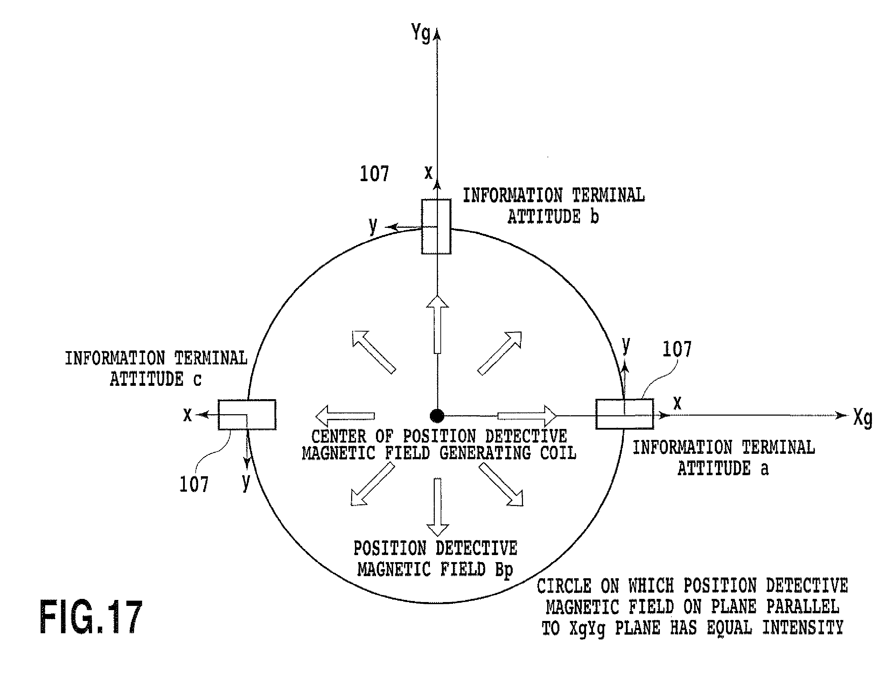

For example, FIG. 17 is a diagram showing a state of the position detective magnetic field Bp produced from the position detective magnetic field generating coil 103, which is seen from an upper part of the Zg axis. The XgYg plane spreads about the origin located at the center of the position detective magnetic field generating coil 103. Since Bp spreads in a radial manner from the center of the position detective magnetic field generating coil 103, positions with equal intensity form a circle on a plane parallel to the XgYg plane.

In FIG. 17, at different positions on the equal intensity circle, attitudes a, b and c of the information terminal 107 are drawn in the case where the information terminal is placed in parallel with the XgYg plane (the x-axis and y-axis of the terminal coordinate system are parallel with the XgYg plane), and the x-axis of the terminal coordinate system points in the direction of outside normal to a tangent to the circle. Although the attitudes a, b and c differ in the attitude and position with respect to the XgYg coordinates of the absolute coordinate system, the magnetic field vector $m_p$ measured on the terminal coordinate system is the same. Accordingly, obtaining the attitude information for distinguishing between the attitudes a, b and c makes it possible to find the relationships between the absolute coordinate system and terminal coordinate system, to represents the magnetic field vector $m_p$ on the terminal coordinate system on the absolute coordinate system, and to determine the position at which Bp is measured on the equal intensity circle, thereby being able to decide the position at which the information terminal 107 is situated. For example, if the information terminal 107 further includes an acceleration sensor using a capacitive or piezoresistive element, further detects geomagnetism with the magnetic field detecting unit 111, and detects the attitude of the information terminal 107 in advance by using the geomagnetism and acceleration, the position can be determined using the nonuniform magnetic field as described above. Alternatively, the information terminal 107 can include a vibratory gyro sensor using a piezoelectric element and an acceleration sensor, have a function of detecting an arbitrary attitude of the information terminal 107 (magnetic field detecting unit 111), calculate the attitude information, and determine the position using the attitude information and the foregoing nonuniform magnetic field (see an embodiment 8 which will be described later).

Thugs, the attitude information about the information terminal 107 is obtained first. Here, a method of calculating the attitude information using a uniform alternating magnetic field will be described below.

From the uniform magnetic field vectors $m_x$ and $m_z$ on the terminal coordinate system the magnetic field vector calculating unit 119 calculates, orthonormal base vectors $e_x$, $e_y$ and $e_z$ representing the absolute coordinate system can be expressed as follows.

$$e_x = m_x / |m_x| \qquad (\text{Expression } 34)$$

$$e_y = m_z \times m_x / |m_z \times m_x| \qquad (\text{Expression } 35)$$

$$e_z = m_z / |m_z| \qquad (\text{Expression } 36)$$

where $|x|$ represents the absolute value of x, and $\times$ is an operator representing an exterior product operation between vectors. Then, assuming that $X = (e_x\ e_y\ e_z)$ represents a $3 \times 3$ matrix, an arbitrary vector $r_g$ on an arbitrary absolute coordinate system can be represented as a vector r on the terminal coordinate system by the following transformation.

$$X r_g = r \qquad (\text{Expression } 37)$$

Thus, from the vector r on the terminal coordinate system, using

$$r_g = X^{-1} r = X^T r \qquad (\text{Expression } 38)$$

makes it possible to transform it to the vector $r_g$ on the absolute coordinate system.

As for $X^T$, it is a matrix consisting of the orthonormal bases of the terminal coordinate system seen from the absolute coordinate system, and constitutes the attitude information indicating the attitude of the information terminal 107 as well. For example, the longitudinal direction of the information terminal 107 (x-axis direction of the terminal coordinate system) is expressed by $r_x = (1, 0, 0)^T$. Transforming the vector to the vector $r_{xg} = (Rx, Ry, Rz)^T$ expressed on the absolute coordinate system by $X^T$, the individual components of the vector will be the components of the first column of $X^T$. Then, the angle $\Psi$ which the longitudinal direction forms with the Xg-axis and the angle $\alpha$ which the longitudinal direction forms with the XgYg plane can be calculated by the following Expressions.

$$\Psi = \tan^{-1}(Ry/Rx) \qquad (\text{Expression } 39)$$

$$\alpha = \tan^{-1}(Rz/(Rx^2 + Ry^2)^{1/2}) \qquad (\text{Expression } 40)$$

The angles indicate the attitude of the information terminal 107 in the longitudinal direction. Likewise, using the second column of $X^T$ and third column of $X^T$, the lateral direction $r_y = (0, 1, 0)^T$ and the z-axis direction $r_z = (0, 0, 1)^T$ of the terminal coordinate system can be used to indicate the attitude information. Thus, the attitude information indicating the arbitrary attitude of the information terminal 107 can be obtained. Incidentally, the attitude can be expressed not only by the foregoing method, but by Euler angles (angle of yaw, angle of pitch, angle of roll and the like) serving as the attitude information because of the transformation from the terminal coordinate system to the absolute coordinate system.

Then, since the coordinate transformation from the terminal coordinate system to the absolute coordinate system becomes possible, a vector $J_p$, which results from transforming the nonuniform magnetic field vector $m_p$ to the absolute coordinate system, can be obtained.

$$J_p = X^T m_p \qquad (\text{Expression } 41)$$

Then, assuming that the position detective magnetic field Bp produced from the position detective magnetic field generating coil 103 is Bp = (Bpx, Bpy, Bpz)$^T$ at an arbitrary coordinate point $r_p$ = (X, Y, Z) on the absolute coordinate system, $r_p$ can be obtained as the position information from the following expression.

$$Bp = J_p \qquad \text{(Expression 42)}$$

For example, when the magnetic field which is generated by the position detective magnetic field generation coil 103 that is shown in the present invention can be derived from the Biot-Savart law as a magnetic field from a magnetic dipole (which is defined by $m_{coil}$), the position detective magnetic field Bp at $r_p$ can be obtained uniquely as follows on the assumption that the position of the position detective magnetic field generating coil 103 on the absolute coordinate system is represented by $r_0$.

$$B_p = \frac{1}{4\pi} \times \left( \frac{-m_{coil}}{\left| r_p - r_o \right|^3} + 3 \times \frac{\left( m_{coil} \bullet \left( r_p - r_o \right) \right)}{\left| r_p - r_o \right|^5} \cdot \left( r_p - r_o \right) \right) \qquad \text{(Expression 43)}$$

$m_{coil}$, $(r_p\text{-}r_o)$ expresses vector, $m_{coil}\bullet(r_p\text{-}r_o)$ expresses inner product.
Applying the Expression to (Expression 42) makes it possible to derive the position information $r_p$ easily.

It goes without saying that instead of the algebraic Expression as (Expression 43), the position information $r_p$ can be obtained by a method of calculating the position detective magnetic field Bp from the position detective magnetic field generating coil 103 by a simulation such as a finite element method, or by a method of storing the position detective magnetic field Bp measured in advance and by comparing it with $J_p$ obtained as a measurement value using (Expression 42) referring to a table.

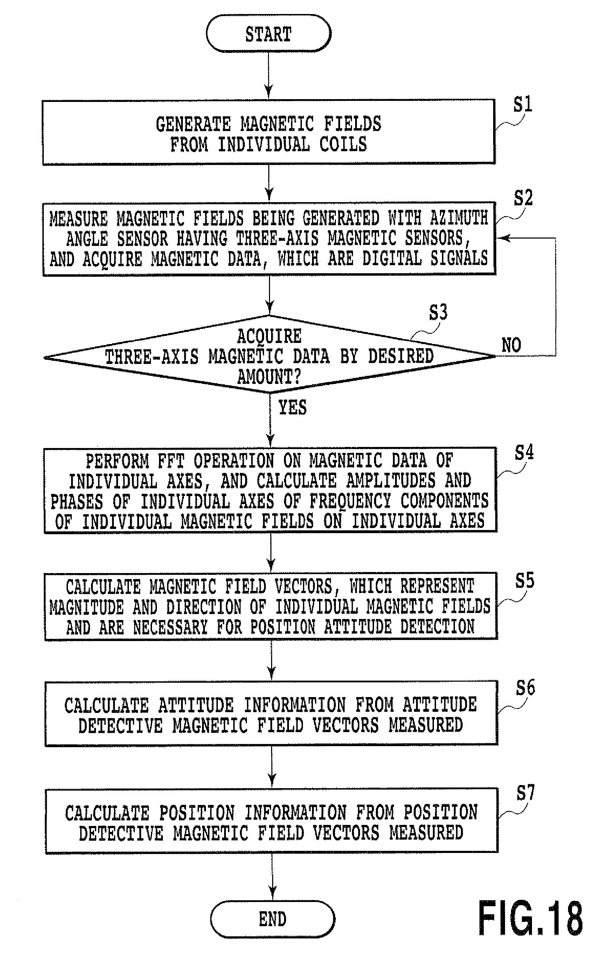

FIG. 18 is a flowchart for explaining the operation of the embodiment 4 of the spatial information detecting system in accordance with the present invention. First, the individual coils 101, 102 and 103 generate the individual magnetic fields of the Xg-axis direction magnetic field Bx, Zg axis direction magnetic field Bz, and position detective magnetic fieldBp (step S1). Next, the azimuth angle sensor 111a having the three-axis magnetic sensor 110 measures the magnetic fields the individual coils 101, 102 and 103 are generating, and acquires the magnetic data of the individual axes, which are digital signals (step S2).

Next, the Fourier transform unit 118 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 118 performs the FFT operation on the desired amount of magnetic data of the individual axes acquired, and calculates the amplitudes and phases of the plurality of frequency components of the individual axes in the same manner as described above. In other words, it calculates the amplitudes and phases of the individual frequency components in the individual magnetic fields on the individual axes (step S4). Then, the magnetic field vector calculating unit 119 calculates, from the amplitudes and phases of the frequency components of the individual magnetic fields on the individual axes, the signs of the amplitudes of the individual axes for the individual magnetic fields using the phase relationships between the plurality of frequency components of the individual axes, and calculates the magnetic field vectors $m_x$, $m_z$ and $m_p$ which represent the direction and magnitude of each magnetic field and are necessary for the position attitude detection (step S5).

Then, the position attitude calculating unit 120 calculates the attitude information representing the attitude of the information terminal 107 from the attitude detective magnetic field vectors $m_x$ and $m_z$ (step S6). Then, as for the attitude information of the information terminal 107, since the coordinate transformation from the terminal coordinate system to the absolute coordinate system becomes possible, a vector $J_p$, which results from transforming the position detective magnetic field vector $m_p$ to the absolute coordinate system, can be obtained, and the position information of the information terminal 107 is calculated by (Expression 42 or 43) (step S7).

According to the foregoing procedures, the attitude information of the information terminal 107 can be obtained from the alternating uniform magnetic fields Bx and Bz in the uniform space, and then the position information of the information terminal 107 can be obtained from the attitude information of the information terminal 107 and the alternating nonuniform magnetic field Bp. Thus, the attitude and position of the information terminal 107 can be detected. Then, to detect the position and attitude successively, the processing should be returned to step S2.

In the configuration of the embodiment 4 of the spatial information detecting system in accordance with the present invention, the central axis of the position detective magnetic field generating coil 103 need not necessarily agree with the Zg axis. If the position information can be obtained by comparing with $J_p$ obtained by measuring the position detective magnetic field Bp as in (Expression 42), it can be placed at an arbitrary position.

In addition, although the two pairs of the Helmholtz coils, the Xg-axis Helmholtz coils 101 and the Zg axis Helmholtz coils 102, constitute the uniform magnetic field generating unit in the configuration of the embodiment 4, it is also possible that the information terminal 107 has an acceleration sensor, and that if the gravitational acceleration can be detected in the Zg axis direction, using only the pair of the Xg-axis Helmholtz coils 101 makes it possible to detect the arbitrary attitude of the information terminal 107 using the magnetic field vector $m_x$ and the acceleration vector the acceleration sensor detects, and the position information of the information terminal 107 can be detected from the nonuniform alternating magnetic field Bp. Such a configuration is also included in the present invention.

[EMBODIMENT 5]

<When Generating Zg Axis Magnetic Field and Location Detective Magnetic Field with Single Coil>

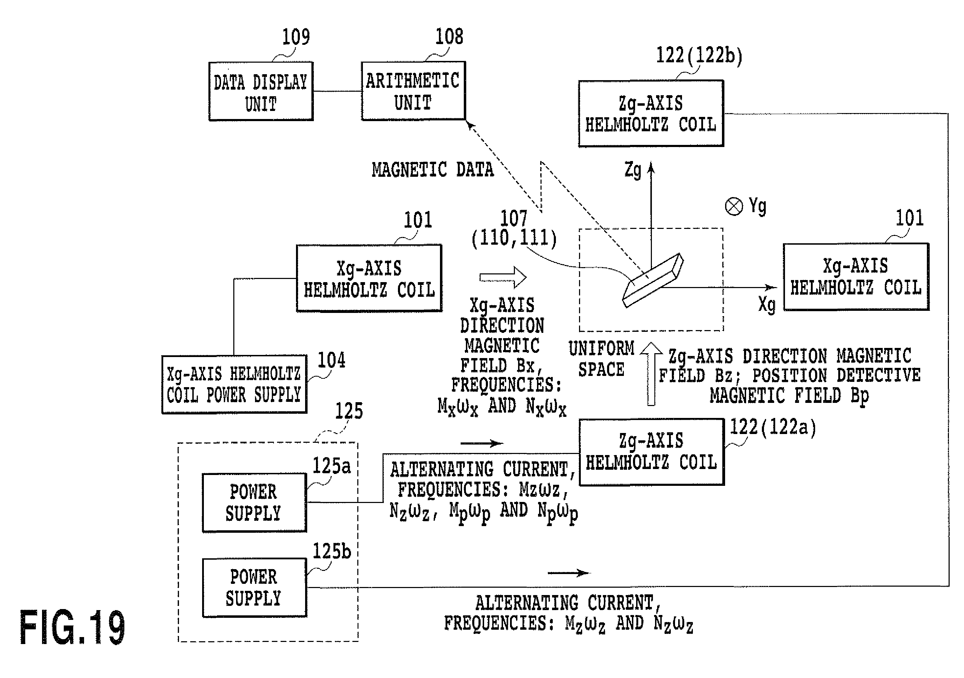

FIG. 19 is a diagram showing a general configuration of an embodiment 5 of the spatial information detecting system in accordance with the present invention. In the configuration, portions different from the configuration of FIG. 13 of the embodiment 4 in accordance with the present invention will be described. In FIG. 19, the position detective magnetic field generating coil 103 and the position detective magnetic field generating power supply 106 of the embodiment 4 in accordance with the present invention are removed, and instead of the Zg axis Helmholtz coil power supply 105, a Zg axis Helmholtz coil power supply unit 125 consisting of a power supply 125a and a power supply 125b is provided. In addition, the Zg axis Helmholtz coils 122 are divided into a coil 122a and a coil 122b which are connected to the power supply 125a and power supply 125b, respectively. The configuration is constructed in such a manner that the coil 122a generates not only the Zg axis direction magnetic field Bz, but also the position detective magnetic field Bp component in a superposed manner. In other words, it is configured in such a manner that the Zg axis Helmholtz coils 122 output the uniform magnetic field and nonuniform magnetic field in a superposed manner.

The power supply 125a supplies the coil 122a with alternating currents with angular frequencies $M_z\omega_z$ and $N_z\omega_z$ and $M_p\omega_p$ and $N_p\omega_p$, and the power supply 125b supplies the coil 122b with the alternating currents with the angular frequencies $M_z\omega_z$ and $N_z\omega_z$.

Then, the coil 122a and coil 122b of the Zg axis Helmholtz coils 122 generate different frequency alternating magnetic fields with the angular frequencies $M_z\omega_z$ and $N_z\omega_z$, and the coil 122a generates alternating magnetic fields with the angular frequencies $M_p\omega_p$ and $N_p\omega_p$ in a superposed manner. In this case, as for the alternating magnetic field components with the angular frequencies $M_z\omega_z$ and $N_z\omega_z$ the coil 122a and coil 122b generate using the power supply 125a and power supply 125b, they are assumed to be adjusted in such a manner that their magnitudes and phases agree to each other.

Generating the alternating magnetic fields having the components with the angular frequencies $M_z\omega_z$ and $N_z\omega_z$ simultaneously from the coil 122a and coil 122b constituting the Zg axis Helmholtz coils 122 makes it possible to form the uniform Zg axis direction magnetic field Bz near the center between the coils; and the components having the angular frequencies $M_p\omega_p$ and $N_p\omega_p$ from the coil 122a can form the nonuniform position detective magnetic field Bp.

In this case, the integer ratios $M_z:N_z$ and $M_p:N_p$ between the frequencies are different even and odd integer ratios as described in the embodiment 4 in accordance with the present invention. For example, $M_z:N_z$ is 1:2, $M_p:N_p$ is 3:8 and so on. Accordingly, the operations of (Expression 18) to (Expression 24) in the embodiment 2 in accordance with the present invention are applicable to the frequency components.

The configuration of the coils for generating the nonuniform magnetic field and uniform magnetic field in a superposed manner makes it possible to obviate the necessity for the position detective magnetic field generating coil 103, and to further simplify the configuration of the spatial information detecting system. In addition, in the embodiment in accordance with the present invention, an alternating power supply with two separate outputs, which can singly output powers equivalent to those of the power supply 125a and power supply 125b, can be used as the Zg axis Helmholtz coil power supply unit 125.

The present embodiment can carry out the detection of the position and attitude of the information terminal 107 in the same procedures as in the embodiment 4. Thus, the spatial information detecting method and spatial information detecting apparatus are the same as those of the embodiment 4.

In the present embodiment, the term "uniform magnetic field" refers to a magnetic field that can be considered having a substantially fixed direction and magnitude at an arbitary point in a particular space defined. In contrast, in the embodiment, the term "nonuniform magnetic field" refers to a magnetic field that can be con s idered having a substantially different direction or magnitude depending on the position in the space defined.

As described above, forming the uniform magnetic fields in the embodiments 4 and 5 in accordance with the present invention enables the attitude detection with simple calculation. Furthermore, generating the nonuniform magnetic field at arbitrary coordinates in the uniform space formed by the uniform magnetic fields enables the detection of the position in addition to the detection of the attitude. Moreover, they can be obtained with simple calculation.

Next, detection of the position and attitude using a gradient magnetic field as the nonuniform magnetic field will be described below.

As for the detection of the position and attitude using the gradient magnetic field, there are cases of detecting the position and attitude in a uniform magnetic field + uniform/gradient combined magnetic field (embodiment 6); detecting the position and attitude in a geomagnetism + uniform/gradient combined magnetic field (embodiment 7); detecting the position and attitude in an acceleration sensor + gyro sensor + gradient magnetic field (embodiment 8) ; detecting the position and attitude in an acceleration sensor + geomagnetism gradient magnetic field (embodiment 9); and employing a uniform/gradient combined magnetic field + acceleration sensor (embodiment 10). In the embodiments 8 to 10, a spatial information system and apparatus in accordance with the present invention have an attitude detecting unit anew. In the embodiment 8, the attitude the attitude detecting unit detects is an arbitrary attitude, and all the attitudes of the magnetic field detecting unit can be expressed from only the output signal of the attitude detecting unit. On the other hand, in the embodiments 9 and 10, the attitude the attitude detecting unit detects is an attitude having a degree of freedom about anyone of the axes of the coordinate system, and a partial attitude can be expressed from the output signal of the attitude detecting unit. In any embodiments, the attitude finally detected is the arbitrary attitude described in the embodiments 4 and 5, which can be determined without leaving any degree of freedom. These embodiments will be described below.

[EMBODIMENT 6]

<When Detecting Location and Attitude in Uniform Magnetic Field + Uniform/Gradient Combined Magnetic Field>

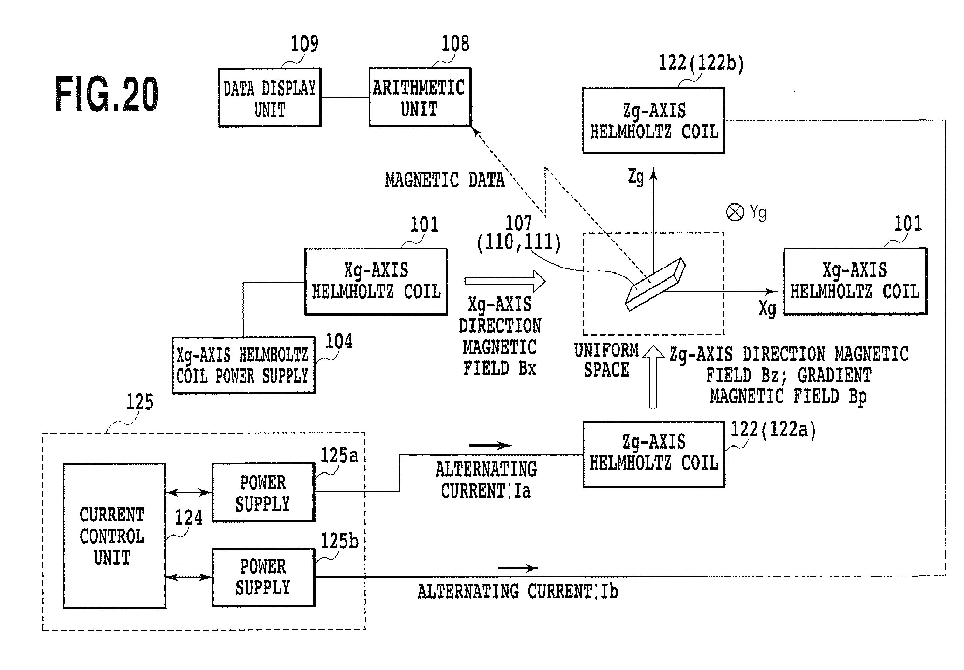

FIG. 20 is a diagram showing a general configuration of an embodiment 6 of the spatial information detecting system in accordance with the present invention. It will now be described below, centering on the points of difference from the embodiment 5.

The embodiment 6 differs from the embodiment 5 in the position detective magnetic field Bp. As the alternating nonuniform magnetic field that has the plurality of different frequency components with known phase relationships and that has different direction or magnitude depending on the position, although the embodiment 5 employs the magnetic field the single coil generates, which approximates the magnetic field the magnetic dipole generates, the embodiment 6 in accordance with the present invention employs an alternating gradient magnetic field that is linear in the individual axis directions and has a plurality of different frequency components with known phase relationships. The linear alternating gradient magnetic field has a linear gradient in the individual axis directions of the XgYgZg axes in a certain uniform space near the center between the coils. In the present invention, the term "linear gradient magnetic field" refers to a magnetic field whose intensity varies linearly in the individual axis directions, and the rate of variation is called a gradient.

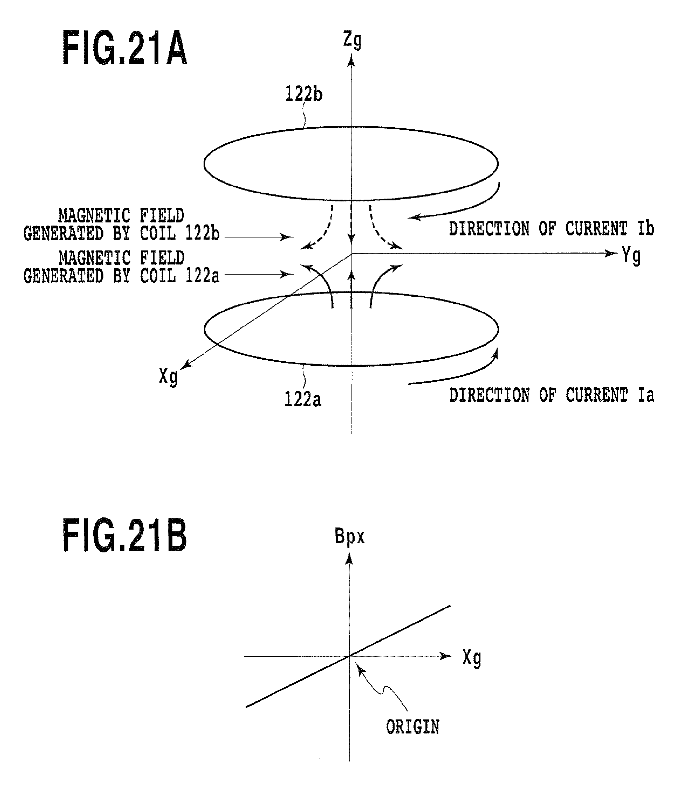

Next, the generating mechanism of the gradient magnetic field will be described with reference to FIG. 21A and FIG. 21B. FIG. 21A shows a right-hand XgYgZg coordinate system whose origin agrees with the center of the pair of Helmholtz coils, and whose Zg axis agrees with the central axis of the Helmholtz coils.

[0166] , A current Ia flows through the first coil 122a of the Helmholtz coils, and a current Ib flows through the second coil 122b. The direction in which the current Ia flows through the coil 122a is the clockwise direction about the Zg axis when looking at the positive direction of the Zg axis. In contrast, the direction in which the current Ib flows through the coil 122b is the counterclockwise direction when looking at the positive direction of the Zg axis. In this case, as for the magnetic field formed by combining the magnetic field generated from the coil 122a (solid line arrows near the origin in FIG. 21A) and the magnetic field generated from the coil 122b (broken line arrows near the origin in FIG. 21A), its Xg and Yg-axis components point in the direction separating from the origin, and its Zg axis component points in the direction to the origin. In addition, near the origin, the intensities of the Xg, Yg and Zg axis components become a gradient magnetic field Bp (Xg component, Yg component and Zg component are Bpx, Bpy and Bpz) that linearly varies in the directions of the individual axes.

$$Bp = (Bpx,\ Bpy,\ Bpz)^T = (kX,\ kY,\ -2kZ)^T \quad (\text{Expression } 44)$$

where X, Y and Z represent the coordinates on the XgYgZg coordinate system. In addition, k is a constant of proportionality determined in accordance with the shape of the coils and the currents. FIG. 21B shows a state in which the intensity of the magnetic field Bpx varies linearly along the Xg-axis. As for Bpy and Bpz, their intensities vary linearly along the individual axes in the same manner (only, the gradient of Bpz is negative). Accordingly, once the intensities of the individual axis components of the magnetic field have been measured at position coordinates (X, Y, Z), the position can be determined in accordance with the constant of proportionality k.

When the individual currents are an alternating current, they can be caused to flow in the opposite directions by shifting the phases of the individual currents by 180 degrees. In addition, since the magnetic field generated is an alternating magnetic field, the intensities of the individual axis components of the magnetic field are represented in terms of the amplitudes at the frequency. Then, the amplitudes vary linearly in the individual axis directions. As for positive and negative of the amplitude, it is considered to be positive at a position where the direction of the magnetic field of the coil 122a at a time when the alternating current is positive agrees with the positive direction of the coordinate axis, and to be negative at a position where it does not agree.

Then, when using the alternating currents Ia and Ib as the alternating currents having the plurality of different frequency components with known phase relationships, the magnetic field generated becomes an alternating gradient magnetic field having the plurality of different frequency components with known phase relationships. Incidentally, when the directions in which the currents flow are adjusted in the same direction (when the phases are matched), the magnetic field generated near the origin becomes a uniform magnetic field. In other words, it becomes a uniform magnetic field the well-known Helmholtz coils generate. Incidentally, the Zg axis Helmholtz coils 122 have a configuration capable of generating the gradient magnetic field and the Zg axis direction magnetic field Bz in a superposed manner.

The embodiment 6 in accordance with the present invention differs from the embodiment 5 in accordance with the present invention in that it has a current control unit 124 for controlling the currents of the power supply unit 125 for the Zg axis Helmholtz coils. Here, the current control unit 124 mainly controls the generating period and amount of current to be supplied to the Zg axis Helmholtz coils 122. More specifically, it controls the currents supplied to the Helmholtz coils: the current from the power supply 125a to the first (coil 122a) of the Zg axis Helmholtz coils 122 in FIG. 20, and the current from the power supply 125b to the second (coil 122b). The remaining configuration and the coordinate system are the same as those of the embodiment 5 in accordance with the present invention.

Here, the power supply 125a generates an alternating current (or voltage) with the angular frequencies $M_z \omega_z$, $N_z \omega_z$, $M_p \omega_p$ and $N_p \omega_p$ (the individual angular frequencies differ from each other, and the integer ratios $M_z : N_z$ and $M_p : N_p$ between the frequencies are different even and odd integer ratios as in the embodiment 4 in accordance with the present invention). The current Ia fed from the power supply 125a is represented as follows.

$$Ia = Iz*(\sin(M_z \omega_z t) + \sin(N_z \omega_z t)) + Ip*(\sin(M_p \omega_p t) + \sin(N_p \omega_p t)) \qquad (\text{Expression } 45)$$

where Iz and Ip denote a current amplitude.

Likewise, the power supply 125b generates an alternating current with angular frequencies $M_z \omega_z$, $N_z \omega_z$, $M_p \omega_p$ and $N_p \omega_p$. The current Ib fed from the power supply 125b is represented as follows.

$$Ib = Iz*(\sin(M_z \omega_z t) + \sin(N_z \omega_z t)) - Ip*(\sin(M_p \omega_p t) + \sin(N_p \omega_p t)) \qquad (\text{Expression } 46)$$

which expresses in the currents Ia and Ib that the phases of the frequency components of $M_z \omega_z$ and $N_z \omega_z$ agree, and the phases of the frequency components of $M_p \omega_p$ and $N_p \omega_p$ are shifted by 180 degrees.

The current control unit 124 controls the generating period and the amplitudes (amounts) of the currents Ia and Ib. Then, supplying the individual coils with the currents from the individual power supplies makes it possible to generate the Zg axis direction magnetic field Bz which is the alternating uniform magnetic field from the Zg axis Helmholtz coils 122, and the alternating gradient magnetic field Bp which is the nonuniform magnetic field. In addition, in the same methods as the embodiments 4 and 5 in accordance with the present invention, the Xg-axis Helmholtz coils 101 can generate the Xg-axis direction magnetic field Bx, which is an alternating uniform magnetic field. The magnetic fields Bx, Bz and Bp have angular frequencies with combinations of $M_x \omega_x$ and $N_x \omega_x$, $M_z \omega_z$ and $N_z \omega_z$, and $M_p \omega_p$ and $N_p \omega_p$.

Then, by using the method described in the embodiment 4 in accordance with the present invention, the magnetic field vectors $m_x$, $m_z$ and $m_p$ are calculated from the signal intensities (amplitudes) and phases (from the amplitudes of the frequency components $M_x \omega_x$, $M_z \omega_z$ and $M_p \omega_p$, and the phases of the frequency components of $M_x \omega_x$ and $N_x \omega_x$, $M_z \omega_z$ and $N_z \omega_z$, and $M_p \omega_p$ and $N_p \omega_p$ as in the embodiment 4) of the individual frequency components in the alternating magnetic fields Bx, Bz and Bp the individual coils in the individual axes generate (of the plurality of frequency components with the angular frequency components of $M_x \omega_x$ and $N_x \omega_x$, $M_z \omega_z$ and $N_z \omega_z$, and $M_p \omega_p$ and $N_p \omega_p$ respectively). The vectors $m_x$ and $m_z$ are uniform magnetic field vectors each representing the direction and magnitude of the uniform magnetic field and used for detecting the attitude. The vector $m_p$ is a nonuniform magnetic field vector representing the direction and magnitude of the nonuniform magnetic field for the position detection and used for detecting the position. In the same manner as the embodiment 4, the embodiment 6 can obtain a vector $F_p$ resulting from converting the position detective magnetic field vector $m_p$ to the absolute coordinate system by obtaining the orthonormal base vectors $e_x$, ey and $e_z$ from the attitude detective magnetic field vectors $m_x$ and $m_z$, and by expressing a $3 \times 3$ matrix using X = ($e_x$ $e_y$ $e_z$).

$$F_p = X^T m_p \qquad \text{(Expression 47)}$$

Here, at an arbitrary coordinate point $r_p$ = (X, Y, Z) on the absolute coordinate system, if the frequency component of $M_p \omega_p$ of Bp is measured as $F_p = (F_{px}, F_{py}, F_{pz})^T$ by the information terminal 107, since the gradient of the gradient magnetic field Bp the Zg axis Helmholtz coils 122 generate has the following relationship with $F_p$ from (Expression 44), where k is the constant of proportionality,

$$Bp = (kX, \; kY, \; -2kZ)^T = F_p = (F_{px}, \; F_{py}, \; F_{pz})^T$$

$$\text{(Expression 48)}$$

$r_p$ can be obtained as the position information by obtaining the constant of proportionality k.

Besides, in the configuration of the embodiment, since the same Helmholtz coils generate both the uniform magnetic field and gradient magnetic field, the constant of proportionality k of the gradient magnetic field can be obtained easily by measuring the magnitude of the uniform magnetic field by adjusting the relationships between Iz and Ip. For example, assuming that the Zg axis Helmholtz coils 122 are circular coils with a radius of R, and the coil 122a and the coil 122b are set at a distance R, and that the magnetic fields generated from the coil I22a and coil 122b by Iz and Ip are equal in the absolute value, then the constant of proportionality k of the gradient magnetic field can be obtained from the absolute value $|m_z|$ of the frequency component of $M_z \omega_z$ of Bz using the following Expression.

$$2k = 6|m_z| / (5R) \qquad \text{(Expression 49)}$$

Thus, measuring the magnitude $|m_z|$ of the alternating uniform magnetic field makes it possible to obtain the constant of proportionality k of the gradient magnetic field from the known R using (Expression 49). Accordingly, it is not necessary to measure the constant of proportionality in advance. Since the magnitude $|m_z|$ is constant in the uniform space, regardless of where it is measured in the uniform space first, the constant of proportionality k is obtained immediately, and therefore the position information can be obtained.

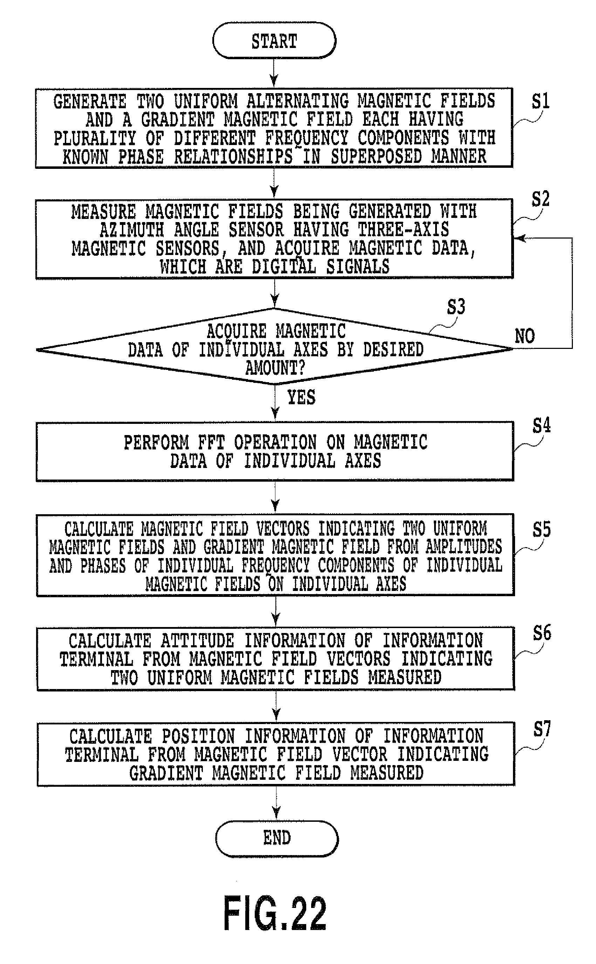

FIG. 22 is a flowchart for explaining the operation of the embodiment 6 of the spatial information detecting system in accordance with the present invention. First, the individual coils generate a pair of the alternating uniform Xg-axis direction magnetic field Bx and the Zg axis direction magnetic field Bz which have the plurality of different frequency components with known phase relationships, and the individual magnetic fields of the alternating gradient magnetic field Bp having the plurality of different frequency components with known phase relationships in a superposed manner (step S1). Next, the azimuth angle sensor 111a having the three-axis magnetic sensor 110 measures the magnetic fields the individual coils are generating to acquire the magnetic data of the individual axes, which are digital signals (step S2).

Next, the Fourier transform unit 118 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 118 performs the FFT operation on the desired amount of magnetic data of the individual axes acquired, and calculates the amplitudes and phases of the frequency components of the individual magnetic fields on the individual axes (step S4). Then, the magnetic field vector calculating unit 119 calculates the two uniform magnetic fields and the magnetic field vectors $m_x$, $m_z$ and $m_p$ indicating the gradient magnetic field, which are necessary for the position attitude detection, from the amplitudes and phases of the individual frequency components of the individual magnetic fields about the individual axes (step S5).

Then, the position attitude calculating unit 120 calculates the attitude information representing the attitude of the information terminal 107 from the magnetic field vectors $m_x$ and $m_z$ indicating the two uniform magnetic field (step S6). Then, as for the attitude information of the information terminal 107, since the coordinate transformation from the terminal coordinate system to the absolute coordinate system becomes possible, the vector $F_p$ resulting from transforming the magnetic field vector $m_p$ indicating the gradient magnetic field to the absolute coordinate system is obtained, and the position information indicating the position of the information terminal 107 is calculated by (Expression 48) (step S7).

According to the foregoing procedures, the attitude information of the information terminal can be obtained from the alternating uniform magnetic fields Bx and Bz in the uniform space, and then the position information of the information terminal can be obtained from the attitude information of the information terminal and the alternating gradient magnetic field Bp. Thus, the attitude and position of the information terminal can be detected. Then, to detect the position and attitude successively, the processing should be returned to step S2.

[EMBODIMENT 7]

<when Detecting Location and Attitude in Geomagnetism + Uniform/Gradient Combined Magnetic Field>

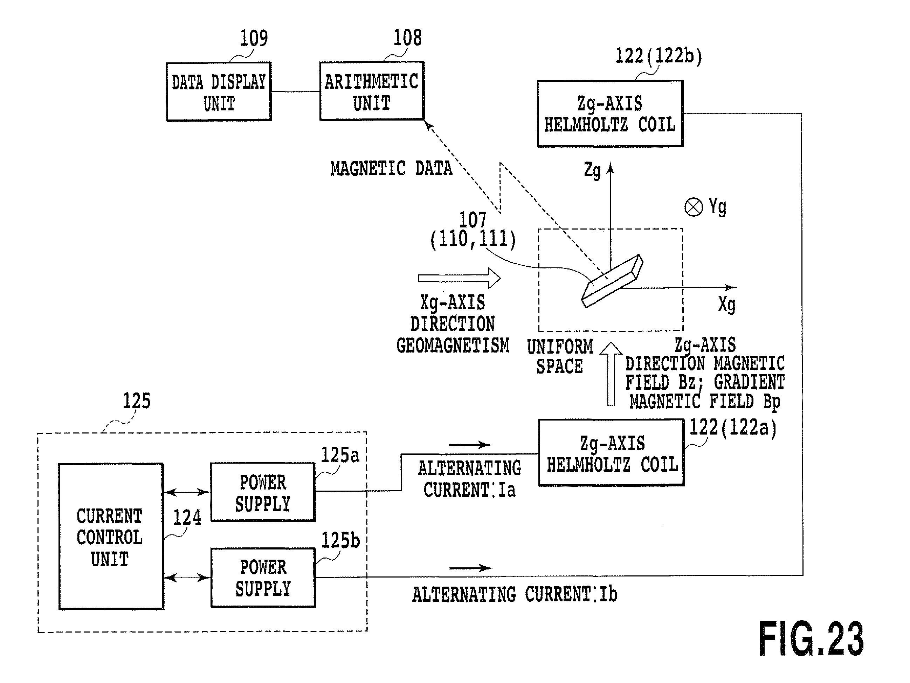

FIG. 23 is a diagram showing a general configuration of an embodiment 7 of the spatial information detecting system in accordance with the present invention. In the configuration, portions different from the configuration of FIG. 20 of the embodiment 6 in accordance with the present invention will be described. In FIG. 23, the Xg-axis Helmholtz coils in FIG. 20 are removed, and instead the geomagnetism exits in the Xg-axis direction as Bx. In other words, the present embodiment 7 utilizes the geomagnetism instead of the single uniform magnetic field generating unit. The uniform space consists of the geomagnetism Bx, and an alternating uniform magnetic field Bz having a plurality of different frequencies with known phase relationships, where both of them are uniform. The remaining configuration is the same as that of the embodiment 6 in accordance with the present invention.

The magnetic field detecting unit 111 in the information terminal measures the geomagnetism Bx, the alternating uniform magnetic field Bz having the plurality of different frequencies with the known phase relationships from the Zg axis Helmholtz coils 122, and the alternating gradient magnetic field Bp at the same time. Then, the data transmitting unit 116 in the magnetic field detecting unit 111 transmits the magnetic data to the arithmetic unit 108 by radio. In the arithmetic unit 108, the data receiving unit 117 receives the magnetic data from the data transmitting unit 116, and delivers to the Fourier transform unit 118.

The Fourier transform unit 118 performs the FFT operation in the same manner as in the embodiment 6 in accordance with the present invention, and calculates the amplitudes and phases of the plurality of frequency components of the individual axes. In addition, it calculates the magnitude of the DC components (frequency components of 0 Hz) of the individual axes. The magnetic field vector calculating unit 119 calculates, in the same manner as in the embodiment 6, the magnetic field vectors $m_z$ and $m_p$, and at the same time calculates the magnitude of DC components of the individual axes as the vector $m_x$. The DC component vector $m_x$ includes the magnetic field vector indicating the geomagnetism Bx. For example, assume that the magnetic data is expressed by 8-bit code (0 - 255), and the x-axis magnetic sensor 110a is parallel with Bx, and that the magnitude of Bx is 30 LSB, and 0 uT magnetic field is 128 LSB, then $m_x$ is obtained as $m_x = (158, 128, 128)^T$. Accordingly, eliminating the offset 128 LSB indicating 0 uT, the center of the geomagnetism signal in this case, can make a DC magnetic field vector indicating the geomagnetism Bx. Thus, it calculates the DC magnetic field vector $m_x'$ indicating the geomagnetism Bx having the offset removed. Incidentally, as for a method of obtaining the offset, any method will do as long as it obtains the center of a circle or spherical surface the signal due to the geomagnetism draws. For example, the offset is obtained in advance by using a method of rotating the information terminal 107 once in the horizontal direction, and of obtaining it from the maximum value and minimum value of the X coordinates and Y coordinates of the locus obtained; or a method of obtaining the center of a sphere from the geomagnetism information by statistical techniques at the time of moving the information terminal 107 arbitrarily in a three-dimensional direction as the applicant of the invention proposed in Patent Document 6. Subsequently, the attitude and position can be detected in the same operations as in the embodiment 6 in accordance with the present invention.

By replacing $m_x$ in the (Expression 34) and (Expression 35) by the DC magnetic field vector $m_x'$ indicating the

geomagnetism Bx, the attitude information of the information terminal 107 can be obtained from the geomagnetism Bx and the alternating uniform magnetic field Bz. Then, the vector $F_p$ resulting from transforming $m_p$ to the absolute coordinate system is obtained in the same manner as in the embodiment 6 in accordance with the present invention, and the position information of the information terminal 107 is obtained by (Expression 48). Here, according to (Expression 49), the constant of proportionality k of the gradient magnetic field of (Expression 48) can be obtained from the measurement of $m_z$.

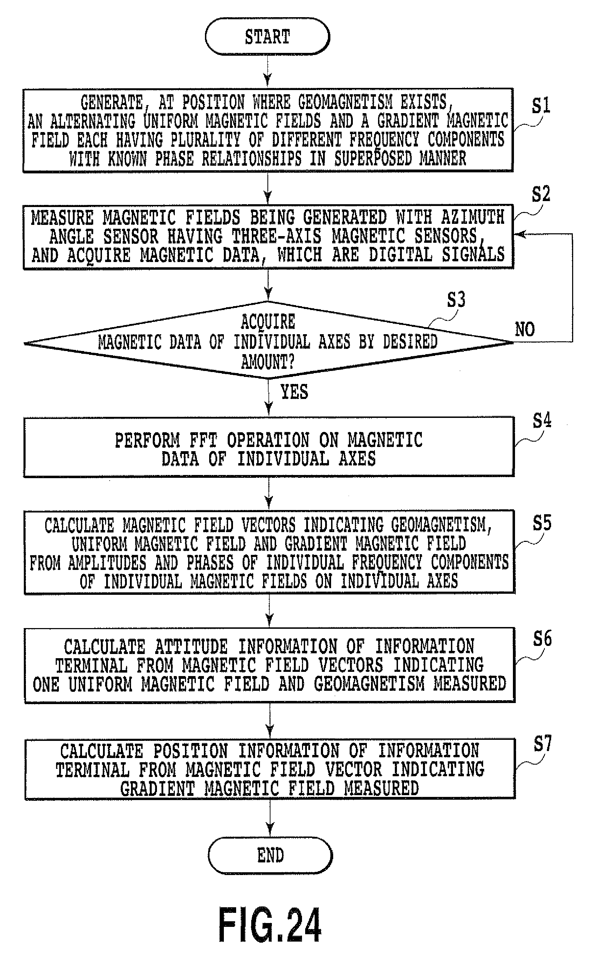

FIG. 24 is a flowchart for explaining the operation of the embodiment 7 of the spatial information detecting system in accordance with the present invention. First, in a place where the geomagnetism Bx exists, the Zg axis coil generates the Zg-axis direction magnetic field Bz, which is an alternating uniform magnetic field having the plurality of different frequency components with known phase relationships, and the individual magnetic fields of the alternating linear gradient magnetic field Bp having the plurality of different frequency components with known phase relationships in a superposed manner (step S1). Next, the azimuth angle sensor 111a having the three-axis magnetic sensor 110 measures the magnetic fields being generated to acquire the magnetic data of the individual axes, which are digital signals (step S2).

Next, the Fourier transform unit 118 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 118 performs the FFT operation on the desired amount of magnetic data of the individual axes acquired, and calculates the amplitudes and phases of the frequency components of the individual magnetic fields on the individual axes. More specifically, it calculates the amplitudes and phases of the individual frequency components of Bz and Bp on the individual axes, and the magnitude of the DC components (0 Hz) representing Bx (step S4). Then, the magnetic field vector calculating unit 119 calculates, from the amplitudes and phases of the individual frequency components of the individual magnetic fields on the individual axes, the magnetic field vectors $m_x'$, $m_z$ and $m_p$, which represent the directions and magnitudes of the individual magnetic fields the azimuth angle sensor 111a is measuring, and which indicate the geomagnetism Bx necessary for the position attitude detection, the uniform magnetic field Bz, and the gradient magnetic field Bp (step S5).

Then, the position attitude calculating unit 120 calculates the attitude information indicating the attitude of the information terminal 107 from the single uniform magnetic field Bz and the magnetic field vectors $m_z$ and $m_x'$ representing the geomagnetism (step S6). Then, as for the attitude information of the information terminal 107, since the coordinate transformation from the terminal coordinate system to the absolute coordinate system becomes possible, the vector $F_p$ resulting from transforming the magnetic field vector $m_p$ indicating the gradient magnetic field Bp to the absolute coordinate system is obtained, and the position information of the information terminal 107 is calculated by (Expression 48) (step S7).

According to the foregoing procedures, the attitude information of the information terminal can be obtained from the geomagnetism Bx and the alternating uniform magnetic field Bz in the uniform space, and then the position information of the information terminal can be obtained from the attitude information of the information terminal and the alternating gradient magnetic field Bp. Thus, the attitude and position of the information terminal can be detected. Then, to detect the position and attitude successively, the processing should be returned to step S2.

Incidentally, although the Helmholtz coils for generating the alternating uniform magnetic field and gradient magnetic field are placed on the Zg axis in the embodiment 7, even when they are placed on the Yg-axis, the attitude and position of the information terminal can be detected in the same procedure by appropriately transforming the operations from (Expression 34) to (Expression 36) and (Expression 48) in accordance with the coordinate system.


[EMBODIMENT 8]

<When Detecting Location and Attitude with Acceleration Sensor + Gyro Sensor + Gradient Magnetic Field>

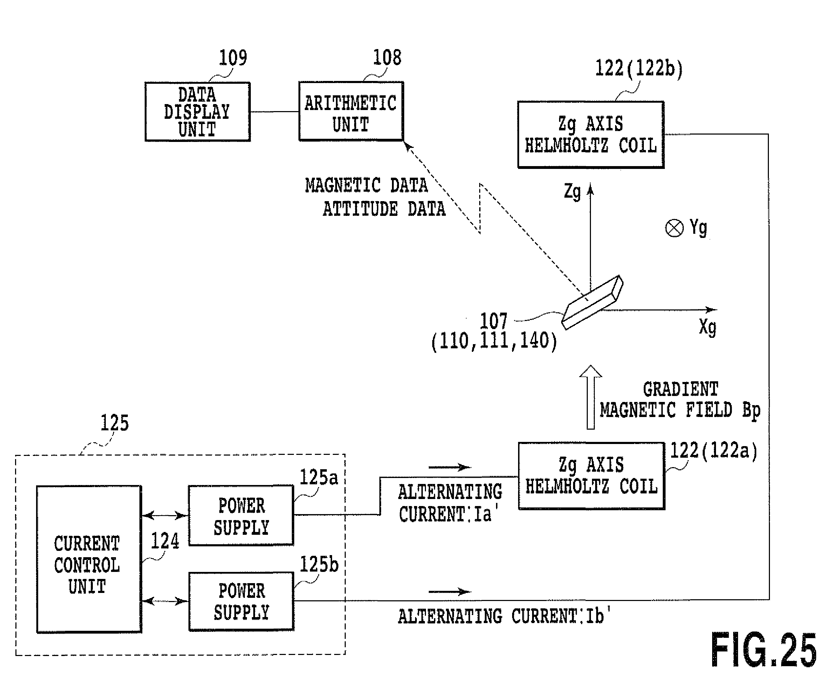

FIG. 25 is a diagram showing a general configuration of an embodiment 8 of the spatial information detecting system in accordance with the present invention. Points of difference from FIG. 23 of the embodiment 7 in accordance with the present invention will be described. In the embodiment in accordance with the present invention, the information terminal 107 has an attitude detecting unit 140 anew. The attitude detecting unit 140 has a function of detecting an arbitrary attitude of the information terminal 107 (magnetic field detecting unit 111) with a vibratory gyro sensor utilizing a piezoelectric element and with an acceleration sensor utilizing a capacitance or piezoresistance element, for example. The attitude detecting unit 140 supplies the arithmetic unit 108 with the attitude data which is the output signal. The data transmission to the arithmetic unit 108 can be either by wire or by radio as in the embodiment 7 in accordance with the present invention. In addition, since the present embodiment does not utilize the uniform magnetic field, the uniform space is not shown.

The spatial information detecting system comprises, as a magnetic field generating unit, the nonuniform magnetic field generating unit (the Zg axis Helmholtz coils 122 and the Zg axis Helmholtz coil power supply unit 125) for generating an alternating linear gradient magnetic field having a plurality of different frequency components with known phase relationships; the magnetic field detecting unit 111 including the multiaxial magnetic sensors 110a, 110b and 110c for detecting magnetic fields generated from the nonuniform magnetic field generating unit; the attitude detecting unit 140 for detecting the attitude of the magnetic field detecting unit 111; and the arithmetic unit 108 for calculating the attitude information and position information of the magnetic field detecting unit 111 from the output signal of the attitude detecting unit 140 and the output signal of the magnetic field detecting unit 111 based on the alternating gradient magnetic field generated from the magnetic field generating unit.

In other words, the spatial information detecting system is constructed from the Zg axis Helmholtz coils 122 and Zg axis Helmholtz coil power supply unit 125; the information terminal 107 having the magnetic field detecting unit 111 and attitude detecting unit 140; and the arithmetic unit 108 and data display unit 109. The information terminal 107, arithmetic unit 108 and data display unit 109 constitute the spatial information detecting apparatus.

In the position detecting system, the right-hand XgYgZg coordinate system is assumed to be arranged in such a manner that the Zg axis is placed aligned to the central axis of the Zg axis Helmholtz coils 122, and the Xg-axis and Yg-axis are placed to become orthogonal to each other and to the Zg axis.

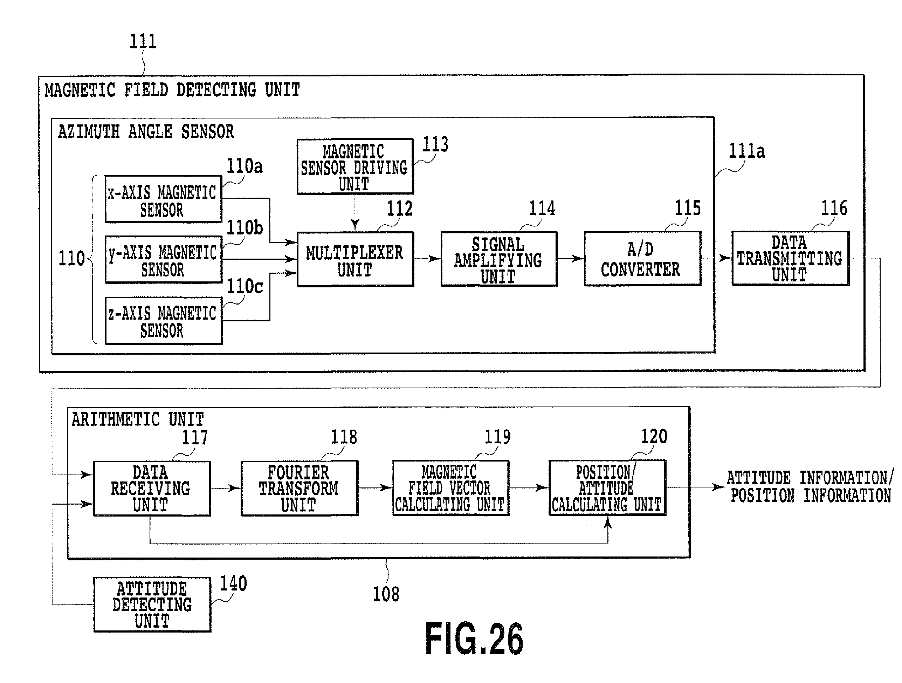

FIG. 26 is a block diagram showing a concrete configuration of the spatial information detecting apparatus of the embodiment 8 of the spatial information detecting system in accordance with the present invention. The spatial information detecting apparatus comprises the magnetic field detecting unit 111, the attitude detecting unit 140 and the arithmetic unit 108. The arithmetic unit 108 includes the data receiving unit 117, Fourier transform unit 118, magnetic field vector calculating unit 119 and position/attitude calculating unit 120. The magnetic field detecting unit 111 comprises the azimuth angle sensor 111a and data transmitting unit 116 in the same manner as the embodiment 6 in accordance with the present invention. In the arithmetic unit 108, the data receiving unit 117 receives the attitude data, which is the output signal from the attitude detecting unit 140, in the same manner as the magnetic data, delivers the attitude data to the position/attitude calculating unit 120, and delivers the magnetic data to the Fourier transform unit 118 to be processed in the same manner as in the embodiment 6 or 7 in accordance with the present invention.

The power supply 125a in the Zg axis Helmholtz coil power supply unit, which differs from that in the embodiment 6 or 7 in accordance with the present invention, generates an alternating current (or voltage) with the angular frequencies $M_p \omega_p$ and $N_p \omega_p$ (the individual angular frequencies differ from each other, and the even and odd numbers of the least integer ratio differ). In this case, the current Ia' fed is assumed to be expressed as follows.

$$\mathrm{Ia' = Ip*(sin(M_p\omega_p t) + sin(N_p\omega_p t))} \qquad \text{(Expression 50)}$$

where Ip denotes the current amplitude.

Besides, the power supply 125b generates the alternating current with the angular frequencies of $M_p \omega_p$ and $N_p \omega_p$ in the same manner. The current Ib' supplied in this case is assumed to be expressed as follows.

$$\mathrm{Ib' = -Ip*(sin(M_p\omega_p t) + sin(N_p\omega_p t))} \text{(Expression 51)}$$

From the alternating currents, the Zg axis Helmholtz coils 122 generate the alternating linear gradient magnetic field Bp that has the angular frequencies $M_p \omega_p$ and $N_p \omega_p$, and has the plurality of different frequency components with known phase relationships.

As for the configuration and operation of the magnetic field detecting unit 111, since they are the same as those of the embodiment 6 or 7 in accordance with the present invention, their description will be omitted here.

In the arithmetic unit 108, the data receiving unit 117 receives the magnetic data from the data transmitting unit 116 in the magnetic field detecting unit 111 and the attitude data from the attitude detecting unit 140. The attitude data is delivered to the position/attitude calculating unit 120, and the magnetic data is delivered to the Fourier transform unit 118. The Fourier trans form unit 118, after acquiring the desired amount of magnetic data from the three-axis magnetic sensor 110 from the data receiving unit 117, performs the FFT operation on the magnetic data; calculates, as to the individual axes, the phases of the signal intensities (amplitudes) of the plurality of frequency components (with the angular frequency components of $M_p \omega_p$ and $N_p \omega_p$ ) of the alternating gradient magnetic field Bp the Zg axis Helmholtz coils 122 generate; and delivers to the magnetic field vector calculating unit 119. The magnetic field vector calculating unit 119 calculates, in the same procedure as in the embodiment 6 in accordance with the present invention, the non-uniform magnetic field vector $m_p$ with the frequency component whose angular frequency is $M_p \omega_p$.

Then, the position/attitude calculating unit 120 calculates the attitude information from the attitude data from the attitude detecting unit 140. For example, it calculates a matrix consisting of the orthonormal bases of the terminal coordinate system seen from the absolute coordinate system as in the embodiment 4, and then calculates from the matrix the attitude information in a desired form such as (Expression 39) - (Expression 40) or Euler angles. Then, as for the attitude information, since the coordinate transformation from the terminal coordinate system to the absolute coordinate system becomes possible, the position/attitude calculating unit 120 transforms the nonuniform magnetic field vector $m_p$ from the terminal coordinate system to the vector $F_p$ in the absolute coordinate system, calculates the position information of the information terminal 107 by (Expression 48), and delivers to the data display unit 109.

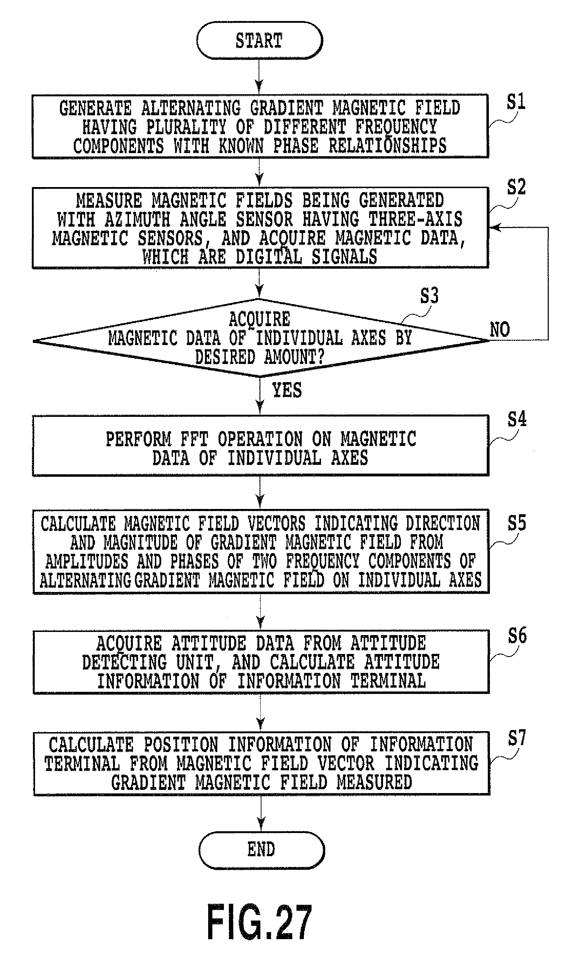

FIG. 27 is a flowchart for explaining the operation of the embodiment 8 of the spatial information detecting system in accordance with the present invention. First, the Zg axis Helmholtz coils 122 generate the alternating linear gradient magnetic field Bp having the plurality of different frequency components with known phase relationships (step S1). Next, the azimuth angle sensor 111a having the three-axis magnetic sensor 110 measures the magnetic field the Zg axis Helmholtz coils 122 are generating, and acquires the magnetic data of the individual axes, which are digital signals (step S2).

Next, the Fourier transform unit 118 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 118 performs the FFT operation on the desired amount of magnetic data of the individual axes acquired, and calculates the amplitudes and phases of the two frequency components of the alternating gradient magnetic field Bp on the individual axes (step S4). Then, the magnetic field vector calculating unit 119 calculates the magnetic field vector $m_p$, which is necessary for the position detection and represents the direction and magnitude of the alternating gradient magnetic field Bp the azimuth angle sensor 111a measures, from the amplitudes and phases of the two frequency components of the alternating gradient magnetic field Bp on the individual axes (step S5).

Then, acquiring the attitude data representing the attitude of the information terminal 107 from the attitude detecting unit 140, the position attitude information calculating unit 120 calculates the attitude information of the information terminal 107 in a desired format from the acquired attitude data (step S6). Then, since the coordinate transformation from the terminal coordinate system to the absolute coordinate system becomes possible, the vector $F_p$ resulting from transforming the magnetic field vector $m_p$ for the position detection to the absolute coordinate system is obtained, and the position information of the information terminal 107 is calculated by (Expression 48) (step S7).

The foregoing procedures, acquiring the attitude data of the information terminal 107 from the attitude detecting unit 140, calculate the attitude information in a desired format, thereby being able to obtain the position information of the information terminal 107 from the alternating gradient magnetic field Bp. Thus, the attitude and position of the information terminal 107 can be detected.

[EMBODIMENT 9]

<When Detecting Location and Attitude with Acceleration Sensor + Geomagnetism + Gradient Magnetic Field>

It is also conceivable in the embodiment 8 in accordance with the present invention to provide an acceleration sensor as the attitude detecting unit 140, and to calculate the attitude information of the information terminal 107 by simultaneously detecting the geomagnetism, which is described in the embodiment 7 in accordance with the present invention, with the magnetic field detecting unit 111.

Although the configuration of the spatial information detecting system of the present embodiment 9 is the same as that of the embodiment 8 in accordance with the present invention, it utilizes the acceleration sensor as the attitude detecting unit 140. In addition, the geomagnetism Bx is taken as the Xg-axis, and the direction opposite to the gravitational acceleration is taken as the Zg axis.

Although a partial attitude can be expressed from the acceleration data in the attitude detecting unit 140, the degree of freedom of movement about the Zg axis remains. Then all the arbitrary attitudes of the information terminal 107 cannot be expressed as in the embodiment 8. Thus, the present embodiment detects the arbitrary attitude of the information terminal 107 using the geomagnetism. As for the detection of the geomagnetism to the calculation of the DC magnetic field vector indicating the geomagnetism, they are the same as those of the embodiment 7.

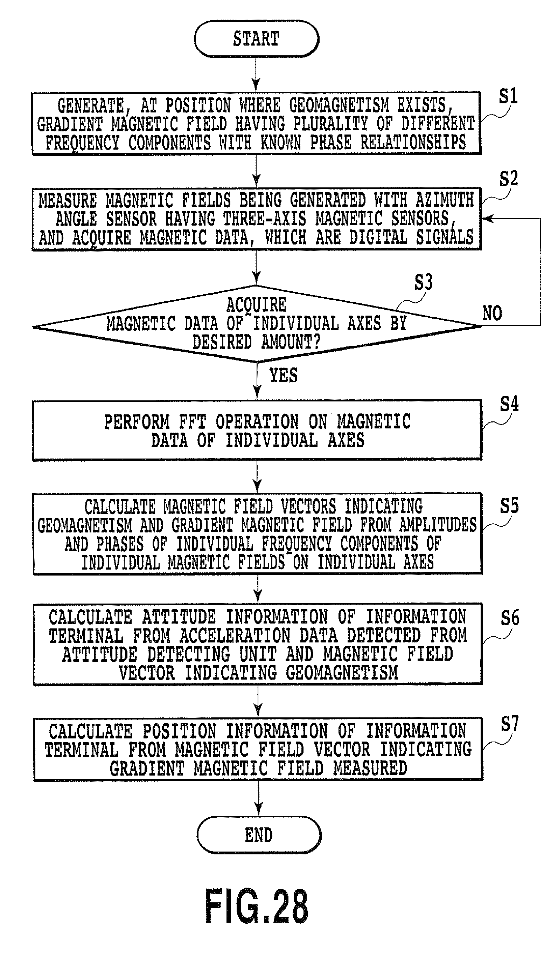

FIG. 28 is a flowchart for explaining the operation of the embodiment 9 of the spatial information detecting system in accordance with the present invention. In a place where the geomagnetism Bx exits, the Zg axis Helmholtz coils 122 generate the alternating linear gradient magnetic field Bp having the plurality of different frequency components with known phase relationships (step S1). Next, the azimuth angle sensor 111a having the three-axis magnetic sensor 110 measures the magnetic field the Zg axis Helmholtz coils 122 are generating, and acquires the magnetic data of the individual axes, which are digital signals (step S2).

Next, the Fourier transform unit 118 makes a decision as to whether it acquires the desired amount of magnetic data required for the FFT operation (step S3) . When it acquires the desired amount of magnetic data required for the FFT operation, it proceeds to the next step S4. Unless it acquires the desired amount of magnetic data required for the FFT operation, it returns to step S2.

Then, the Fourier transform unit 118 performs the FFT operation on the desired amount of magnetic data of the individual axes acquired, and calculates the amplitudes and phases of the frequency components of the individual magnetic fields on the individual axes. More specifically, it calculates the amplitudes and phases of the two frequency components of Bp of the individual axes, and the magnitude of the DC components (0 Hz) representing Bx (step S4) . Then, the magnetic field vector calculating unit 119 calculates, from the amplitudes and phases of the individual frequency components of the individual magnetic fields on the individual axes, the geomagnetism Bx necessary for the position attitude detection and the magnetic field vectors $m_x$' and $m_p$ indicating the gradient magnetic field Bp, which represent the directions and magnitudes of the individual magnetic fields the azimuth angle sensor 111a is measuring (step S5). Then, the position attitude calculating unit 120 calculates the attitude information of the information terminal 107 newly from the acceleration data a, which is the attitude data the attitude detecting unit 140 detects, and from the magnetic field vector $m_x$' (DC magnetic field vector) representing the geomagnetism (step S6). In this case, since the acceleration data a represents a vector indicating the direction of the Zg axis seen from the terminal coordinate system, the attitude information can be calculated by replacing $m_z$ in (Expression 35) to (Expression 36) by the acceleration data a.

Then, since the coordinate transformation from the terminal coordinate system to the absolute coordinate system becomes possible, the vector $F_p$ resulting from transforming the magnetic field vector $m_p$ indicating the gradient magnetic field to the absolute coordinate system is obtained from the attitude information of the information terminal 107 calculated, and the position information of the information terminal 107 is calculated by (Expression 48) (step S7).

According to the foregoing procedures, the attitude information of the information terminal 107 can be obtained from the geomagnetism Bx and the acceleration data due to the gravitational acceleration, and then the position information of the information terminal 107 can be obtained from the attitude information of the information terminal 107 and the alternating gradient magnetic field Bp. Thus, the attitude and position of the information terminal 107 can be detected. Then, to detect the position and attitude successively, the processing should be returned to step S2.

[EMBODIMENT 10]

<when Using Uniform/Gradient Combined Magnetic Field + Acceleration Censor>

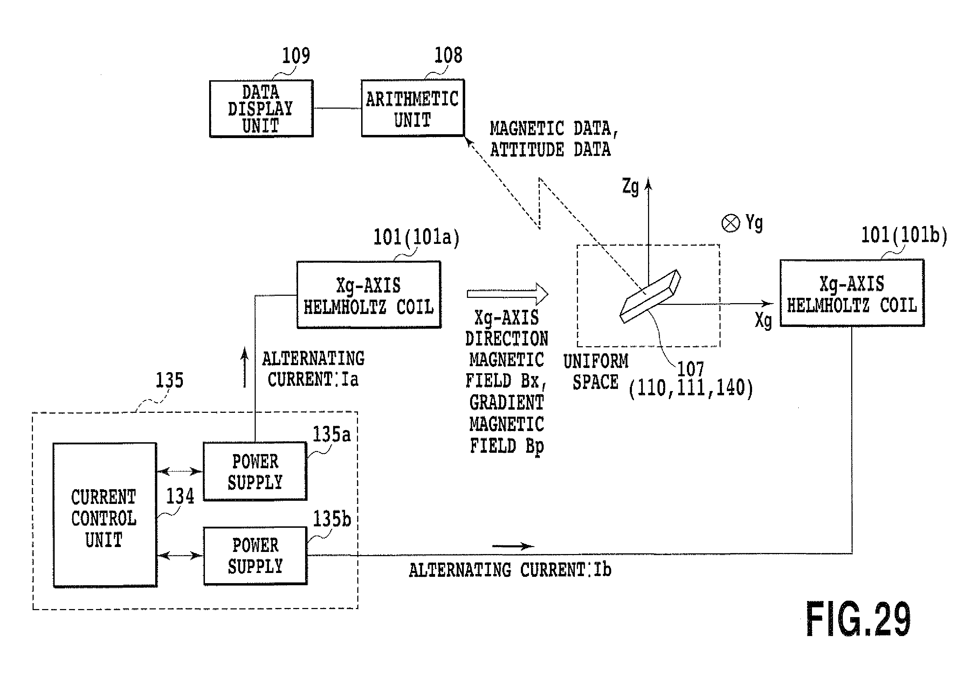

FIG. 29 is a diagram showing a general configuration of an embodiment 10 of the spatial information detecting system in accordance with the present invention. It differs from FIG. 23 of the embodiment 7 in accordance with the present invention in that the Helmholtz coils are placed not as the Zg axis but as the Xg-axis Helmholtz coils 101. In addition, instead of the Zg axis Helmholtz coil power supply unit, an Xg-axis Helmholtz coil power supply unit 135 having the same functions and configuration is provided. The Xg-axis Helmholtz coils 101 are separated into the coil 101a and coil 101b which are connected to the power supply 135a and power supply 135b in the Xg-axis Helmholtz coil power supply unit 135, respectively. Furthermore, the power supplies 135a and 135b are connected to the current control unit 134 so that their generating period and the amount of currents are controlled. As for the alternating currents Ia and Ib fed from the power supply 135a and power supply 135b, they are expressed by replacing terms for generating the uniform magnetic field Bz by those for the uniform magnetic field Bx in (Expression 45) and (Expression 46), and the terms relating to the gradient magnetic field are the same as those of the embodiment 6 or 7. Then, theXg-axis Helmholtz coils 101 generate the alternating uniform magnetic field Bx having a plurality of different frequency components with known phase relationships, and the alternating gradient magnetic field Bp at the same time. The uniform space is a space the uniform magnetic field Bx is generating.

In addition, the spatial information detecting apparatus is the same as that of the embodiment 9. In other words, it has the same configuration as FIG. 26, and hence the description thereof is omitted here.

As for the procedure of the position and attitude detection of the information terminal 107 in the present embodiment 10, it corresponds to replacing the geomagnetism in the embodiment 9 by the alternating uniform magnetic field Bx having the plurality of different frequency components with known phase relationships from the Xg-axis Helmholtz coils, and to changing the generating direction of the gradient magnetic field Bp. In this case also, from the acceleration data from the attitude detecting unit 140, a partial attitude can be expressed. However, since the degree of freedom about the Zg axis remains, all the arbitrary attitudes of the information terminal 107 cannot be expressed as in the embodiment 8. Thus, by further using the uniform magnetic field Bx, the arbitrary attitude of the information terminal 107 is detected. In addition, since the generating direction of the gradient magnetic field Bp is changed, the position information is calculated using the following expression obtained by transforming (Expression 44) in accordance with the coordinate system.

$$Bp = (-2kX, \ kY, \ kZ)^{T} \qquad (\text{Expression 52})$$

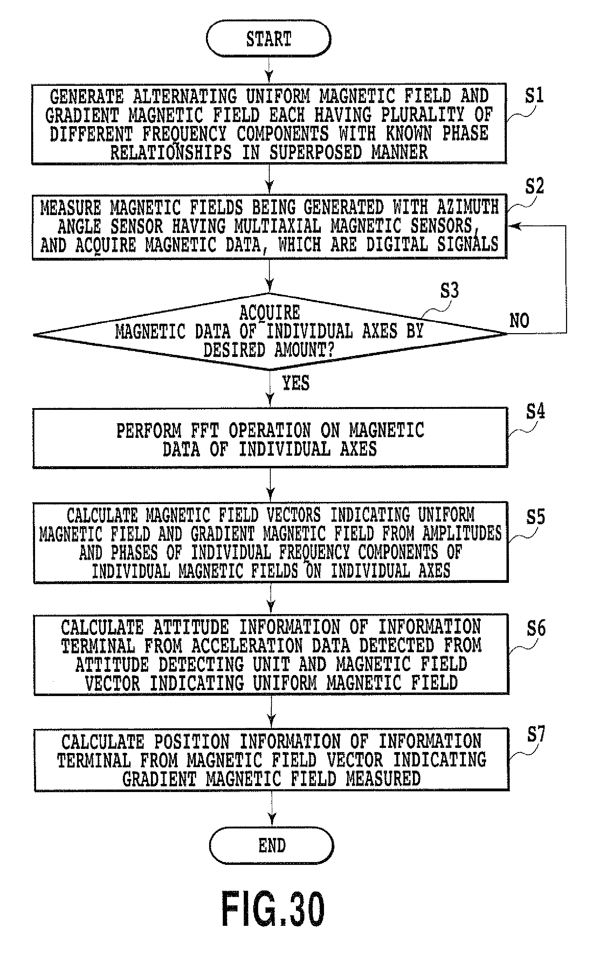

FIG. 30 is a flowchart for explaining the operation of the embodiment 10 of the spatial information detecting system in accordance with the present invention. More specifically, it generates the Xg-axis direction magnetic field Bx, which is an alternating uniform magnetic field, and the individual magnetic fields of the alternating linear gradient magnetic field Bp having the plurality of different frequency components with known phase relationships in a superposed manner (step S1). Next, the azimuth angle sensor 111a having the three-axis magnetic sensor 110 measures the magnetic fields the Xg-axis Helmholtz coils 101 are generating to acquire the magnetic data of the individual axes, which are digital signals (step S2).

Next, the Fourier transform unit 118 makes a decision as to whether it acquires the desired amount of magnetic data required for the FFT operation (step S3). When it acquires the desired amount of magnetic data required for the FFT operation, it proceeds to the next step S4. Unless it acquires the desired amount of magnetic data required for the FFT operation, it returns to step S2.

Next, the Fourier transform unit 118 performs the FFT operation on the desired amount of magnetic data of the individual axes acquired, and calculates the amplitudes and phases of the frequency components of the individual magnetic fields on the individual axes (step S4). Then, the magnetic field vector calculating unit 119 calculates, from the amplitudes and phases of the individual frequency components of the individual magnetic fields on the individual axes, the uniform magnetic field Bx necessary for the position attitude detection and the magnetic field vectors $m_x$ and $m_p$ indicating the gradient magnetic field Bp, which indicate the directions and magnitude of the individual magnetic fields the azimuth angle sensor 111a is measuring (step S5). Then, the position attitude calculating unit 120 calculates the attitude information of the information terminal 107 from the acceleration data a, which is the attitude data the attitude detecting unit 140 detects, and from the magnetic field vector $m_x$ representing the uniform magnetic field (step S6) . In this case, since the acceleration data a indicates a vector seen from the terminal coordinate system indicating the Zg axis direction, the attitude information can be calculated by replacing $m_z$ in (Expression 35) to (Expression 36) by the acceleration data.

Then, since the coordinate transformation from the terminal coordinate system to the absolute coordinate system becomes possible, the vector $F_p$ resulting from transforming the magnetic field vector $m_p$ indicating the measured gradient magnetic field to the absolute coordinate system is obtained from the attitude information of the information terminal 107, and the position information of the information terminal 107 is calculated by expressing the gradient magnetic field Bp in (Expression 48) by (Expression 52) and by using it (step S7).

According to the foregoing procedures, the attitude information of the information terminal 107 can be obtained from the alternating uniform magnetic field Bx and the acceleration data due to the gravitational acceleration, and then the position information of the information terminal 107 can be obtained from the attitude information of the information terminal 107 and the alternating gradient magnetic field Bp. Thus, the attitude and position of the information terminal 107 can be detected. Then, to detect the position and attitude successively, the processing should be returned to step S2.

As described above, the embodiments 7 to 10 in accordance with the present invention can calculate the position of the information terminal from the attitude information of the information terminal with a simple configuration and calculations by generating the alternating linear gradient magnetic field with the plurality of different frequencies having known phase relationships between them.

Incidentally, although the nonuniform magnetic field is a linear gradient magnetic field in the embodiments 7 to 10, the nonuniform magnetic field shown in the embodiments 4 and 5 can also be used instead of the gradient magnetic field. For example, in the embodiments 7 and 10, replacing the nonuniform magnetic field generating unit by the nonuniform magnetic field generating unit of the embodiment 5 also enables the position attitude detection of the information terminal in the same procedures using the same spatial information detecting apparatus. In addition, in the embodiments 8 and 9, replacing the nonuniform magnetic field generating unit by the magnetic field the single coil generates in the embodiment 4 in accordance with the present invention also enables the position attitude detection of the information terminal in the same procedures using the same spatial information detecting apparatus. In these cases, however, (Expression 48) for calculating the position information is changed to (Expression 42) to be used appropriately in accordance with the coordinate system.

In addition, when calculating the position information in the embodiments 7 to 10, it is not always necessary to calculate it by the algebraic expression as (Expression 48), but a method can also be employed which measures magnetic fields at detecting positions in advance, and determines the position referring to them at a time of use. Furthermore, as for the gradient of the magnetic field expressed by (Expression 44) or (Expression 52), it can be obtained by measurement in advance, or by simulation. Additionally, although the gradient of the magnetic field is expressed by (Expression 44) in the embodiments 7 to 9 and by (Expression 52) in the embodiment 10, it is obvious that the attitude and position can be detected easily in the present invention by a gradient magnetic field given by an expression other than the foregoing expressions (for example, there is a case where the constant k in (Expression 44) or (Expression 52) varies for the individual axes) . When the gradient magnetic field is not expressed by the expression such as (Expression 44) or (Expression 52), it can be obtained by measurement in advance or by simulation rather than the foregoing algebraic expression calculation.

Furthermore, although examples are described which utilize the geomagnetism in the embodiments 7 and 9, the geomagnetism can also be replaced by a DC magnetic field (static magnetic field) generated from a coil or coils. For example, in the embodiment 6, the attitude and position of the information terminal can be obtained by the same procedures as in the embodiment 7 by generating the DC uniform magnetic field from the Xg-axis Helmholtz coils. Incidentally, in the embodiments 7 and 9, since the number of coils for generating the magnetic field can be reduced by using the geomagnetism, the configuration of the system can be simplified. In addition, in the embodiment 10, instead of the alternating uniform magnetic field Bx, a DC magnetic field can also be superposed on the gradient magnetic field Bp. In this case, the attitude and position can also be obtained by the same procedures as in the embodiment 9. Thus, cases of using a DC magnetic field in place of the geomagnetism are also included in the present invention.

Additionally, it is obvious that the Fourier transform unit described in all the foregoing embodiments 1 to 10 can also use a DFT (Discrete Fourier Transform) instead of the FFT. Farthermore, it can also be replaced by operation processing for calculating the amplitudes and phases, which a person having a good knowledge of the digital signal processing can perform easily, such as constructing a digital filter capable of extracting only the frequencies to be used and calculating the phases by a Hilbert transform. Such cases are also included in the present invention.

As described above, according to the present invention, various types of spatial information detection become possible with a simple configuration and simple calculation.

In the present invention, the Fourier transform unit calculates the phases and amplitudes of the plurality of frequency components about the individual axes on the basis of the signals of the individual axes from the magnetic field detecting unit. Then, it calculates the magnitude of DC components as well. The meaning thereof will be described below for the individual cases of the embodiments separately.

(1) From Embodiment 1 to Embodiment 3, and Embodiment 8 and Embodiment 9.
The embodiment 1 to 3, 8 and 9 use a single alternating magnetic field including two frequency components. The Fourier transform unit calculates, as the phases and amplitudes of the plurality of frequency components of the individual axes, the phases of the two frequency components of the individual axes, and the amplitude of at least one of the frequency components.
(2) From Embodiment 4 to Embodiment 7, and Embodiment 10.
The embodiments 4 to 7, and 10 use a plurality of alternating magnetic fields including two frequency components (multiple types such as uniform, nonuniform, and gradient magnetic fields) The Fourier transform unit calculates, as the phases and amplitudes of the plurality of frequency components of the individual axes, the phases of two frequency components the individual magnetic fields on the individual axes have, and the amplitude of at least one of the frequency components of the two frequency components.
(3) Embodiment 7 and Embodiment 9.
In the embodiment 7 and embodiment 9 using a DC magnetic field, the Fourier transform unit calculates, in addition to the phases and amplitude of the foregoing (1) or (2), the magnitude of the DC components (0 Hz frequency components) of the individual axes.

In the present invention, since it is known that the magnetic field to be detected has specific frequencies, it can be identified even in a magnetic field environment including other frequency alternating magnetic fields or noise magnetic fields. In addition, the magnetic field to be generated includes only the frequency components that have the frequency ratio represented by the least integers of the even number and odd number, and have known phases. Thus, since it is not necessary to use a filter for separating the measured signal into frequency bands, the configuration is easy, and the degree of freedom of the frequency selection is high. Additionally, it can select the frequencies after the system configuration freely.

Furthermore, that the magnetic field detecting unit does not require any filters for separating into the frequency bands for individual measurement axes enables a small circuit scale, thereby being able to realize a miniaturized, inexpensive magnetic sensor. In addition, since it is not necessary to synchronize the generation and measurement of the magnetic field, a reference signal is not required, a configuration becomes simple, and measurement at arbitrary timing and continuous measurement are possible by generating the magnetic field once.

Furthermore, forming the alternating uniform magnetic field having a plurality of different frequencies with known phase relationships between them enables detection of an arbitrary attitude by a simple calculation. Additionally, generating the nonuniform magnetic field at arbitrary coordinates in the uniform space thus formed in the uniform magnetic field enables detection of the position as well as the detection of the attitude, and it is obvious from the foregoing embodiments that they can be calculated by simple computations. In addition, as described in some of the foregoing embodiments, the position and attitude of the information terminal can be detected with only the magnetic sensor.

Moreover, as for the alternating uniform magnetic field and the nonuniform magnetic field, which have a plurality of different frequencies with known phase relationships between them, they can be generated from the same coil. This makes it possible to simplify the system configuration, and to obtain, when the nonuniform magnetic field is a gradient magnetic field, the gradient of the gradient magnetic field simultaneously with the measurement of the intensity of the uniform magnetic field. Thus, it is not necessary to measure the gradient of the gradient magnetic field for detecting the position.

In addition, since the Fourier transform unit can separate the DC components and the alternating components simultaneously without using a filter, the DC component such as the geomagnetism can also be used for the attitude information calculation by simultaneously detecting the DC component.

The present invention is not limited to the foregoing embodiments, and covers all such design modifications as fall within the spirit of the present invention.

INDUSTRIAL APPLICABILITY

The present invention, which relates to a spatial information detecting system and detecting method thereof and a spatial information detecting apparatus, can perform continuous measurement using the alternating magnetic fields. In addition, it can provide a spatial information detecting system with a high degree of freedom of frequency setting and a simple configuration. Likewise, it can provide the spatial information detecting method and a spatial information detecting apparatus thereof.

**Claims**

1. A spatial information detecting system comprising:

    at least one magnetic field generating unit for generating at least one alternating magnetic field having a plurality of different frequency components with known phase relationships between them;
    a magnetic field detecting unit having a multiaxial magnetic sensor for detecting the magnetic field generated from the magnetic field generating unit;
    a Fourier transform unit for calculating, according to output signals of individual axes of the magnetic field detecting unit, phases and amplitudes of a plurality of frequency components on the individual axes; and
    a magnetic field vector calculating unit for calculating, according to an output signal from the Fourier transform unit, signs of the amplitudes of the individual axes from phase relationships between the plurality of frequency components on the individual axes, and for calculating at least one magnetic field vector representing a direction and magnitude of the alternating magnetic field from the signs and the amplitudes.

2. The spatial information detecting system as claimed in claim 1, further comprising:

    an attitude detecting unit for detecting an attitude of the magnetic field detecting unit; and
    a position/attitude calculating unit for calculating, from an output signal of the attitude detecting unit and an output signal of the magnetic field vector calculating unit, attitude information and position information of the magnetic field detecting unit.

3. The spatial information detecting system as claimed in claim 2, wherein
    the magnetic field detecting unit includes a multiaxial magnetic sensor for detecting a DC magnetic field in addition to the alternating magnetic field;
    the Fourier transform unit calculates the magnitude of DC components on the individual axes in addition to the phases and amplitudes of the plurality of frequency components on the individual axes;
    the magnetic field vector calculating unit calculates, in addition to the magnetic field vector based on the alternating magnetic field, a DC magnetic field vector representing a direction and magnitude of the DC magnetic field from the magnitude of the DC components; and
    the position/attitude calculating unit calculates the attitude information of the magnetic field detecting unit from the output signal of the attitude detecting unit and from the DC magnetic field vector, and calculates the position information of the magnetic field detecting unit from the attitude information and from the magnetic field vector based on the alternating magnetic field from the magnetic field generating unit.

4. The spatial information detecting system as claimed in claim 3, wherein the DC magnetic field is geomagnetism.

**5.** The spatial information detecting system as claimed in any one of claims 1 to 4, wherein
the magnetic field generating unit generates at least one alternating nonuniform magnetic field which has a plurality of different frequency components with known phase relationships between them, and which varies its direction and magnitude depending on its position.

**6.** The spatial information detecting system as claimed in claim 5, wherein
one of nonuniform magnetic field is an a alternating gradient magnetic field having a plurality of different frequency components with known phase relationships between them.

**7.** The spatial information detecting system as claimed in claim 1, wherein
the magnetic field generating unit generates at least one alternating uniform magnetic field having the plurality of different frequency components with known phase relationships between them, and at least one alternating nonuniform magnetic field that has a plurality of different frequency components with known phase relationships between them, and that varies its direction or magnitude depending on a position;
the magnetic field detecting unit detects the uniform magnetic fields and the nonuniform magnetic fields;
the magnetic field vector calculating unit calculates, according to the output signal from the Fourier transform unit, signs of the amplitudes of the individual axes of the uniform magnetic fields and of the nonuniform magnetic fields from the phase relationships between the plurality of frequency components on the individual axes, and calculates at least one uniform magnetic field vector and at least one nonuniform magnetic field vector representing the direction and magnitude of the uniform magnetic field and of the nonuniform magnetic field from the amplitudes and the signs of the individual axes; and
the position/attitude calculating unit calculates the attitude information of the magnetic field detecting unit from the uniform magnetic field vector output from the magnetic field vector calculating unit, and calculates the position information of the magnetic field detecting unit from the attitude information and from the nonuniform magnetic field vector output from the magnetic field vector calculating unit.

**8.** The spatial information detecting system as claimed in claim 7, further comprising:

an attitude detecting unit for detecting the attitude of the magnetic field detecting unit, wherein
the position/attitude calculating unit calculates the attitude information of the magnetic field detecting unit from an output of the attitude detecting unit and from the uniform magnetic field vector output from the magnetic field vector calculating unit, and calculates the position information of the magnetic field detecting unit from the attitude information and from the nonuniform magnetic field vector output from the magnetic field vector calculating unit.

**9.** The spatial information detecting system as claimed in claim 7, wherein
the magnetic field detecting unit includes a multiaxial magnetic sensor for detecting a DC magnetic field in addition to the uniform magnetic field and the nonuniform magnetic field;
the Fourier transform unit calculates the magnitude of DC components on the individual axes in addition to the phases and amplitudes of the plurality of frequency components on the individual axes;
the magnetic field vector calculating unit calculates, in addition to the uniform magnetic field vector and the nonuniform magnetic field vector, a DC magnetic field vector representing a direction and magnitude of the DC magnetic field from the magnitude of the DC components; and
the position/attitude calculating unit calculates the attitude information of the magnetic field detecting unit from the uniform magnetic field vector and the DC magnetic field vector which are output from the magnetic field vector calculating unit, and calculates the position information of the magnetic field detecting unit from the attitude information and from the nonuniform magnetic field vector output from the magnetic field vector calculating unit.

**10.** The spatial information detecting systemas claimed in claim 9, wherein the DC magnetic field is geomagnetism.

**11.** The spatial information detecting system as claimed in any one of claims 7 to 10, wherein
One of the nonuniform magnetic field is an alternating gradient magnetic field having a plurality of different frequency components with known phase relationships between them.

**12.** The spatial information detecting system as claimed in any one of claims 7 to 11, wherein
the magnetic field generating unit comprises a coil for generating the uniform magnetic field and the nonuniform magnetic field in a superposed manner.

**13.** The spatial information detecting system as claimed in any one of claims 1 to 12, wherein
an integer ratio between the plurality of frequency components is an even number to an odd number.

**14.** The spatial information detecting systemas claimed in claim 13, wherein the integer ratio is 2 to 1.

**15.** A spatial information detecting method comprising:

a magnetic field detecting step of detecting at least one alternating magnetic field having a plurality of different frequency components with known phase relationships between them using a magnetic field detecting unit having a multiaxial magnetic sensor;
a Fourier transform step of calculating, according to output signals of individual axes from the magnetic field detecting step, phases and amplitudes of a plurality of frequency components on the individual axes; and
a magnetic field vector calculating step of calculating, according to an output signal from the Fourier transform step, signs of the amplitudes of the individual axes from phase relationships between the plurality of frequency components on the individual axes, and of calculating a magnetic field vector representing a direction and magnitude of the alternating magnetic field from the signs and the amplitudes.

**16.** The spatial information detecting method as claimed in claim 15, further comprising:

an attitude detecting step of detecting an attitude of the magnetic field detecting unit; and
a position/attitude calculating step of calculating, from an output signal of the attitude detecting step and an output signal of the magnetic field vector calculating step, attitude information and position information of the magnetic field detecting unit.

**17.** The spatial information detecting method as claimed in claim 16, wherein
the magnetic field detecting step detects a DC magnetic field in addition to the alternating magnetic field;
the Fourier transform step calculates the magnitude of DC components on the individual axes in addition to the phases and amplitudes of the plurality of frequency components on the individual axes;
the magnetic field vector calculating step calculates, in addition to the magnetic field vector based on the alternating magnetic field, a DC magnetic field vector representing a direction and magnitude of the DC magnetic field from the magnitude of the DC components; and
the position/attitude calculating step calculates the attitude information of the magnetic field detecting unit from the output signal of the attitude detecting step and from the DC magnetic field vector, and calculates the position information of the magnetic field detecting unit from the attitude information and from the magnetic field vector based on the alternating magnetic field.

**18.** The spatial information detecting method as claimed in claim 15, wherein
the magnetic field detecting step detects at least one alternating uniform magnetic field having the plurality of different frequency components with known phase relationships between them, and at least one alternating nonuniform magnetic field that has a plurality of different frequency components having known phase relationships between them, and that varies its direction or magnitude depending on a position;
the magnetic field vector calculating step calculates, according to the output signal from the Fourier transform step, signs of the amplitudes of the individual axes of the nonuniform magnetic field in addition to those of the uniform magnetic field from the phase relationships between the plurality of frequency components on the individual axes, and calculates at least one uniform magnetic field vector and at least one nonuniform magnetic field vector representing the direction and magnitude of the uniform magnetic field and of the nonuniform magnetic field from the amplitudes and the signs of the individual axes; and
the position/attitude calculating step calculates the attitude information of the magnetic field detecting unit from the uniform magnetic field vector output from the magnetic field vector calculating step, and calculates the position information of the magnetic field detecting unit from the attitude information and from the nonuniform magnetic field vector output from the magnetic field vector calculating step.

**19.** The spatial information detecting method as claimed in claim 18, further comprising:

an attitude detecting step of detecting an attitude of the magnetic field detecting unit, wherein
the position/attitude calculating step calculates the attitude information of the magnetic field detecting unit from an output of the attitude detecting step and from the uniform magnetic field vector output from the magnetic field vector calculating step, and calculates the position information of the magnetic field detecting unit from the attitude information and from the nonuniform magnetic field vector output from the magnetic field vector calculating step.

20. The spatial information detecting method as claimed in claim 18, wherein
the magnetic field detecting step detects a DC magnetic field in addition to the uniform magnetic field and the nonuniform magnetic field;
the Fourier transform step calculates the magnitude of DC components on the individual axes in addition to the phases and amplitudes of the plurality of frequency components on the individual axes;
the magnetic field vector calculating step calculates, in addition to the uniform magnetic field vector and the nonuniform magnetic field vector, a DC magnetic field vector representing a direction and magnitude of the DC magnetic field from the magnitude of the DC components; and
the position/attitude calculating step calculates the attitude information of the magnetic field detecting unit from the uniform magnetic field vector and the DC magnetic field vector which are output from the magnetic field vector calculating step, and calculates the position information of the magnetic field detecting unit from the attitude information and from the nonuniform magnetic field vector output from the magnetic field vector calculating step.

21. A spatial information detecting apparatus comprising:

a magnetic field detecting unit having a multiaxial magnetic sensor for detecting at least one magnetic field generated from a magnetic field generating unit for generating at least one alternating magnetic field having a plurality of different frequency components with known phase relationships between them;
a Fourier transform unit for calculating, according to output signals of individual axes of the magnetic field detecting unit, phases and amplitudes of the plurality of frequency components on the individual axes; and
a magnetic field vector calculating unit for calculating, according to an output signal from the Fourier transform unit, signs of the amplitudes of the individual axes from phase relationships between the plurality of frequency components on the individual axes, and for calculating a magnetic field vector representing a direction and magnitude of the alternating magnetic field from the signs and the amplitudes.

22. The spatial information detecting apparatus as claimed in claim 21, further comprising:

an attitude detecting unit for detecting an attitude of the magnetic field detecting unit; and
a position/attitude calculating unit for calculating, from an output signal of the attitude detecting unit and an output signal of the magnetic field vector calculating unit, attitude information and position information of the magnetic field detecting unit.

23. The spatial information detecting apparatus as claimed in claim 22, wherein
the magnetic field detecting unit includes a multiaxial magnetic sensor for detecting a DC magnetic field in addition to the alternating magnetic field;
the Fourier transform unit calculates the magnitude of DC components on the individual axes in addition to the phases and amplitudes of the plurality of frequency components on the individual axes;
the magnetic field vector calculating unit calculates, in addition to the magnetic field vector based on the alternating magnetic field, a DC magnetic field vector representing a direction and magnitude of the DC magnetic field from the magnitude of the DC components; and
the position/attitude calculating unit calculates the attitude information of the magnetic field detecting unit from the output signal of the attitude detecting unit and from the DC magnetic field vector, and calculates the position information of the magnetic field detecting unit from the attitude information and from the magnetic field vector based on the alternating magnetic field from the magnetic field generating unit.

24. The spatial information detecting apparatus as claimed in claim 21, wherein
the magnetic field detecting unit detects a magnetic field generated from the magnetic field generating unit for generating at least one alternating uniform magnetic field having a plurality of different frequency components with known phase relationships between them, and at least one alternating nonuniform magnetic field that has a plurality of different frequency components having known phase relationships between them, and that varies its direction or magnitude depending on a position;
the magnetic field vector calculating unit calculates, according to the output signal from the Fourier transform unit, signs of the amplitudes of the individual axes of the uniform magnetic field and of the nonuniform magnetic field from the phase relationships between the plurality of frequency components on the individual axes, and calculates at least one uniform magnetic field vector and at least one nonuniform magnetic field vector representing the direction and magnitude of the uniform magnetic field and of the nonuniform magnetic field from the amplitudes and the signs of the individual axes; and
the position/attitude calculating unit calculates the attitude information of the magnetic field detecting unit from the uniform magnetic field vector output from the magnetic field vector calculating unit, and calculates the position information of the magnetic field detecting unit from the attitude information and from the nonuniform magnetic field vector output from the magnetic field vector calculating unit.

25. The spatial information detecting apparatus as claimed in claim 24, further comprising:

an attitude detecting unit for detecting an attitude of the magnetic field detecting unit, wherein
the position/attitude calculating unit calculates the attitude information of the magnetic field detecting unit from an output of the attitude detecting unit and from the uniform magnetic field vector output from the magnetic field vector calculating unit, and calculates the position information of the magnetic field detecting unit from the attitude information and from the nonuniform magnetic field vector output from the magnetic field vector calculating unit.

26. The spatial information detecting apparatus as claimed in claim 24, wherein
the magnetic field detecting unit includes a multiaxial magnetic sensor for detecting a DC magnetic field in addition to the uniform magnetic field and the nonuniform magnetic field;
the Fourier transform unit calculates the magnitude of DC components on the individual axes in addition to the phases and amplitudes of the plurality of frequency components on the individual axes;
the magnetic field vector calculating unit calculates, in addition to the uniform magnetic field vector and the nonuniform magnetic field vector, a DC magnetic field vector representing a direction and magnitude of the DC magnetic field from the magnitude of the DC components; and
the position/attitude calculating unit calculates the attitude information of the magnetic field detecting unit from the uniform magnetic field vector and the DC magnetic field vector which are output from the magnetic field vector calculating unit, and calculates the position information of the magnetic field detecting unit from the attitude information and from the nonuniform magnetic field vector output from the magnetic field vector calculating unit.

POWER SUPPLY _1a_

_1_

COIL _1b_

MAGNETIC FIELD
DIRECTION

_2_

20
(21)

ARITHMETIC
UNIT _3_

# FIG.1

z

21b

LONGITUDINAL
DIRECTION

LATERAL
DIRECTION

2

21a

y

x

21c

xyz COORDINATE
SYSTEM

**FIG.2A**

Zg

1b

Yg

XgYgZg COORDINATE
SYSTEM

Xg

POSITIVE DIRECTION OF
GENERATED MAGNETIC FIELD

**FIG.2B**

EP 2 110 639 A1

# FIG.3

**MAGNETIC FIELD DETECTING UNIT** 20

23 MAGNETIC SENSOR DRIVING UNIT

20a

21a x-AXIS MAGNETIC SENSOR

21b y-AXIS MAGNETIC SENSOR

21c z-AXIS MAGNETIC SENSOR

21

22 MULTIPLEXER UNIT

24 SIGNAL AMPLIFYING UNIT

25 A/D CONVERTER

26 DATA TRANSMITTING UNIT

**ARITHMETIC UNIT**

31 DATA RECEIVING UNIT

32 FOURIER TRANSFORM UNIT

33 MAGNETIC FIELD VECTOR CALCULATING UNIT

34 DIRECTION CALCULATING UNIT

DIRECTIONAL DATA OUTPUT

3

# FIG.4

FIG.5

**FIG.6**

# FIG.7

| |
|---|
| **FIG.7A** |
| **FIG.7B** |

```
          ┌─────────────────┐
          │      START      │
          └─────────────────┘
                   │
                   ▼
  ┌──────────────────────────────────────────────┐  S1
  │ GENERATE TWO DIFFERENT ALTERNATING MAGNETIC   │
  │ FIELDS WITH FREQUENCY RATIO OF 1:2 IN         │
  │ SUPERPOSED MANNER                             │
  └──────────────────────────────────────────────┘
                   │
                   ▼
  ┌──────────────────────────────────────────────┐  S2
  │ MEASURE MAGNETIC FIELDS BEING GENERATED WITH  │◄──┐
  │ AZIMUTH ANGLE SENSOR HAVING THREE-AXIS        │   │
  │ MAGNETIC SENSORS, AND ACQUIRE MAGNETIC DATA,  │   │
  │ WHICH ARE DIGITAL SIGNALS                     │   │
  └──────────────────────────────────────────────┘   │
                   │                                  │
                   ▼                          S3      │
            ╱───────────────────────╲               │
           ╱        ACQUIRE           ╲    NO        │
          ╱  THREE-AXIS MAGNETIC DATA  ╲─────────────┘
          ╲   BY DESIRED AMOUNT?       ╱
           ╲                          ╱
            ╲────────────────────────╱
                   │YES
                   ▼
  ┌──────────────────────────────────────────────┐  S4
  │ PERFORM FFT OPERATION ON x-AXIS MAGNETIC DATA │
  └──────────────────────────────────────────────┘
                   │
                   ▼
  ┌──────────────────────────────────────────────┐  S5
  │ PERFORM FFT OPERATION ON y-AXIS MAGNETIC DATA │
  └──────────────────────────────────────────────┘
                   │
                   ▼
  ┌──────────────────────────────────────────────┐  S6
  │ PERFORM FFT OPERATION ON z-AXIS MAGNETIC DATA │
  └──────────────────────────────────────────────┘
                   │
                   ▼
  ┌──────────────────────────────────────────────┐  S7
  │ CALCULATE AMPLITUDE OF FIRST FREQUENCY        │
  │ COMPONENT FROM x-AXIS FFT DATA                │
  └──────────────────────────────────────────────┘
```

**FIG.7A**

EP 2 110 639 A1

CALCULATE AMPLITUDE OF FIRST FREQUENCY
COMPONENT FROM y-AXIS FFT DATA                          S8

CALCULATE AMPLITUDE OF FIRST FREQUENCY
COMPONENT FROM z-AXIS FFT DATA                          S9

CALCULATE PHASES OF FIRST FREQUENCY COMPONENT AND
SECOND FREQUENCY COMPONENT FROM x-AXIS FFT DATA         S10

CALCULATE PHASES OF FIRST FREQUENCY COMPONENT AND
SECOND FREQUENCY COMPONENT FROM y-AXIS FFT DATA         S11

CALCULATE PHASES OF FIRST FREQUENCY COMPONENT AND
SECOND FREQUENCY COMPONENT FROM z-AXIS FFT DATA         S12

CALCULATE AMPLITUDE SIGN DECISION VALUES η OF INDIVIDUAL
AXES FROM PHASES θ OF FIRST FREQUENCY COMPONENT AND PHASES
φ OF SECOND FREQUENCY COMPONENT OF INDIVIDUAL AXES     S13

DECIDE SIGNS OF AMPLITUDES OF INDIVIDUAL AXES ACCORDING
TO η OF INDIVIDUAL AXES, AND OBTAIN SIGN-AFFIXED AMPLITUDES
OF INDIVIDUAL AXES, THAT IS, MAGNETIC FIELD VECTORS    S14

CALCULATE DIRECTIONAL DATA ψ
FROM MAGNETIC FIELD VECTORS                             S15

FIG.7B

END

OBTAIN AZIMUTH ANGLE FROM COMBINED MAGNETIC FIELD OF
1 Hz AND 2 Hz SINUSOIDAL WAVES ON THE ASSUMPTION THAT
SAMPLING FREQUENCY IS 100 Hz, AND FFT DATA SIZE IS 100

FIG.8

EP 2 110 639 A1

FIG.9

START

GENERATE TWO DIFFERENT ALTERNATING MAGNETIC FIELDS
WITH FREQUENCY RATIO OF M:N IN SUPERPOSED MANNER ⌇ S1

MEASURE MAGNETIC FIELDS BEING GENERATED WITH AZIMUTH
ANGLE SENSOR HAVING THREE-AXIS MAGNETIC SENSORS, AND
ACQUIRE MAGNETIC DATA, WHICH ARE DIGITAL SIGNALS ⌇ S2

ACQUIRE
THREE-AXIS MAGNETIC DATA BY DESIRED
AMOUNT? ⌇ S3 — NO

↓ YES

PERFORM FFT OPERATION ON x-AXIS MAGNETIC DATA ⌇ S4

PERFORM FFT OPERATION ON y-AXIS MAGNETIC DATA ⌇ S5

PERFORM FFT OPERATION ON z-AXIS MAGNETIC DATA ⌇ S6

CALCULATE AMPLITUDE OF FIRST FREQUENCY
COMPONENT FROM x-AXIS FFT DATA ⌇ S7

**FIG.9A**

CALCULATE AMPLITUDE OF FIRST FREQUENCY
COMPONENT FROM y-AXIS FFT DATA ⌇ S8

EP 2 110 639 A1

S9
CALCULATE AMPLITUDE OF FIRST FREQUENCY
COMPONENT FROM z-AXIS FFT DATA

S10
CALCULATE PHASES OF FIRST FREQUENCY COMPONENT AND
SECOND FREQUENCY COMPONENT FROM x-AXIS FFT DATA

S11
CALCULATE PHASES OF FIRST FREQUENCY COMPONENT AND
SECOND FREQUENCY COMPONENT FROM y-AXIS FFT DATA

S12
CALCULATE PHASES OF FIRST FREQUENCY COMPONENT AND
SECOND FREQUENCY COMPONENT FROM z-AXIS FFT DATA

S13
CALCULATE AMPLITUDE SIGN DECISION VALUES η OF INDIVIDUAL
AXES FROM PHASES θ OF FIRST FREQUENCY COMPONENT AND PHASES
φ OF SECOND FREQUENCY COMPONENT OF INDIVIDUAL AXES

S14
DECIDE SIGNS OF AMPLITUDES OF INDIVIDUAL AXES ACCORDING
TO η OF INDIVIDUAL AXES, AND OBTAIN SIGN-AFFIXED AMPLITUDES
OF INDIVIDUAL AXES, THAT IS, MAGNETIC FIELD VECTORS

S15
CALCULATE DIRECTIONAL DATA ψ
FROM MAGNETIC FIELD VECTORS

FIG.9B

END

OBTAIN AZIMUTH ANGLE FROM COMBINED MAGNETIC FIELD OF
3 Hz AND 8 Hz SINUSOIDAL WAVES ON THE ASSUMPTION THAT
SAMPLING FREQUENCY IS 100 Hz, AND FFT DATA SIZE IS 100

$y = 0.9999x$
$R^2 = 1$

FIG.10

EP 2 110 639 A1

FIG.11

## FIG.12

| FIG.12A |
|---------|
| FIG.12B |

START

GENERATE TWO DIFFERENT ALTERNATING MAGNETIC FIELDS WITH FREQUENCY RATIO OF M:N IN SUPERPOSED MANNER — S1

MEASURE MAGNETIC FIELDS BEING GENERATED WITH AZIMUTH ANGLE SENSOR HAVING TWO-AXIS MAGNETIC SENSORS, AND ACQUIRE MAGNETIC DATA, WHICH ARE DIGITAL SIGNALS — S2

ACQUIRE TWO-AXIS MAGNETIC DATA BY DESIRED AMOUNT? — S3    NO

YES

PERFORM FFT OPERATION ON x-AXIS MAGNETIC DATA — S4

PERFORM FFT OPERATION ON y-AXIS MAGNETIC DATA — S5

CALCULATE AMPLITUDE OF FIRST FREQUENCY COMPONENT FROM x-AXIS FFT DATA — S6

## FIG.12A

EP 2 110 639 A1

EP 2 110 639 A1

```
                    │
                    ▼
┌─────────────────────────────────────────────┐      S7
│      CALCULATE AMPLITUDE OF FIRST FREQUENCY   │
│         COMPONENT FROM y-AXIS FFT DATA        │
└─────────────────────────────────────────────┘
                    │
                    ▼
┌─────────────────────────────────────────────┐      S8
│  CALCULATE PHASES OF FIRST FREQUENCY COMPONENT AND │
│  SECOND FREQUENCY COMPONENT FROM x-AXIS FFT DATA   │
└─────────────────────────────────────────────┘
                    │
                    ▼
┌─────────────────────────────────────────────┐      S9
│  CALCULATE PHASES OF FIRST FREQUENCY COMPONENT AND │
│  SECOND FREQUENCY COMPONENT FROM y-AXIS FFT DATA   │
└─────────────────────────────────────────────┘
                    │
                    ▼
┌─────────────────────────────────────────────┐      S10
│  CALCULATE AMPLITUDE SIGN DECISION VALUES η OF INDIVIDUAL │
│  AXES FROM PHASES θ OF FIRST FREQUENCY COMPONENT AND PHASES │
│    φ OF SECOND FREQUENCY COMPONENT OF INDIVIDUAL AXES    │
└─────────────────────────────────────────────┘
                    │
                    ▼
┌─────────────────────────────────────────────┐      S11
│  DECIDE SIGNS OF AMPLITUDES OF INDIVIDUAL AXES ACCORDING │
│  TO η OF INDIVIDUAL AXES, AND OBTAIN SIGN-AFFIXED AMPLITUDES │
│     OF INDIVIDUAL AXES, THAT IS, MAGNETIC FIELD VECTORS   │
└─────────────────────────────────────────────┘
                    │
                    ▼
┌─────────────────────────────────────────────┐      S12
│ CALCULATE DIRECTIONAL DATA ψ FROM MAGNETIC FIELD VECTORS │
└─────────────────────────────────────────────┘
                    │
                    ▼
              (    END    )
```

# FIG.12B

FIG.13

EP 2 110 639 A1

FIG.14

EP 2 110 639 A1

**MAGNETIC FIELD DETECTING UNIT** 111

**AZIMUTH ANGLE SENSOR**

MAGNETIC SENSOR DRIVING UNIT 113

x-AXIS MAGNETIC SENSOR 110a

y-AXIS MAGNETIC SENSOR 110b

z-AXIS MAGNETIC SENSOR 110c

110

MULTIPLEXER UNIT 112

SIGNAL AMPLIFYING UNIT 114

A/D CONVERTER 115

111a

DATA TRANSMITTING UNIT 116

**ARITHMETIC UNIT**

DATA RECEIVING UNIT 117

FOURIER TRANSFORM UNIT 118

MAGNETIC FIELD VECTOR CALCULATING UNIT 119

POSITION/ ATTITUDE CALCULATING UNIT 120

ATTITUDE INFORMATION/ POSITION INFORMATION

108

# FIG.15

CENTRAL AXIS

POSITION DETECTIVE
MAGNETIC FIELD Bp

103

POSITION DETECTIVE MAGNETIC
FIELD GENERATING COIL

# FIG.16

FIG.17

START

**S1** GENERATE MAGNETIC FIELDS FROM INDIVIDUAL COILS

**S2** MEASURE MAGNETIC FIELDS BEING GENERATED WITH AZIMUTH ANGLE SENSOR HAVING THREE-AXIS MAGNETIC SENSORS, AND ACQUIRE MAGNETIC DATA, WHICH ARE DIGITAL SIGNALS

**S3** ACQUIRE THREE-AXIS MAGNETIC DATA BY DESIRED AMOUNT? — NO

YES

**S4** PERFORM FFT OPERATION ON MAGNETIC DATA OF INDIVIDUAL AXES, AND CALCULATE AMPLITUDES AND PHASES OF INDIVIDUAL AXES OF FREQUENCY COMPONENTS OF INDIVIDUAL MAGNETIC FIELDS ON INDIVIDUAL AXES

**S5** CALCULATE MAGNETIC FIELD VECTORS, WHICH REPRESENT MAGNITUDE AND DIRECTION OF INDIVIDUAL MAGNETIC FIELDS AND ARE NECESSARY FOR POSITION ATTITUDE DETECTION

**S6** CALCULATE ATTITUDE INFORMATION FROM ATTITUDE DETECTIVE MAGNETIC FIELD VECTORS MEASURED

**S7** CALCULATE POSITION INFORMATION FROM POSITION DETECTIVE MAGNETIC FIELD VECTORS MEASURED

END

FIG.18

FIG.19

FIG.20

# FIG.21A

Zg

122b

MAGNETIC FIELD
GENERATED BY COIL 122b ⟶ DIRECTION OF CURRENT Ib

MAGNETIC FIELD
GENERATED BY COIL 122a ⟶

Yg

Xg

122a

DIRECTION OF CURRENT Ia

# FIG.21B

Bpx

Xg

ORIGIN

START

GENERATE TWO UNIFORM ALTERNATING MAGNETIC FIELDS AND A GRADIENT MAGNETIC FIELD EACH HAVING PLURALITY OF DIFFERENT FREQUENCY COMPONENTS WITH KNOWN PHASE RELATIONSHIPS IN SUPERPOSED MANNER — S1

MEASURE MAGNETIC FIELDS BEING GENERATED WITH AZIMUTH ANGLE SENSOR HAVING THREE-AXIS MAGNETIC SENSORS, AND ACQUIRE MAGNETIC DATA, WHICH ARE DIGITAL SIGNALS — S2

ACQUIRE MAGNETIC DATA OF INDIVIDUAL AXES BY DESIRED AMOUNT? — S3    NO

YES

PERFORM FFT OPERATION ON MAGNETIC DATA OF INDIVIDUAL AXES — S4

CALCULATE MAGNETIC FIELD VECTORS INDICATING TWO UNIFORM MAGNETIC FIELDS AND GRADIENT MAGNETIC FIELD FROM AMPLITUDES AND PHASES OF INDIVIDUAL FREQUENCY COMPONENTS OF INDIVIDUAL MAGNETIC FIELDS ON INDIVIDUAL AXES — S5

CALCULATE ATTITUDE INFORMATION OF INFORMATION TERMINAL FROM MAGNETIC FIELD VECTORS INDICATING TWO UNIFORM MAGNETIC FIELDS MEASURED — S6

CALCULATE POSITION INFORMATION OF INFORMATION TERMINAL FROM MAGNETIC FIELD VECTOR INDICATING GRADIENT MAGNETIC FIELD MEASURED — S7

END

FIG.22

FIG.23

START

GENERATE, AT POSITION WHERE GEOMAGNETISM EXISTS,
AN ALTERNATING UNIFORM MAGNETIC FIELDS AND A GRADIENT MAGNETIC
FIELD EACH HAVING PLURALITY OF DIFFERENT FREQUENCY COMPONENTS
WITH KNOWN PHASE RELATIONSHIPS IN SUPERPOSED MANNER    S1

MEASURE MAGNETIC FIELDS BEING GENERATED WITH AZIMUTH
ANGLE SENSOR HAVING THREE-AXIS MAGNETIC SENSORS,
AND ACQUIRE MAGNETIC DATA, WHICH ARE DIGITAL SIGNALS    S2

ACQUIRE
MAGNETIC DATA OF INDIVIDUAL AXES BY DESIRED
AMOUNT?    S3    NO

YES

PERFORM FFT OPERATION ON MAGNETIC
DATA OF INDIVIDUAL AXES    S4

CALCULATE MAGNETIC FIELD VECTORS INDICATING GEOMAGNETISM,
UNIFORM MAGNETIC FIELD AND GRADIENT MAGNETIC FIELD
FROM AMPLITUDES AND PHASES OF INDIVIDUAL FREQUENCY COMPONENTS
OF INDIVIDUAL MAGNETIC FIELDS ON INDIVIDUAL AXES    S5

CALCULATE ATTITUDE INFORMATION OF INFORMATION
TERMINAL FROM MAGNETIC FIELD VECTORS INDICATING
ONE UNIFORM MAGNETIC FIELD AND GEOMAGNETISM MEASURED    S6

CALCULATE POSITION INFORMATION OF INFORMATION
TERMINAL FROM MAGNETIC FIELD VECTOR INDICATING
GRADIENT MAGNETIC FIELD MEASURED    S7

END

# FIG.24

FIG.25

EP 2 110 639 A1

EP 2 110 639 A1

111

MAGNETIC FIELD DETECTING UNIT

AZIMUTH ANGLE SENSOR

MAGNETIC
SENSOR DRIVING     113
UNIT

110a

x-AXIS MAGNETIC
SENSOR

110b                                              112              114              115              116

110   y-AXIS MAGNETIC                    MULTIPLEXER      SIGNAL          A/D            DATA
      SENSOR                             UNIT             AMPLIFYING      CONVERTER      TRANSMITTING
                                                          UNIT                           UNIT

110c

z-AXIS MAGNETIC
SENSOR

111a

ARITHMETIC UNIT
      117              118              119              120

DATA             FOURIER          MAGNETIC         POSITION/                     ATTITUDE INFORMATION/
RECEIVING        TRANSFORM        FIELD VECTOR     ATTITUDE                      POSITION INFORMATION
UNIT             UNIT             CALCULATING UNIT CALCULATING UNIT

ATTITUDE         140
DETECTING
UNIT                                              108

FIG.26

START

GENERATE ALTERNATING GRADIENT MAGNETIC FIELD
HAVING PLURALITY OF DIFFERENT FREQUENCY
COMPONENTS WITH KNOWN PHASE RELATIONSHIPS — S1

MEASURE MAGNETIC FIELDS BEING GENERATED
WITH AZIMUTH ANGLE SENSOR HAVING THREE-AXIS
MAGNETIC SENSORS, AND ACQUIRE MAGNETIC DATA,
WHICH ARE DIGITAL SIGNALS — S2

ACQUIRE
MAGNETIC DATA OF INDIVIDUAL AXES BY
DESIRED AMOUNT? — S3
NO

YES

PERFORM FFT OPERATION ON MAGNETIC
DATA OF INDIVIDUAL AXES — S4

CALCULATE MAGNETIC FIELD VECTORS INDICATING DIRECTION
AND MAGNITUDE OF GRADIENT MAGNETIC FIELD FROM
AMPLITUDES AND PHASES OF TWO FREQUENCY COMPONENTS OF
ALTERNATING GRADIENT MAGNETIC FIELD ON INDIVIDUAL AXES — S5

ACQUIRE ATTITUDE DATA FROM ATTITUDE
DETECTING UNIT, AND CALCULATE ATTITUDE
INFORMATION OF INFORMATION TERMINAL — S6

CALCULATE POSITION INFORMATION OF INFORMATION
TERMINAL FROM MAGNETIC FIELD VECTOR INDICATING
GRADIENT MAGNETIC FIELD MEASURED — S7

END

FIG.27

START

GENERATE, AT POSITION WHERE GEOMAGNETISM EXISTS, GRADIENT MAGNETIC FIELD HAVING PLURALITY OF DIFFERENT FREQUENCY COMPONENTS WITH KNOWN PHASE RELATIONSHIPS — S1

MEASURE MAGNETIC FIELDS BEING GENERATED WITH AZIMUTH ANGLE SENSOR HAVING THREE-AXIS MAGNETIC SENSORS, AND ACQUIRE MAGNETIC DATA, WHICH ARE DIGITAL SIGNALS — S2

ACQUIRE MAGNETIC DATA OF INDIVIDUAL AXES BY DESIRED AMOUNT? — S3 — NO

YES

PERFORM FFT OPERATION ON MAGNETIC DATA OF INDIVIDUAL AXES — S4

CALCULATE MAGNETIC FIELD VECTORS INDICATING GEOMAGNETISM AND GRADIENT MAGNETIC FIELD FROM AMPLITUDES AND PHASES OF INDIVIDUAL FREQUENCY COMPONENTS OF INDIVIDUAL MAGNETIC FIELDS ON INDIVIDUAL AXES — S5

CALCULATE ATTITUDE INFORMATION OF INFORMATION TERMINAL FROM ACCELERATION DATA DETECTED FROM ATTITUDE DETECTING UNIT AND MAGNETIC FIELD VECTOR INDICATING GEOMAGNETISM — S6

CALCULATE POSITION INFORMATION OF INFORMATION TERMINAL FROM MAGNETIC FIELD VECTOR INDICATING GRADIENT MAGNETIC FIELD MEASURED — S7

END

# FIG.28

FIG.29

START

GENERATE ALTERNATING UNIFORM MAGNETIC FIELD AND GRADIENT MAGNETIC FIELD EACH HAVING PLURALITY OF DIFFERENT FREQUENCY COMPONENTS WITH KNOWN PHASE RELATIONSHIPS IN SUPERPOSED MANNER — S1

MEASURE MAGNETIC FIELDS BEING GENERATED WITH AZIMUTH ANGLE SENSOR HAVING MULTIAXIAL MAGNETIC SENSORS, AND ACQUIRE MAGNETIC DATA, WHICH ARE DIGITAL SIGNALS — S2

ACQUIRE MAGNETIC DATA OF INDIVIDUAL AXES BY DESIRED AMOUNT? — S3 — NO

YES

PERFORM FFT OPERATION ON MAGNETIC DATA OF INDIVIDUAL AXES — S4

CALCULATE MAGNETIC FIELD VECTORS INDICATING UNIFORM MAGNETIC FIELD AND GRADIENT MAGNETIC FIELD FROM AMPLITUDES AND PHASES OF INDIVIDUAL FREQUENCY COMPONENTS OF INDIVIDUAL MAGNETIC FIELDS ON INDIVIDUAL AXES — S5

CALCULATE ATTITUDE INFORMATION OF INFORMATION TERMINAL FROM ACCELERATION DATA DETECTED FROM ATTITUDE DETECTING UNIT AND MAGNETIC FIELD VECTOR INDICATING UNIFORM MAGNETIC FIELD — S6

CALCULATE POSITION INFORMATION OF INFORMATION TERMINAL FROM MAGNETIC FIELD VECTOR INDICATING GRADIENT MAGNETIC FIELD MEASURED — S7

END

## FIG.30

WHEN INCIDENT DIRECTION OF MAGNETIC FIELD AND
POSITIVE DIRECTION OF MAGNETIC SENSOR ARE THE SAME

INCIDENT
MAGNETIC FIELD

MAGNETIC
SENSOR

OUTPUT
SIGNAL

# FIG.31A

WHEN INCIDENT DIRECTION OF MAGNETIC FIELD AND
POSITIVE DIRECTION OF MAGNETIC SENSOR ARE OPPOSITE

INCIDENT
MAGNETIC FIELD

MAGNETIC
SENSOR

OUTPUT
SIGNAL

# FIG.31B

## INTERNATIONAL SEARCH REPORT

| | International application No. |
|---|---|
| | PCT/JP2008/052152 |

**A. CLASSIFICATION OF SUBJECT MATTER**
*G01B7/00(2006.01)i, G01B7/30(2006.01)i*

According to International Patent Classification (IPC) or to both national classification and IPC

**B. FIELDS SEARCHED**

Minimum documentation searched (classification system followed by classification symbols)
G01B7/00-G01B7/34

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 62-038301 A (Commissariat a L'Energie Atomique), 19 February, 1987 (19.02.87), Full text; all drawings & EP 215695 A & DE 3669586 C & FR 2586302 A & CA 1314993 A | 1-26 |
| A | JP 9-325003 A (Sekisui Chemical Co., Ltd.), 16 December, 1997 (16.12.97), Full text; all drawings (Family: none) | 1-26 |
| A | JP 11-132704 A (Shimadzu Corp.), 21 May, 1999 (21.05.99), Full text; all drawings (Family: none) | 1-26 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 March, 2008 (19.03.08) | 01 April, 2008 (01.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| | International application No. |
|---|---|
| | PCT/JP2008/052152 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-292111 A  (Japan Science and Technology Corp.), 20 October, 2000 (20.10.00), Full text; all drawings (Family: none) | 1-26 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006214979 A
- JP 2004184341 A
- JP 11736001999 B
- JP 2003065791 A
- JP 82781371996 B
- WO 2004003476 A

**Non-patent literature cited in the description**

- *Biomedical Engineering,* 2003, vol. 41-4, 239, 249